# EUROPEAN PATENT SPECIFICATION

(11) **EP 2 756 112 B1**
(45) Date of publication and mention of the grant of the patent: **05.04.2017**
(21) Application number: 12831557.9
(22) Date of filing: 14.09.2012
(51) Int. Cl.: C25B 9/00, G12B 9/04, C08J 5/00, B29K 23/00, C25B 1/34, B29C 67/24, B29C 39/00, B29L 31/00

(54) **IMPROVED ELECTROLYTIC CELL COVERS COMPRISING A RESIN COMPOSITION POLYMERIZED WITH A GROUP 8 OLEFIN METATHESIS CATALYST**
VERBESSERTE ELEKTROLYSEZELLENABDECKUNGEN MIT EINER HARZZUSAMMENSETZUNG POLYMERISIERT MIT EINEM GRUPPE-8-OLEFINMETATHESEKATALYSATOR
COUVERCLES DE CELLULE ÉLECTROLYTIQUE AMÉLIORÉS COMPRENANT UNE COMPOSITION DE RÉSINE POLYMÉRISÉE AVEC UN CATALYSEUR DE MÉTATHÈSE D'OLÉFINE DU GROUPE 8

(30) Priority: 14.09.2011 US 201161534869 P
(43) Date of publication of application: 23.07.2014
(73) Proprietor: Materia, Inc., Pasadena, CA 91107 (US)
(72) Inventor: GIARDELLO, Michael, A., Pasadena, CA 91106 (US); TRIMMER, Mark, S., Monrovia, CA 91016 (US); CRUCE, Christopher, J., Poway, CA 92064 (US); STEPHEN, Anthony, R., South Pasadena, CA 91030 (US); TONER, Stuart, A. M., Conroe, TX 77304 (US); PAPPANO, Albert, E., Conroe, TX 77304 (US)
(74) Representative: Jacobi, Markus Alexander
(86) International application number: PCT/US2012/055663
(87) International publication number: WO 2013/040519

(56) References cited:
- EP-A2- 0 460 652
- EP-A2- 0 460 652
- WO-A1-00/75146
- WO-A1-97/19965
- WO-A1-98/02471
- WO-A1-2010/021740
- US-A1- 2003 144 437
- US-A1- 2011 112 319
- MICHAL BIENIEK ET AL: "Rational Design and Evaluation of Upgraded Grubbs/Hoveyda Olefin Metathesis Catalysts: Polyfunctional Benzylidene Ethers on the Test Bench", ORGANOMETALLICS, vol. 30, no. 15, 8 August 2011 (2011-08-08), pages 4144-4158, XP055072533, ISSN: 0276-7333, DOI: 10.1021/om200463u
- BIENIEK, MICHAZ ET AL.: 'Rational Design and Evaluation of Upgraded Grubbs/ Hoveyda Olefin Metathesis Catalysts: Polyfunctional Benzylidene Ethers on the Test Bench' ORGANOMETALLICS vol. 30, 11 July 2011, pages 4144 - 4158, XP055072533

## Description

### RELATED APPLICATIONS

### TECHNICAL FIELD

This invention relates in general to articles of manufacture possessing corrosion resistant properties, wherein said articles of manufacture comprise a resin composition polymerized with a Group 8 olefin metathesis catalyst, which contains Ru as the Group 8 transition metal, wherein said resin composition comprises a cyclic olefin. This invention relates in particular to articles of manufacture for use in the chlor-alkali industry, wherein said articles of manufacture comprise a resin composition polymerized with a Group 8 olefin metathesis catalyst, which contains Ru as the Group 8 transition metal, wherein said resin composition comprises a cyclic olefin. This invention relates further to articles of manufacture for covering an electrolytic cell used in the electrolysis of brine, wherein said articles of manufacture comprise a resin composition polymerized with a Group 8 olefin which contains Ru as the Group 8 transition metal, wherein said resin composition comprises a cyclic olefin. More specifically, but without restriction to the particular use which is shown and described herein, this invention is directed to an improved electrolytic cell cover comprising a resin composition polymerized with a Group 8 olefin which contains Ru as the Group 8 transition metal, wherein
said resin composition comprises a cyclic olefin.

### BACKGROUND

Electrolytic cells, electrolytic cell covers, components for electrolytic cells, and other articles of manufacture for use in the chlor-alkali industry are known and are described in U.S. Pat. Nos. 2,816,070; 3,401,109; 3,763,083; 3,847,783; 4,436,609; 4,632,739; 5,087,343 and U.S. Pat. Appl. Nos. 12/194,938 (now U.S. Pat. No. 8,202,405) and 12/249,262 (now U.S. Pat. No. 8,216,444).

The electrolysis of aqueous alkali metal chloride solutions, particularly sodium chloride and potassium chloride solutions, herein after referred to as "brine", became an important industrial process for the commercial production of chlorine, sodium hydroxide (caustic soda), and hydrogen in the late 1800s. The term chlor-alkali refers to the two primary chemicals (chlorine and an alkali) which are simultaneously produced as a result of the electrolysis of brine. Other related products produced by the chlor-alkali industry include sodium hypochlorite, sodium chlorite, sodium chlorate, sodium perchlorate, potassium hydroxide, potassium hypochlorite, potassium chlorite, potassium chlorate, potassium perchlorate, and hydrochloric acid.

The electrolysis of brine is typically carried out according to one of three different processes, namely the membrane process, the diaphragm process, and the mercury cell process. Of these three processes, the main difference between them is found in the method used to prevent mixing of the chlorine, hydrogen, and sodium hydroxide produced during the electrolysis process. Segregation is achieved in a diaphragm cell by a separator or diaphragm and in a membrane cell by an ion-exchange membrane. In mercury cells, the liquid mercury cathode acts as the separator forming an alloy of sodium and mercury (sodium amalgam) which is subsequently reacted with water in a separate reactor to form sodium hydroxide and hydrogen gas.

Bromine production and storage is another process that requires the application and use of corrosion resistant materials. The commercial production of bromine is dependent on and closely related to the chlor-alkali industry. Bromine is produced industrially by treating bromide rich brine, found in sea water, brine wells and lakes with chlorine gas. In this process the bromine anion is oxidized to bromine gas and chlorine gas is reduced to chloride anion. Chlorine gas obtained from the electrolysis of brine may be used to obtain bromine from bromide rich brine sources.

Other processes that require the application and use of corrosion resistant materials is the production of alkali metal hypochlorite and alkali metal chlorate (e.g. sodium and potassium hypochlorite and chlorate). Both alkali metal hypochlorite, commonly known as bleach, and alkali metal chlorate may be generated by the electrolysis of brine.

Both the brine solution and the products produced during the electrolysis process are very corrosive, therefore the materials used to construct electrolytic cells and articles for use with electrolytic cells including without limitation electrolytic cell covers are often determined by their expected or observed lifetimes in service. Originally, many of the articles for use with electrolytic cells, including without limitation electrolytic cell covers, were constructed primarily of wood. A metal lining, usually comprised of lead, was provided on the inside of the wood structure in an effort to prevent chemical reaction between the wood and the corrosive contents. However, over time it was found that the brine solution and the electrolysis products reacted with the metal lining resulting in undesirable corrosion leading to a variety of problems including leakage and structural deformation of the wood structure.

In the 1950s it was discovered that fiber reinforced plastics (FRP), including without limitation fiberglass reinforced polyesters and fiberglass reinforced vinyl esters, could be used as an improved material for the construction of electrolytic cells and articles for use with electrolytic cells. Numerous products and articles for the chlor-alkali industry have been developed using FRP including without limitation, electrolytic cell tanks, electrolytic cell covers, piping, headers, manifolds, and end boxes for mercury cells. While FRP provided many improvements compared to metal lined wood structures several limitations were ultimately discovered.

As chlorine is produced in the electrolysis cell, a thick butter like material coats the surface of the FRP surface in contact with the chlorine gas. This "chlorine butter" coating initially acts to protect the surface of the FRP component from further reaction, but may ultimately act to foul and contaminate the electrolysis cell, the electrolysis products, and other related downstream processes. In addition, continued corrosion of the FRP surface eventually allows for potential exposure of the fiberglass reinforcement to the liquid brine solution increasing the likelihood of "wicking" or permeation of the liquid brine solution into the interior of the FRP article causing damage which often cannot be repaired. Since a number of electrolytic cells are typically operated in series repairs or replacement of electrolytic cell components, including without limitation electrolytic cell covers, typically requires a complete shutdown of several electrolytic cells or even the entire chlor-alkali plant; therefore, frequent repair and replacement of components is both expensive and time consuming. The limitations associated with using articles of manufacture constructed from FRP in chlor-alkali applications are well known and is disclosed in U.S. Pat. Nos. 4,632,739 and 5,087,343.

Another drawback to molding articles from FRP, in particular large parts like electrolytic cell covers and end boxes, is that the FRP articles are relatively difficult to manufacture and require a significant amount of manual labor to hand layup the fiber reinforcement followed by subsequent application of the resin matrix.

One group of materials that have found commercial application and interest in the chlor-alkali industry are polymers derived from the ring-opening metathesis polymerization (ROMP) of cyclic olefin monomers particularly polydicyclopentadiene (pDCPD) derived from ROMP of dicyclopentadiene (DCPD).

During the 1980s efforts by B.F.Goodrich and Hercules Inc. led to the commercialization of two DCPD resin systems. Telene® DCPD resins (B.F.Goodrich) and Metton® DCPD resins (Hercules) are both based on a two component system comprising a molybdenum (B.F.Goodrich) or tungsten (Hercules) pre-catalyst dissolved in DCPD monomer (B-component) and an aluminum alkyl or aluminum alkyl halide co-catalyst dissolved in DCPD monomer (A-component). A polymer is formed in an exothermic reaction when the A-component and B-component are mixed together in a 1:1 volumetric ratio. A typical composition of Telene® DCPD resins (A-component & B-component) is disclosed in U.S. Pat. Nos. 4,426,502, 4,943,621, and 5,087,343. A class of molybdenum-based DCPD resins similar to Telene® resins is also sold under the tradename Pentam®. A typical composition of Metton® DCPD resins (A-component & B-component) is disclosed in U.S. Pat. No. 4,400,340. As used herein, two-component DCPD resins means Telene® or Pentam® or Metton® DCPD resins comprising molybdenum or tungsten pre-catalysts, respectively. A drawback of two-component DCPD resin systems is that they generally cannot be utilized to prepare fiber-reinforced or otherwise filled articles due to their chemically reactive catalyst components. Subsequently, a family of well-defined Group 8, especially Ruthenium, olefin metathesis catalysts has been developed that do not require a co-catalyst component. Such single-component catalysts offer improved tolerance of chemical functional groups than the two-component systems and allow a wider formulation range and, therefore, have found particular utility for use in ROMP resin formulations for use with fillers and reinforcements as disclosed, for example, in U.S. Pat. Nos. 6,040,363; 6,071,459; 6,310,121; and 6,525,125. However, resins incorporating such catalysts carry a premium price and are typically used only where they offer special advantages (e.g., see Kamphaus, J. R. Soc. Interface, 2008, 5, 95-103).

Table 1 summarizes the typical properties of neat-resin pDCPD test plaques molded from commercial Metton® M15XX (tungsten) and Telene® 1650 (molybdenum) two-component resin formulations as well as from a comparable formulation utilizing a single-component ruthenium catalyst (C827, as described more fully below) with a resin composition comprising (i) Ultrene® 99 Polymer Grade DCPD (containing 6% tricyclopentadiene); (ii) 2 phr Ethanox® 4702; and (iii) 4 phr Kraton® G1651H. From the data in Table 1, there is essentially no difference in the physical, mechanical, and thermal properties of the various pDCPD molded articles.

**Table 1**

| **Properties** | **Test Method** | **Units** | **Metton® M15XX** | **Telene® 1650** | **Single-Component Ruthenium Formulation** |
|---|---|---|---|---|---|
| Specific Gravity | ASTM D792 | g/cm³ | 1.034 | 1.03 | 1.04 |
| Linear Mold Shrinkage | NR | in/in | 0.009 | NR | |
| | ASTM D955 | | | | 0.009 - 0.011 |
| Moisture Absorption | ASTM D570 (Water, RT, 24h) | % | 0.12 | NR | |
| | ASTM D570 (Water, 212 °F 7 days) | wt% | | | 0.04 |
| Tensile Strength @ Yield | ASTM D638 | psi | 6,800 | | 7,000 |
| | ISO 527-2 | psi | | 6,237 | |
| Tensile Modulus | ASTM D638 | psi | 273,000 | | 260,000 |
| | ISO 527-2 | psi | | 271,220 | |
| Elongation @ Yield | ASTM D638 | % | 4.7 | NR | 5 |
| Flexural Modulus | ASTM D790 | psi | 273,000 | | 260,000 |
| | ISO 178 | psi | | 268,320 | |
| Flexural Strength | ASTM D790 @ 5% strain | psi | 10,100 | | |
| | ISO 178 | psi | | 9,717 | |
| | ASTM D790 | psi | | | 10,000 |
| Glass Transition Temperature | DMA | °C/°F | >138 / >280 | | |
| | DSC | °C/°F | | 155/311 | |
| | Internal Method | °C/°F | | | 140/284 |
| Heat Deflection Temperature (264 psi) | ASTM D648 | °C/°F | 108 / 226 | 120/248 | >115/239 |
| Coefficient of Thermal Expansion | ASTM E831 (0 to 50 °C) | in/in/°F | 48.8 x 10⁻⁶ | | |
| | ASTM D696 | in/in/°F | | 44 x 10⁻⁶ | 42 x 10⁻⁶ |
| Notched Izod @ 23 °C | ASTM D256 | ft-lb/in | 8.7 | 5.7 | 5.0+/-1.0 |

| | | | | | |
|---|---|---|---|---|---|
| NR means not reported. | | | | | |

In contrast to FRP, pDCPD-based materials generally do not require fiber reinforcement for use in chlor-alkali applications. This is a significant advantage as elimination of fiber reinforcement thereby eliminates the previously noted wicking phenomena commonly associated with FRP electrolytic cell covers and other FRP articles commonly used in the chlor-alkali industry. Electrolytic cell covers molded from unreinforced two-component DCPD resins were first disclosed in the early 1990s and are described in U.S. Pat. No. 5,087,343. Since then numerous articles molded from two-component DCPD resins have been developed and sold commercially including without limitation, electrolytic cell covers, piping, end boxes used in mercury cells, membrane frames for membrane cells, headers, manifolds, dip tubes, interrupter cups, interrupter assemblies, funnels, reagent and product distribution devices, and other articles for use in the chlor-alkali industry. Such articles are typically fabricated from two-component DCPD resins, when they do not require fillers, reinforcements, or functional additives, since such two-component DCPD resins are generally less expensive and offer comparable properties to resins polymerized with single-component Group 8, especially ruthenium, olefin metathesis catalysts.

Electrolytic cell covers and other articles of manufacture molded from two-component DCPD resins offer several other advantages compared to articles molded from FRP, particularly fiberglass reinforced polyester and fiberglass reinforced vinyl ester. One advantage is that two-component DCPD resins are polymerized in a closed mold which defines the shape of the molded article and allows for required structural features to be integrally molded into the body of the molded articles. Molding articles, particularly large electrolytic cell covers, in a closed mold is also less labor intensive than molding articles by hand layup. The ability to mold electrolytic cell covers and other articles in a closed mold also reduces the amount of carbon based emissions, particularly in the form of airborne styrene, associated with molding fiberglass reinforced polyester and fiberglass reinforced vinyl ester electrolytic cell covers and other articles using hand layup.

Unlike FRP electrolytic cell covers and other FRP articles, electrolytic cell covers and other articles molded from two-component DCPD resins also do not produce chlorine butter in the presence of chlorine gas, which as mentioned above may act to foul and contaminate the electrolysis cell, the electrolysis products, and other related downstream processes.

In addition, it was discovered that electrolytic cell covers and other articles used in the chlor-alkali industry molded from two-component DCPD resins provide improved chemical resistance and longer service lifetimes compared to FRP electrolytic cell covers and other articles used in the chlor-alkali industry comprised of FRP, particularly fiberglass reinforced polyester and fiberglass reinforced vinyl ester. Where FRP electrolytic cell covers have a typical service life of 18 months to 2 years before repair or replacement is required, electrolytic cell covers molded from two-component DCPD resins have much longer service life. Electrolytic cell covers and other articles molded from two-component DCPD resins, have provided relatively good service in chlor-alkali applications, where corrosion resistant materials are required particularly when compared to many glass fiber reinforced polyester and vinyl ester articles; however, two-component DCPD resins still possess numerous limitations and several improvements are both needed and desired.

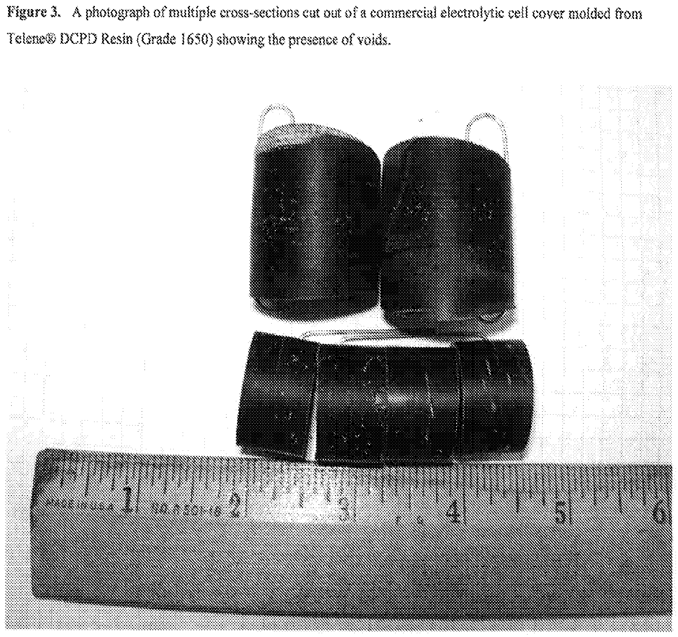

A particular issue of concern for molded electrolytic cell covers and other articles of manufacture for use in the chlor-alkali industry is the presence of voids, which can lead to rejected articles (if detected) or ultimate failure of the article in service (if originally undetected). While it is ideal to obtain a molded electrolytic cell cover or other article that is free of unwanted voids, in practice this level of perfection is often unattainable; therefore a certain amount of unwanted voids in a molded electrolytic cell cover is often acceptable, depending on the number, size, and location of the voids. The examples of U.S. Pat. No. 5,087,343 serve to illustrate the common occurrence of unwanted voids when large components such as electrolytic cell covers are molded. Unfortunately not all of the unwanted voids are located on the surface of the molded article where they can be easily detected and repaired. In many instances, molded articles, including electrolytic cell covers, will contain unwanted voids just below the surface that may initially go unnoticed but that may still lead to leakage once the article is placed in chlor-alkali service. Figure 3 herein shows multiple cross-sections cut out of a commercial electrolytic cell cover molded from Telene® DCPD Resin (Grade 1650), where the presence of visible voids, particularly subsurface voids, is observed. U.S. Pat. No. 5,266,370 demonstrated that the application of suitable pressure could control the presence of unwanted voids in centrifugally cast pDCPD pipe, although it can be difficult to apply sufficiently high pressures to control the formation of voids when molding large articles such as electrolytic cell covers.

It was these types of aforementioned limitations, among others, that led to the realization that an improved material and more efficient method was needed for manufacturing electrolytic cell covers and other articles for use in the chlor-alkali industry and other industries where corrosion resistant materials are required.

### SUMMARY OF INVENTION

It is an object of the present invention to provide improved electrolytic cell covers and other improved molded articles for use in the chlor-alkali industry and other industries where corrosion resistant materials are required.

It is an object of the present invention to provide electrolytic cell covers and other molded articles which have improved corrosion resistance compared to articles molded from (i) FRP, such as fiberglass reinforced polyesters and vinyl esters; and (ii) two-component DCPD resins comprising molybdenum or tungsten pre-catalysts.

It is an object of the present invention to provide improved electrolytic cell covers and other improved molded articles possessing a longer service life in chlor-alkali environments and other corrosive environments compared to articles molded from (i) FRP, such as fiberglass reinforced polyesters and vinyl esters; and (ii) two-component DCPD resins comprising molybdenum or tungsten pre-catalysts.

It is an object of the present invention to provide improved electrolytic cell covers and other improved molded articles for use in the chlor-alkali industry and other industries where corrosion resistant materials are required, where the present invention overcomes the limitations associated with articles molded from FRP, including without limitation fiberglass reinforced polyesters and fiberglass vinyl esters.

It is an object of the present invention to provide improved electrolytic cell covers and other improved molded articles for use in the chlor-alkali industry and other industries where corrosion resistant materials are required, where the present invention overcomes the limitations associated with articles molded from two-component DCPD resins comprising molybdenum or tungsten pre-catalysts.

It is an object of the present invention to provide improved electrolytic cell covers and other improved molded articles for use with the following electrolytic cells including without limitation mercury cells, diaphragm cells, membrane cells, hypochlorite cells, and chlorate cells.

It is an object of the present invention to provide improved electrolytic cell covers and other improved molded articles for use in the chlor-alkali industry and other industries where corrosion resistant materials are required, wherein the improved electrolytic cell covers and other improved molded articles are both easier and more cost efficient to manufacture.

It is an object of the present invention to provide improved electrolytic cell covers and other molded articles for use in the chlor-alkali industry and other industries where corrosion resistant materials are required, wherein the improved electrolytic cell covers and other improved molded articles do not require rework or repair.

It is an object of the present invention to provide improved electrolytic cell covers and other molded articles for use in the chlor-alkali industry and other industries where corrosion resistant materials are required, wherein the improved electrolytic cell covers and other improved molded articles are translucent thereby enabling the visual inspection of the molded article for subsurface defects.

It is an object of the present invention to provide improved electrolytic cell covers and other molded articles for use in the chlor-alkali industry and other industries where corrosion resistant materials are required, wherein the improved electrolytic cell covers and other improved molded articles have less than one visible void per square inch of polymer.

In one embodiment, the present invention is directed to improved articles of manufacture made using the disclosed method, selected from electrolytic cell covers, piping, end boxes used in mercury cells, inlet box used in mercury cells, wash box used in mercury cells, sidewalls of mercury cells, membrane frames for membrane cells, headers, valves, manifolds, dip tubes, interrupter cups, interrupter assemblies, funnels, lids, containers, liners, covers, flanges, support structures, reagent and product distribution devices, pipe fittings including without limitation elbows, couplings, unions, reducers, tees, crosses, caps, plugs, nipples, and barbs for use in the chlor-alkali industry and other industries where corrosion resistant materials are required.

It is an object of the present invention to provide an electrolytic cell cover comprising a flanged base, a plurality of side walls integrally connected to said flanged base, and a top portion integrally connected to said plurality of side walls, wherein said flanged base, said plurality of side walls, and said top portion are molded from a resin composition comprising a cyclic olefin, wherein said resin composition is polymerized with a Group 8 olefin metathesis catalyst.

It is an object of the present invention to provide a method for molding an electrolytic cell cover comprising, providing a resin composition comprising a cyclic olefin, providing a Group 8 olefin metathesis catalyst, which contains Ru as the Group 8 transition metal, mixing said resin composition and said Group 8 olefin metathesis catalyst to form a
polymerizable composition, adding said polymerizable composition to a mold, and allowing said polymerizable composition to cure in said mold.

It is an object of the present invention to provide a method for molding an article having corrosion resistant properties, said method comprising, providing a resin composition comprising a cyclic olefin, providing a Group 8 olefin metathesis catalyst, mixing said resin composition and said Group 8 olefin metathesis catalyst which contains Ru as the Group 8 transition metal, to form a polymerizable composition, adding said polymerizable composition to
a mold, and allowing said polymerizable composition to cure in said mold.

Additionally, it is an object of the present invention to provide an electrolytic cell cover comprising a base, a plurality of side walls integrally connected to the base, and a top portion integrally connected to the plurality of side walls, wherein the base, said plurality of side walls, and the top portion are molded from a resin composition comprising a cyclic olefin, wherein the resin composition is polymerized with a Group 8 olefin metathesis catalyst, which contains Ru as the Group 8 transition metal.

Additionally, it is an object of the present invention to provide an electrolytic cell cover comprising a base, a plurality of sides integrally connected to the base, and a top portion integrally connected to the plurality of sides, wherein the base, the plurality of sides, and the top portion are made from a resin composition comprising at least one cyclic olefin and a Group 8 olefin metathesis catalyst, which contains Ru as the Group 8 transition metal.

Additionally, it is an object of the present invention to provide a method of making an electrolytic cell cover comprising, providing a resin composition comprising a cyclic olefin, providing a Group 8 olefin metathesis catalyst, combining the resin composition and the Group 8 olefin metathesis catalyst, which contains Ru as the Group 8 transition metal, to form a polymerizable composition, and subjecting the polymerizable composition to conditions effective to polymerize said composition.

Additionally, it is an object of the present invention to provide a method of making an article having corrosion resistant properties, the method comprising, providing a resin composition comprising a cyclic olefin, providing a Group 8 olefin metathesis catalyst, which contains Ru as the Group 8 transition metal, combining the resin composition and the
Group 8 olefin metathesis catalyst to form a polymerizable composition, and subjecting the polymerizable composition to conditions effective to polymerize said composition.

Additionally, it is an object of the present invention to provide a method of making an electrolytic cell cover comprising, providing a resin composition comprising a cyclic olefin, providing a Group 8 olefin metathesis which contains Ru as the Group 8 transition metal, combining the resin composition and the Group 8 olefin metathesis
catalyst to form a ROMP composition, and subjecting the ROMP composition to conditions effective to polymerize said composition,

Additionally, it is an object of the present invention to provide a method of making an electrolytic cell cover comprising, combining at least one Group 8 olefin metathesis catalyst , which contains Ru as the Group 8 transition metal, and a resin composition comprising at least one cyclic olefin to form a ROMP composition, and subjecting the ROMP composition to conditions effective to polymerize said composition.

Additionally, it is an object of the present invention to provide a method of making an article having corrosion resistant properties comprising, providing a resin composition comprising a cyclic olefin, providing a Group 8 olefin metathesis catalyst, which contains Ru as the Group 8 transition metal, combining the resin composition and the Group 8 olefin metathesis catalyst to form a ROMP composition, and subjecting the ROMP composition to conditions effective to polymerize said composition.

Additionally, it is an object of the present invention to provide a method of making a corrosion resistant article comprising, providing a resin composition comprising a cyclic olefin, providing a Group 8 olefin metathesis catalyst, which contains Ru as the Group 8 transition metal, combining the resin composition and the Group 8 olefin metathesis catalyst to form a ROMP composition, and subjecting the ROMP composition to conditions effective to polymerize said composition.

Additionally, it is an object of the present invention to provide a method of making a corrosion resistant article comprising, combining at least one Group 8 olefin metathesis catalyst, which contains Ru as the Group 8 transition metal, and a resin composition comprising at least one cyclic olefin to form a ROMP composition, and subjecting the ROMP composition to conditions effective to polymerize said composition.

Additionally, it is an object of the present invention to provide a corrosion resistant article comprising a resin composition comprising at least one cyclic olefin and at least one Group 8 olefin metathesis catalyst, which contains Ru as the Group 8 transition metal, wherein the resin composition is subjected to conditions effective to polymerize said composition.

Additionally, it is an object of the present invention to provide an article having corrosion resistant properties comprising, a resin composition comprising at least one cyclic olefin and at least one Group 8 olefin metathesis catalyst, which contains Ru as the Group 8 transition metal, wherein the resin composition is subjected to conditions effective to polymerize said composition.

Additionally, it is an object of the present invention to provide an electrolytic cell cover comprising a resin composition comprising at least one cyclic olefin and at least one Group 8 olefin metathesis catalyst, which contains Ru as the Group 8 transition metal, wherein the resin composition is subjected to conditions effective to polymerize said composition.

### BRIEF DESCRIPTION OF THE DRAWINGS

Various other objects, features and attendant advantages of the present invention will be more fully appreciated as the same becomes better understood when considered in conjunction with the accompanying drawings, in which like reference characters designate the same or similar parts throughout the several views, and wherein:
FIG. 1 is a perspective view of an electrolytic cell cover of the present invention;
FIG. 2 is a perspective view of another electrolytic cell cover of the present invention having preferred elements integrated therein.
FIG. 3 is a photograph of multiple cross-sections cut out of a commercial electrolytic cell cover molded from Telene® DCPD Resin (Grade 1650) showing the presence of voids.
FIG. 4 is a photograph of multiple cross-sections cut out of an electrolytic cell cover molded from the resin composition and ruthenium olefin metathesis catalyst in Examples 1-3 herein, showing the absence of voids.

### DETAILED DESCRIPTION OF THE DISCLOSURE

### Terminology and Definitions

Unless otherwise indicated, the invention is not limited to specific reactants, substituents, catalysts, resin compositions, reaction conditions, or the like, as such may vary. It is also to be understood that the terminology used herein is for the purpose of describing particular embodiments only and is not to be interpreted as being limiting.

As used in the specification and the appended claims, the singular forms "a," "an," and "the" include plural referents unless the context clearly dictates otherwise. Thus, for example, reference to "an α-olefin" includes a single α-olefin as well as a combination or mixture of two or more α-olefins, reference to "a substituent" encompasses a single substituent as well as two or more substituents, and the like.

As used in the specification and the appended claims, the terms "for example," "for instance," "such as," or "including" are meant to introduce examples that further clarify more general subject matter. Unless otherwise specified, these examples are provided only as an aid for understanding the invention, and are not meant to be limiting in any fashion.

As used in the specification and the appended claims, the terms "electrolytic cell head," "electrolytic cell cover," and "electrolytic cell top" have the same meaning and are used interchangeably herein.

As used in the specification and the appended claims, the terms "electrolyzer," "electrolysis cell," and "electrolytic cell" have the same meaning and are used interchangeably herein.

As used in the specification and the appended claims, the terms "reactive formulation" and "polymerizable composition" have the same meaning and are used interchangeably herein.

In this specification and in the claims that follow, reference will be made to a number of terms, which shall be defined to have the following meanings:

The term "alkyl" as used herein refers to a linear, branched, or cyclic saturated hydrocarbon group typically although not necessarily containing 1 to about 24 carbon atoms, preferably 1 to about 12 carbon atoms, such as methyl, ethyl, *n*-propyl, isopropyl, *n*-butyl, isobutyl, *t*-butyl, octyl, decyl, and the like, as well as cycloalkyl groups such as cyclopentyl, cyclohexyl, and the like. Generally, although again not necessarily, alkyl groups herein contain 1 to about 12 carbon atoms. The term "lower alkyl" refers to an alkyl group of 1 to 6 carbon atoms, and the specific term "cycloalkyl" refers to a cyclic alkyl group, typically having 4 to 8, preferably 5 to 7, carbon atoms. The term "substituted alkyl" refers to alkyl substituted with one or more substituent groups, and the terms "heteroatom-containing alkyl" and "heteroalkyl" refer to alkyl in which at least one carbon atom is replaced with a heteroatom. If not otherwise indicated, the terms "alkyl" and "lower alkyl" include linear, branched, cyclic, unsubstituted, substituted, and/or heteroatom-containing alkyl and lower alkyl, respectively.

The term "alkylene" as used herein refers to a difunctional linear, branched, or cyclic alkyl group, where "alkyl" is as defined above.

The term "alkenyl" as used herein refers to a linear, branched, or cyclic hydrocarbon group of 2 to about 24 carbon atoms containing at least one double bond, such as ethenyl, *n*-propenyl, isopropenyl, *n*-butenyl, isobutenyl, octenyl, decenyl, tetradecenyl, hexadecenyl, eicosenyl, tetracosenyl, and the like. Preferred alkenyl groups herein contain 2 to about 12 carbon atoms. The term "lower alkenyl" refers to an alkenyl group of 2 to 6 carbon atoms, and the specific term "cycloalkenyl" refers to a cyclic alkenyl group, preferably having 5 to 8 carbon atoms. The term "substituted alkenyl" refers to alkenyl substituted with one or more substituent groups, and the terms "heteroatom-containing alkenyl" and "heteroalkenyl" refer to alkenyl in which at least one carbon atom is replaced with a heteroatom. If not otherwise indicated, the terms "alkenyl" and "lower alkenyl" include linear, branched, cyclic, unsubstituted, substituted, and/or heteroatom-containing alkenyl and lower alkenyl, respectively.

The term "alkenylene" as used herein refers to a difunctional linear, branched, or cyclic alkenyl group, where "alkenyl" is as defined above.

The term "alkynyl" as used herein refers to a linear or branched hydrocarbon group of 2 to about 24 carbon atoms containing at least one triple bond, such as ethynyl, *n*-propynyl, and the like. Preferred alkynyl groups herein contain 2 to about 12 carbon atoms. The term "lower alkynyl" refers to an alkynyl group of 2 to 6 carbon atoms. The term "substituted alkynyl" refers to alkynyl substituted with one or more substituent groups, and the terms "heteroatom-containing alkynyl" and "heteroalkynyl" refer to alkynyl in which at least one carbon atom is replaced with a heteroatom. If not otherwise indicated, the terms "alkynyl" and "lower alkynyl" include linear, branched, unsubstituted, substituted, and/or heteroatom-containing alkynyl and lower alkynyl, respectively.

The term "alkoxy" as used herein refers to an alkyl group bound through a single, terminal ether linkage; that is, an "alkoxy" group may be represented as -O-alkyl where alkyl is as defined above. A "lower alkoxy" group refers to an alkoxy group containing 1 to 6 carbon atoms. Analogously, "alkenyloxy" and "lower alkenyloxy" respectively refer to an alkenyl and lower alkenyl group bound through a single, terminal ether linkage, and "alkynyloxy" and "lower alkynyloxy" respectively refer to an alkynyl and lower alkynyl group bound through a single, terminal ether linkage.

The term "aryl" as used herein, and unless otherwise specified, refers to an aromatic substituent containing a single aromatic ring or multiple aromatic rings that are fused together, directly linked, or indirectly linked (such that the different aromatic rings are bound to a common group such as a methylene or ethylene moiety). Preferred aryl groups contain 5 to 24 carbon atoms, and particularly preferred aryl groups contain 5 to 14 carbon atoms. Exemplary aryl groups contain one aromatic ring or two fused or linked aromatic rings, e.g., phenyl, naphthyl, biphenyl, diphenylether, diphenylamine, benzophenone, and the like. "Substituted aryl" refers to an aryl moiety substituted with one or more substituent groups, and the terms "heteroatom-containing aryl" and "heteroaryl" refer to aryl substituents in which at least one carbon atom is replaced with a heteroatom, as will be described in further detail *infra.*

The term "aryloxy" as used herein refers to an aryl group bound through a single, terminal ether linkage, wherein "aryl" is as defined above. An "aryloxy" group may be represented as -O-aryl where aryl is as defined above. Preferred aryloxy groups contain 5 to 24 carbon atoms, and particularly preferred aryloxy groups contain 5 to 14 carbon atoms. Examples of aryloxy groups include, without limitation, phenoxy, o-halo-phenoxy, m-halo-phenoxy, p-halo-phenoxy, o-methoxy-phenoxy, m-methoxy-phenoxy, p-methoxy-phenoxy, 2,4-dimethoxy-phenoxy, 3,4,5-trimethoxy-phenoxy, and the like.

The term "alkaryl" refers to an aryl group with an alkyl substituent, and the term "aralkyl" refers to an alkyl group with an aryl substituent, wherein "aryl" and "alkyl" are as defined above. Preferred alkaryl and aralkyl groups contain 6 to 24 carbon atoms, and particularly preferred alkaryl and aralkyl groups contain 6 to 16 carbon atoms. Alkaryl groups include, without limitation, p-methylphenyl, 2,4-dimethylphenyl, p-cyclohexylphenyl, 2,7-dimethylnaphthyl, 7-cyclooctylnaphthyl, 3-ethyl-cyclopenta-1,4-diene, and the like. Examples of aralkyl groups include, without limitation, benzyl, 2-phenyl-ethyl, 3-phenyl-propyl, 4-phenyl-butyl, 5-phenyl-pentyl, 4-phenylcyclohexyl, 4-benzylcyclohexyl, 4-phenylcyclohexylmethyl, 4-benzylcyclohexylmethyl, and the like. The terms "alkaryloxy" and "aralkyloxy" refer to substituents of the formula -OR wherein R is alkaryl or aralkyl, respectively, as just defined.

The term "acyl" refers to substituents having the formula -(CO)-alkyl, -(CO)-aryl, -(CO)-aralkyl, -(CO)-alkaryl, -(CO)-alkenyl, or -(CO)-alkynyl, and the term "acyloxy" refers to substituents having the formula -O(CO)-alkyl, -O(CO)-aryl, -O(CO)-aralkyl, -O(CO)-alkaryl, -O(CO)-alkenyl, - O(CO)-alkynyl wherein "alkyl," "aryl," "aralkyl", alkaryl, alkenyl, and alkynyl are as defined above.

The terms "cyclic" and "ring" refer to alicyclic or aromatic groups that may or may not be substituted and/or heteroatom containing, and that may be monocyclic, bicyclic, or polycyclic. The term "alicyclic" is used in the conventional sense to refer to an aliphatic cyclic moiety, as opposed to an aromatic cyclic moiety, and may be monocyclic, bicyclic, or polycyclic.

The terms "halo" and "halogen" are used in the conventional sense to refer to a chloro, bromo, fluoro, or iodo substituent.

"Hydrocarbyl" refers to univalent hydrocarbyl radicals containing 1 to about 30 carbon atoms, preferably 1 to about 24 carbon atoms, most preferably 1 to about 12 carbon atoms, including linear, branched, cyclic, saturated, and unsaturated species, such as alkyl groups, alkenyl groups, alkynyl groups, aryl groups, and the like. The term "lower hydrocarbyl" intends a hydrocarbyl group of 1 to 6 carbon atoms, preferably 1 to 4 carbon atoms, and the term "hydrocarbylene" refers to a divalent hydrocarbyl moiety containing 1 to about 30 carbon atoms, preferably 1 to about 24 carbon atoms, most preferably 1 to about 12 carbon atoms, including linear, branched, cyclic, saturated, and unsaturated species. The term "lower hydrocarbylene" refers to a hydrocarbylene group of 1 to 6 carbon atoms. "Substituted hydrocarbyl" refers to hydrocarbyl substituted with one or more substituent groups, and the terms "heteroatom-containing hydrocarbyl" and "heterohydrocarbyl" refer to hydrocarbyl in which at least one carbon atom is replaced with a heteroatom. Similarly, "substituted hydrocarbylene" refers to hydrocarbylene substituted with one or more substituent groups, and the terms "heteroatom-containing hydrocarbylene" and "heterohydrocarbylene" refer to hydrocarbylene in which at least one carbon atom is replaced with a heteroatom. Unless otherwise indicated, the term "hydrocarbyl" and "hydrocarbylene" are to be interpreted as including substituted and/or heteroatom-containing hydrocarbyl and heteratom-containing hydrocarbylene moieties, respectively.

The term "heteroatom-containing" as in a "heteroatom-containing hydrocarbyl group" refers to a hydrocarbon molecule or a hydrocarbyl molecular fragment in which one or more carbon atoms is replaced with an atom other than carbon, e.g., nitrogen, oxygen, sulfur, phosphorus, or silicon, typically nitrogen, oxygen, or sulfur. Similarly, the term "heteroalkyl" refers to an alkyl substituent that is heteroatom-containing, the term "heterocyclic" refers to a cyclic substituent that is heteroatom-containing, the terms "heteroaryl" and "heteroaromatic" respectively refer to "aryl" and "aromatic" substituents that are heteroatom-containing, and the like. It should be noted that a "heterocyclic" group or compound may or may not be aromatic, and further that "heterocycles" may be monocyclic, bicyclic, or polycyclic as described above with respect to the term "aryl." Examples of heteroalkyl groups include without limitation alkoxyaryl, alkylsulfanyl-substituted alkyl, N-alkylated amino alkyl, and the like. Examples of heteroaryl substituents include without limitation pyrrolyl, pyrrolidinyl, pyridinyl, quinolinyl, indolyl, pyrimidinyl, imidazolyl, 1,2,4-triazolyl, tetrazolyl, etc., and examples of heteroatom-containing alicyclic groups include without limitation pyrrolidino, morpholino, piperazino, piperidino, etc.

By "substituted" as in "substituted hydrocarbyl," "substituted alkyl," "substituted aryl," and the like, as alluded to in some of the aforementioned definitions, is meant that in the hydrocarbyl, alkyl, aryl, or other moiety, at least one hydrogen atom bound to a carbon (or other) atom is replaced with one or more non-hydrogen substituents. Examples of such substituents include, without limitation: functional groups referred to herein as "Fn," such as halo, hydroxyl, sulfhydryl, C₁-C₂₄ alkoxy, C₂-C₂₄ alkenyloxy, C₂-C₂₄ alkynyloxy, C₅-C₂₄ aryloxy, C₆-C₂₄ aralkyloxy, C₆-C₂₄ alkaryloxy, acyl (including C₂-C₂₄ alkylcarbonyl (-CO-alkyl) and C₆-C₂₄ arylcarbonyl (-CO-aryl)), acyloxy (-O-acyl, including C₂-C₂₄ alkylcarbonyloxy (-O-CO-alkyl) and C₆-C₂₄ arylcarbonyloxy (-O-CO-aryl)), C₂-C₂₄ alkoxycarbonyl (-(CO)-O-alkyl), C₆-C₂₄ aryloxycarbonyl (-(CO)-O-aryl), halocarbonyl (-CO)-X where X is halo), C₂-C₂₄ alkylcarbonato (-O-(CO)-O-alkyl), C₆-C₂₄ arylcarbonato (-O-(CO)-O-aryl), carboxy (-COOH), carboxylato (-COO⁻), carbamoyl (-(CO)-NH₂), mono-(C₁-C₂₄ alkyl)-substituted carbamoyl (-(CO)-NH(C₁-C₂₄ alkyl)), di-(C₁-C₂₄ alkyl)-substituted carbamoyl (-(CO)-N(C₁-C₂₄ alkyl)₂), mono-(C₁-C₂₄ haloalkyl)-substituted carbamoyl (-(CO)-NH(C₁-C₂₄ haloalkyl)), di-(C₁-C₂₄ haloalkyl)-substituted carbamoyl (-(CO)-N(C₁-C₂₄ haloalkyl)₂), mono-(C₅-C₂₄ aryl)-substituted carbamoyl (-(CO)-NH-aryl), di-(C₅-C₂₄ aryl)-substituted carbamoyl (-(CO)-N(C₅-C₂₄ aryl)₂), di-N-(C₁-C₂₄ alkyl),N-(C₅-C₂₄ aryl)-substituted carbamoyl (-(CO)-N(C₁-C₂₄ alkyl)(C₅-C₂₄ aryl), thiocarbamoyl (-(CS)-NH₂), mono-(C₁-C₂₄ alkyl)-substituted thiocarbamoyl (-(CS)-NH(C₁-C₂₄ alkyl)), di-(C₁-C₂₄ alkyl)-substituted thiocarbamoyl (-(CS)-N(C₁-C₂₄ alkyl)₂), mono-(C₅-C₂₄ aryl)-substituted thiocarbamoyl (-(CS)-NH-aryl), di-(C₅-C₂₄ aryl)-substituted thiocarbamoyl (-(CS)-N(C₅-C₂₄ aryl)₂), di-N-(C₁-C₂₄ alkyl), N-(C₅-C₂₄ aryl)-substituted thiocarbamoyl (-(CS)-N(C₁-C₂₄ alkyl)(C₅-C₂₄ aryl), carbamido (-NH-(CO)-NH₂), cyano (-C≡N), cyanato (-O-C≡N), thiocyanato (-S-C≡N), isocyanate (-N=C=O), thioisocyanate (-N=C=S), formyl (-(CO)-H), thioformyl (-(CS)-H), amino (-NH₂), mono-(C₁-C₂₄ alkyl)-substituted amino (-NH(C₁-C₂₄ alkyl), di-(C₁-C₂₄ alkyl)-substituted amino (-N(C₁-C₂₄ alkyl)₂), mono-(C₅-C₂₄ aryl)-substituted amino (-NH(C₅-C₂₄ aryl), di-(C₅-C₂₄ aryl)-substituted amino (-N(C₅-C₂₄ aryl)₂), C₂-C₂₄ alkylamido (-NH-(CO)-alkyl), C₆-C₂₄ arylamido (-NH-(CO)-aryl), imino (-CR=NH where R includes without limitation hydrogen, C₁-C₂₄ alkyl, C₅-C₂₄ aryl, C₆-C₂₄ alkaryl, C₆-C₂₄ aralkyl, etc.), C₂-C₂₀ alkylimino (-CR=N(alkyl), where R includes without limitation hydrogen, C₁-C₂₄ alkyl, C₅-C₂₄ aryl, C₆-C₂₄ alkaryl, C₆-C₂₄ aralkyl, etc.), arylimino (-CR=N(aryl), where R includes without limitation hydrogen, C₁-C₂₀ alkyl, C₅-C₂₄ aryl, C₆-C₂₄ alkaryl, C₆-C₂₄ aralkyl, etc.), nitro (-NO₂), nitroso (-NO), sulfo (-SO₂-OH), sulfonato (-SO₂-O⁻), C₁-C₂₄ alkylsulfanyl (-S-alkyl; also termed "alkylthio"), C₅-C₂₄ arylsulfanyl (-S-aryl; also termed "arylthio"), C₁-C₂₄ alkylsulfinyl (-(SO)-alkyl), C₅-C₂₄ arylsulfinyl (-(SO)-aryl), C₁-C₂₄ alkylsulfonyl (-SO₂-alkyl), C₁-C₂₄ monoalkylaminosulfonyl (-SO₂-N(H) alkyl), C₁-C₂₄ dialkylaminosulfonyl (-SO₂-N(alkyl)₂), C₅-C₂₄ arylsulfonyl (-SO₂-aryl), boryl (-BH₂), borono (-B(OH)₂), boronato (-B(OR)₂ where R includes without limitation alkyl or other hydrocarbyl), phosphono (-P(O)(OH)₂), phosphonato (-P(O)(O⁻)₂), phosphinato (-P(O)(O⁻)), phospho (-PO₂), and phosphino (-PH₂); and the hydrocarbyl moieties C₁-C₂₄ alkyl (preferably C₁-C₁₂ alkyl, more preferably C₁-C₆ alkyl), C₂-C₂₄ alkenyl (preferably C₂-C₁₂ alkenyl, more preferably C₂-C₆ alkenyl), C₂-C₂₄ alkynyl (preferably C₂-C₁₂ alkynyl, more preferably C₂-C₆ alkynyl), C₅-C₂₄ aryl (preferably C₅-C₁₄ aryl), C₆-C₂₄ alkaryl (preferably C₆-C₁₆ alkaryl), and C₆-C₂₄ aralkyl (preferably C₆-C₁₆ aralkyl).

By "functionalized" as in "functionalized hydrocarbyl," "functionalized alkyl," "functionalized olefin," "functionalized cyclic olefin," and the like, is meant that in the hydrocarbyl, alkyl, olefin, cyclic olefin, or other moiety, at least one hydrogen atom bound to a carbon (or other) atom is replaced with one or more functional groups such as those described hereinabove. The term "functional group" is meant to include any functional species that is suitable for the uses described herein. In particular, as used herein, a functional group would necessarily possess the ability to react with or bond to corresponding functional groups on a substrate surface.

In addition, the aforementioned functional groups may, if a particular group permits, be further substituted with one or more additional functional groups or with one or more hydrocarbyl moieties such as those specifically mentioned above. Analogously, the above-mentioned hydrocarbyl moieties may be further substituted with one or more functional groups or additional hydrocarbyl moieties as noted above.

"Optional" or "optionally" means that the subsequently described circumstance may or may not occur, so that the description includes instances where the circumstance occurs and instances where it does not. For example, the phrase "optionally substituted" means that a non-hydrogen substituent may or may not be present on a given atom, and, thus, the description includes structures wherein a non-hydrogen substituent is present and structures wherein a non-hydrogen substituent is not present.

### Electrolytic Cell Covers

Although, the physical and mechanical properties of ROMP polymers prepared from various catalyst systems are generally similar (e.g., see Table 1 above), we have discovered that articles comprising a cyclic olefin resin composition (e.g., DCPD) polymerized with a ruthenium olefin metathesis catalyst of the present invention surprisingly had improved corrosion resistant properties compared to articles comprising similar cyclic olefin compositions polymerized with a two-component catalyst system such as a molybdenum or tungsten system (i.e. Telene® DCPD Resin, Grade 1650). In particular, after exposure to corrosive brine electrolysis (chlor-alkali) conditions, samples comprising a single-component ruthenium catalyzed resin composition possessed a lower concentration of chlorine near the exposed surface, a decreased depth of discoloration, and a better overall surface appearance compared to samples comprising a two-component molybdenum catalyzed resin composition. These results are more fully documented in the Examples below.

The present invention is directed to an improved electrolytic cell cover comprising a resin composition and a Group 8 olefin metathesis which contains Ru as the Group 8 transition metal, wherein said resin composition comprises a cyclic olefin.

The electrolytic cell covers of the present invention may be molded in a closed mold or open mold. The electrolytic cell covers of the present invention may be molded as a one piece integrated structure in which all of the essential features of the electrolytic cell cover are integrally connected to the one piece structure. Essential features may include without limitation lifting tabs, orifice for sight gauge, sight gauge support, tubing supports, brine solution inlets, conduit connectors, and clamp stabilizers. The electrolytic cell covers of the present invention may also be molded as a plurality of structures which are later combined to form a larger structure.

Electrolytic cell covers of the present invention typically weigh more than 100 lbs., and can weigh more than 800 lbs. Electrolytic cell covers of the present invention have portions, sections, or wall thickness preferably in excess of 1/16 inch and most preferably 3/8 to 1 inch. Portions, sections, or wall thickness of the electrolytic cell cover may be as thick as 2 inches or more.

Electrolytic cell covers of the present invention comprise a resin composition and a Group 8 olefin metathesis catalyst, wherein said resin composition comprises a cyclic olefin. The resin composition is of sufficiently low viscosity so that large molds and molds with complex geometries necessary for the molding of electrolytic cell covers of the present invention can be quickly and easily filled.

The polymerization parameters including gel time, cure time (peak exotherm time), and cure temperature (peak exotherm temperature) of the reactive formulation of the present invention can be controlled through a variety of ways including without limitation (i) indigenous (meaning native or established by the components); or (ii) exogenous (meaning external additives or other reactives that can be added to the resin composition). According to the present invention, one method of indigenous control involves controlling the polymerization parameters through modification of the character of the ligands attached to the Group 8 transition metal of the Group 8 olefin metathesis catalyst. Correct ligand selection is important to the molding with indigenous reactivity control agents. For example, RuCl₂(PPh₃)₂(=CHPh) reacts more slowly than the RuCl₂(PCy₃)₂(=CHPh), while RuCl₂(PPh₃)sIMes(=CHPh) reacts more rapidly than the RuCl₂(PCy₃)sIMes(=CHPh). The alkylidene substituents may also be changed to control the gel and cure times of the Group 8 olefin metathesis catalyst. The halogen substituents may also be changed to control the gel and cure times of the Group 8 olefin metathesis catalyst.

Likewise, the desired polymerization parameters, including without limitation gel time, cure time (peak exotherm time), and cure temperature (peak exotherm temperature) of the present invention can be achieved through exogenous control. One method of exogenous control involves the proper selection of an exogenous rate moderating ligand. The use of Lewis base rate moderators in this system is optional, i.e., external or "exogeneous" modification, resulting in further gel and cure time control. The use of exogeneous rate moderators was previously disclosed in U.S. Pat. No. 5,939,504 the contents of which are incorporated herein by reference. Suitable exogeneous rate moderators include, for example, water, tetrahydrofuran (THF), 2- methyltetrahydrofuran (2-Me-THF), diethyl ether ((C₂H₅)₂O), methyl-*tert*-butyl ether (CH₃OC(CH₃)₃), dimethoxyethane (CH₃OCH₂CH₂OCH₃), diglyme (CH₃OCH₂OCH₂OCH₃), trimethylphosphine (PMe₃), triethylphosphine (PEt₃), tributylphosphine (PBu₃), tri(ortho-tolyl)phosphine (P-o-tolyl₃), tri-tert-butylphosphine (P-tert-Bu₃), tricyclopentylphosphine (PCyclopentyl₃), tricyclohexylphosphine (PCy₃), triisopropylphosphine (P-i-Pr₃), trioctylphosphine (POct₃), triisobutylphosphine (P-i-Bu₃), triphenylphosphine (PPh₃), tri(pentafluorophenyl)phosphine (P(C₆F₅)₃), methyldiphenylphosphine (PMePh₂), dimethylphenylphosphine (PMe₂Ph), diethylphenylphosphine (PEt₂Ph), trimethylphosphite (P(OMe)₃), triethylphosphite,(P(OEt)₃), triisopropylphosphite (P(O-i-Pr)₃), ethyl diphenylphosphinite (P(OEt)Ph₂), tributylphosphite (P(OBu)₃), triphenylphosphite (P(OPh)₃, diethylphenylphosphonite (P(OEt)₂Ph), and tribenzylphosphine (P(CH₂Ph)₃), 2-cyclohexenone, and triphenylphosphine oxide. Further, the exogeneous control over reactivity can be achieved by attaching the Lewis base species to a component of the resin composition, including without limitation a cyclic olefin. In this way, the moderator can be polymerized into the polymeric structure giving the system important functionality. Examples of suitable functional groups include without limitation ethers, trialkoxysilanes, esters, carboxylic acids, and alcohols. Specific examples include without limitation triethoxysilylnorbornene, norbornene methanol, and butoxynorbornene. In addition, resin composition temperature and/or mold temperature can be used to modify and control the polymerization parameters of the reactive formulation or polymerizable composition of the present invention. A reactive formulation or polymerizable composition is formed when the resin composition and Group 8 olefin metathesis catalyst of the present invention are mixed together. This mixing of the resin composition and Group 8 olefin metathesis catalyst of the present invention can be performed by the following means including without limitation (i) manually; (ii) through the use of a machine or other equipment; or (iii) any combination thereof. This mixing of the resin composition and Group 8 olefin metathesis catalyst of the present invention may occur including without limitation (i) before the resin composition and Group 8 olefin metathesis catalyst are added to the mold; (ii) after the resin composition and Group 8 olefin metathesis catalyst are added to the mold; or (iii) any combination thereof. According to the present invention, gel times in excess of 30 minutes, and peak exotherm times in excess of 60 minutes are easily attainable.

Resin compositions and Group 8 olefin metathesis catalysts, which contains Ru as the Group 8 transition metal, of the present invention do not incorporate nor contain aluminum alkyl or aluminum alkyl halide compounds; therefore degassing of the resin composition and Group 8 olefin metathesis catalyst prior to molding is optional. In addition, molding electrolytic cell covers of the present invention is generally accomplished with no back pressure and no internal mold pressure. Moreover, purging the mold cavity with inert gas (nitrogen or argon) prior to molding is optional.

Resin compositions and Group 8 olefin metathesis catalysts of the present invention are stable and insensitive to air (oxygen), moisture (water), and other impurities including without limitation acetylenic compounds, and compounds containing polar functional groups. This stability and lack of sensitivity to impurities enables a wide variety of processing methods for use with the present invention. Electrolytic cell covers of the present invention may be molded using a variety of processing methods including but not limited to Reaction Injection Molding (RIM), Resin Transfer Molding (RTM), Reinforced Reaction Injection Molding (RRIM), Structural Reaction Injection Molding (SRIM), Vacuum Assisted Resin Transfer Molding (VARTM), rotational molding, cell casting, dip casting, continuous casting, embedding, potting, encapsulation, film casting or solvent casting, gated casting, mold casting, multiple pour method, mechanical foaming, chemical foaming, physical foaming, syntactic foams, compression molding or matched die molding, container mixing, infusion or resin infusion, laminate, , transfer molding, spray up, filament winding, fiber placement, pultrusion, extrusion, slush casting, centrifugal casting, hand lay-up, Seeman's Composite Resin Infusion Molding Process (SCRIMP), coating or painting, blow molding, in-mold coating, in-mold painting or injection, vacuum forming, and casting. For processing methods requiring the use of a RIM or impingement style mixhead, including without limitation RIM, SRIM, and RRIM, electrolytic cell covers of the present invention may be molded using a single mixhead or a plurality of mixheads as well as a plurality of material injection streams (e.g. two resin streams and one catalyst stream).

The present invention allows for the molding of electrolytic cell covers comprising a reinforcing material as an option.

The present invention allows for the molding of electrolytic cell covers of any configuration, weight, size, and geometric shape. Geometric shapes include without limitation round, circular, square, rectangular, oval, triangular, trapezoidal, and polygonal. Moreover, electrolytic cell covers of the present invention can be molded for use with any electrolytic cell including without limitation diaphragm cells, mercury cells, membrane cells, hypochlorite cells, chlorate cells, and other electrolytic cells used in brine electrolysis.

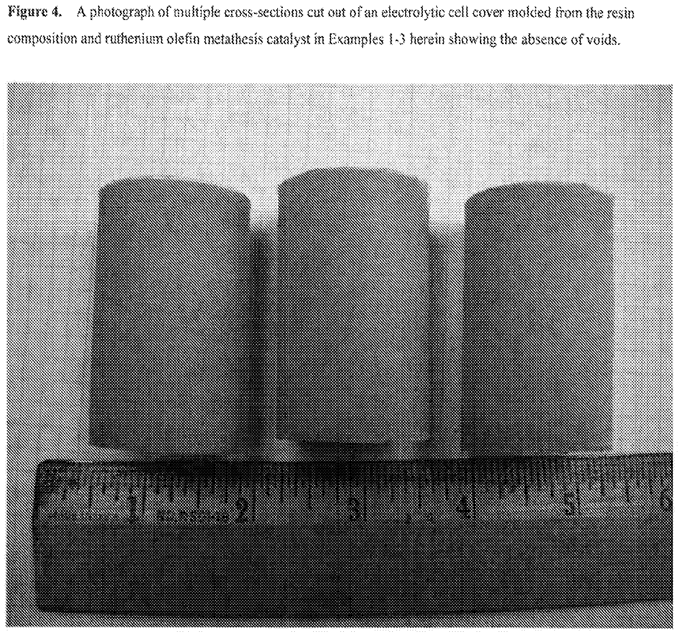

Another surprising benefit of the present invention is that the molded electrolytic cell covers have less than one visible void per square inch of polymer. This reduction in the number of unwanted voids and bubbles reduces the need for costly and labor intensive rework and repair. It is noteworthy, that this reduction in the number of voids was obtained without the need to pressurize the mold during the molding process. Examples 1-3 herein describe the process used to mold electrolytic cell covers of the present invention. Figure 4, below shows multiple cross-sections cut out of an electrolytic cell cover of the present invention molded using the cyclic olefin resin composition polymerized with a ruthenium olefin metathesis catalyst as disclosed in Examples 1-3 herein showing the absence of voids.

In addition, another benefit of the present invention is that the molded electrolytic cell covers may be molded so as to be translucent making inspection for subsurface defects (e.g. unwanted voids) possible, even for sections having a thickness in excess of ¼ inch. This ability to visually inspect the electrolytic cell covers for subsurface defects (e.g. unwanted voids) eliminates the need for additional quality control procedures such as hydrostatic pressure testing, low pressure pneumatic testing or vacuum testing to ensure quality of the molded electrolytic cell cover prior to being placed in service. It is noteworthy to point out that electrolytic cell covers and other articles molded from two-component DCPD resins are opaque and dark brown in color and are not readily amenable to visible inspection for the detection of subsurface defects (e.g. unwanted voids). Moreover, as disclosed herein electrolytic cell covers of the present invention possess improved corrosion resistant properties for use in chlor-alkali environments, brine electrolysis, and other applications where corrosion resistance is required.

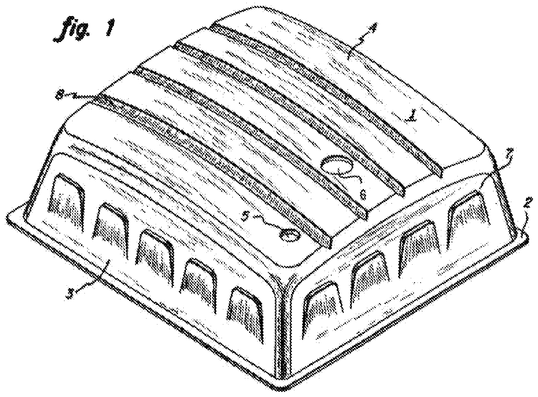

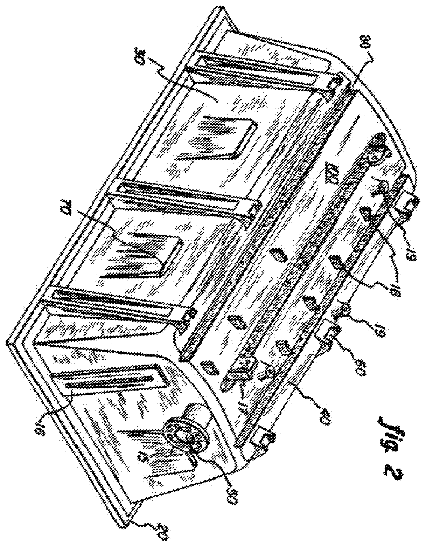

The embodiments shown in **FIG. 1** and **FIG. 2** have distinct configurations. Electrolytic cell cover 1 of **FIG. 1** comprises flanged base 2 which is adapted to help provide a liquid-tight seal between the electrolytic cell cover and receptacle which retains the anode and cathode. A gasket is typically necessary to help accomplish this function. Electrolytic cell cover **1** also comprises side walls **3** and top portion **4.** Side walls **3** extend from the flanged base **2** and support top portion **4.** Side walls **3** and top portion **4** are slightly corrugated, which is not required. Corrugation is provided in top portion **4** by the presence of grooves **8** and corrugation is provided in the side walls **3** by dimples **7.**

Flanged base **2,** side wall **3** and top portion **4** are integrally connected to provide a sealed cavity for the anode and cathode of an electrolytic cell when installed. This sealed cavity is water-tight and gas-tight when all orifices are closed or connected to a closed conduit system.

Electrolytic cell cover **1** shows a small orifice **5** and large orifice **6** positioned in top portion **4.** Small orifice **5** allows for the release of chlorine and hydrogen gas produced by the electrolytic cell when installed. Its cross-sectional area is sufficiently large to provide such release. More than one orifice may be used to accomplish this purpose in the alternative. Large orifice **6** allows for the introduction of brine solution into the electrolytic cell. Large orifice **6** is optional in that it is contemplated electrolytic cells can be designed to allow feeding of the brine solution below the cell cover. More than one orifice may be used to accomplish this purpose as well.

The shape of flanged base **2,** side walls **3** and top portion **4** are essentially defined by the configuration of the closed mold. Orifice **5** (and orifice **6)** need not be defined by a closed mold. Orifice **5** (and orifice **6)** may be provided by cutting the molded article.

**FIG. 2** shows another embodiment of the present invention. Electrolytic cell cover **100** has the essential features including flanged base **20,** side walls **30,** top portion **40** and orifice **50,** and other features, such as corrugation in the side walls **30** and top portion **40.** Side walls **30** and top portion **40** may be slightly corrugated, which is not required. Corrugation is provided in top portion **40** by grooves **80** and dimples **70** provide slight corrugation in side walls **30.**

Additional features found in electrolytic cell cover **100** are brine solution inlets **19** and conduit supports **18.** In addition, lifting tabs **17** are positioned in top portion **40** and clamp stabilizers **60** are integrated into side walls **30** to stabilize clamps which anchor electrolytic cell cover **100** in place when installed. Orifice **50** is positioned within conduit connector **15,** which is incorporated into a side wall **30** near top portion **40.** More than one conduit connector **15** with orifice **50** may be incorporated in the structure. Also incorporated in a side wall **30** is a support for a sight gauge. Sight gauge support **16** permits installation of a sight gauge on the side wall which allows the liquid level within an operating electrolytic cell to be viewed. Conduit connector **15** allows for air-tight connection to a conduit system which transports the gases produced from the electrolytic cell. Brine solution inlets **19** and tube supports **18** can be incorporated in electrolytic cell cover **100** when it is known what fluids or gases will be circulated or fed into the electrolytic cell through the electrolytic cell cover.

The flanged base **20,** side walls **30** and top portion **40** are integrally connected to provide a sealed cavity for the anode and cathode of an electrolytic cell when installed. This sealed cavity will be air-tight and water-tight when conduit connector **15** is connected to a closed conduit system.

### Other Molded Articles

The benefits of the present invention are not limited strictly to an improved electrolytic cell cover. Other articles of manufacture for use in the chlor-alkali industry and other industries where corrosion resistant materials are required may also be molded using the resin compositions and Group 8 olefin metathesis catalysts, which contains Ru as the Group 8 transition metal, disclosed herein. Such articles will possess all of the benefits of the improved electrolytic cell covers of the present invention. The articles are selected from piping, end boxes used in mercury cells, inlet box used in mercury cells, wash box used in mercury cells, sidewalls of mercury cells, membrane frames for membrane cells, headers, valves, manifolds, , interrupter cups, interrupter assemblies, reagent and product distribution devices, dip tubes, lids, containers, liners, covers, flanges, support structures, funnels and pipe fittings including without limitation elbows, couplings, unions, reducers, tees, crosses, caps, plugs, nipples, and barbs. Additional examples of such articles include without limitation, tanks, tank liners, pipe liners, containment vessels, drums, drum liners, vessels, and vessel liners.

The present invention allows for the molding of articles comprising a reinforcing material as an option. In accordance with the present invention, articles may be molded in a closed mold or open mold. The articles may be molded as a one piece integrated structure in which all of the essential features of the article are integrally connected to the one piece structure.

The present invention allows for the molding of articles of any configuration, weight, size, and geometric shape. Geometric shapes include without limitation round, circular, square, rectangular, oval, triangular, trapezoidal, and polygonal.

The present invention allows for the molding of articles for use in the chlor-alkali industry and other industries where corrosion resistant materials are required, wherein the molded articles have less than one visible void per square inch of polymer. The present invention also allows for the molding of articles for use in the chlor-alkali industry and other industries where corrosion resistant materials are required, wherein the molded articles may be molded so as to be translucent making inspection for subsurface defects possible, even for sections having a thickness in excess of ¼ inch. Moreover, as disclosed herein molded articles of the present invention possess improved corrosion resistant properties for use in chlor-alkali environments, brine electrolysis, and other applications where corrosion resistance is required.

The present invention allows for the molding of articles using a variety of processing methods including but not limited to Reaction Injection Molding (RIM), Resin Transfer Molding (RTM), Reinforced Reaction Injection Molding (RRIM), Structural Reaction Injection Molding (SRIM), Vacuum Assisted Resin Transfer Molding (VARTM), rotational molding, cell casting, dip casting, continuous casting, embedding, potting, encapsulation, film casting or solvent casting, gated casting, mold casting, multiple pour method, mechanical foaming, chemical foaming, physical foaming, syntactic foams, compression molding or matched die molding, container mixing, infusion or resin infusion, laminate, , transfer molding, spray up, filament winding, fiber placement, pultrusion, extrusion, slush casting, centrifugal casting, hand lay-up, Seeman's Composite Resin Infusion Molding Process (SCRIMP), coating or painting, blow molding, in-mold coating, in-mold painting or injection, vacuum forming, and casting. For processing methods requiring the use of a RIM or impingement style mixhead, including without limitation RIM, SRIM, and RRIM, electrolytic cell covers of the present invention may be molded using a single mixhead or a plurality of mixheads as well as a plurality of material injection streams (e.g. two resin streams and one catalyst stream).

### Cyclic Olefins

Resin compositions that may be used with the present invention disclosed herein comprise one or more cyclic olefins. In general, any cyclic olefin suitable for the metathesis reactions disclosed herein may be used. Such cyclic olefins may be optionally substituted, optionally heteroatom-containing, mono-unsaturated, di-unsaturated, or poly-unsaturated C₅ to C₂₄ hydrocarbons that may be mono-, di-, or poly-cyclic. The cyclic olefin may generally be any strained or unstrained cyclic olefin, provided the cyclic olefin is able to participate in a ROMP reaction either individually or as part of a ROMP cyclic olefin composition. While certain unstrained cyclic olefins such as cyclohexene are generally understood to not undergo ROMP reactions by themselves, under appropriate circumstances, such unstrained cyclic olefins may nonetheless be ROMP active. For example, when present as a co-monomer in a ROMP composition, unstrained cyclic olefins may be ROMP active. Accordingly, as used herein and as would be appreciated by the skilled artisan, the term "unstrained cyclic olefin" is intended to refer to those unstrained cyclic olefins that may undergo a ROMP reaction under any conditions, or in any ROMP composition, provided the unstrained cyclic olefin is ROMP active.

In general, the cyclic olefin may be represented by the structure of formula (A) 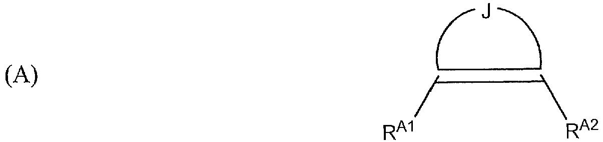
wherein J, R^{A1}, and R^{A2} are as follows:
   R^{A1} and R^{A2} is selected independently from the group consisting of hydrogen, hydrocarbyl (e.g., C₁-C₂₀ alkyl, C₅-C₂₀ aryl, C₅-C₃₀ aralkyl, or C₅-C₃₀ alkaryl), substituted hydrocarbyl (e.g., substituted C₁-C₂₀ alkyl, C₅-C₂₀ aryl, C₅-C₃₀ aralkyl, or C₅-C₃₀ alkaryl), heteroatom-containing hydrocarbyl (e.g., C₁-C₂₀ heteroalkyl, C₅-C₂₀ heteroaryl, heteroatom-containing C₅-C₃₀ aralkyl, or heteroatom-containing C₅-C₃₀ alkaryl), and substituted heteroatom-containing hydrocarbyl (e.g., substituted C₁-C₂₀ heteroalkyl, C₅-C₂₀ heteroaryl, heteroatom-containing C₅-C₃₀ aralkyl, or heteroatom-containing C₅-C₃₀ alkaryl) and, if substituted hydrocarbyl or substituted heteroatom-containing hydrocarbyl, wherein the substituents may be functional groups ("Fn") such as phosphonato, phosphoryl, phosphanyl, phosphino, sulfonato, C₁-C₂₀ alkylsulfanyl, C₅-C₂₀ arylsulfanyl , C₁-C₂₀ alkylsulfonyl, C₅-C₂₀ arylsulfonyl, C₁-C₂₀ alkylsulfinyl, C₅-C₂₀ arylsulfinyl, sulfonamido, amino, amido, imino, nitro, nitroso, hydroxyl, C₁-C₂₀ alkoxy, C₅-C₂₀ aryloxy, C₂-C₂₀ alkoxycarbonyl, C₅-C₂₀ aryloxycarbonyl, carboxyl, carboxylato, mercapto, formyl, C₁-C₂₀ thioester, cyano, cyanato, thiocyanato, isocyanate, thioisocyanate, carbamoyl, epoxy, styrenyl, silyl, silyloxy, silanyl, siloxazanyl, boronato, boryl, or halogen, or a metal-containing or metalloid-containing group (wherein the metal may be, for example, Sn or Ge). R^{A1} and R^{A2} may itself be one of the aforementioned groups, such that the Fn moiety is directly bound to the olefinic carbon atom indicated in the structure. In the latter case, however, the functional group will generally not be directly bound to the olefinic carbon through a heteroatom containing one or more lone pairs of electrons, e.g., an oxygen, sulfur, nitrogen, or phosphorus atom, or through an electron-rich metal or metalloid such as Ge, Sn, As, Sb, Se, Te, etc. With such functional groups, there will normally be an intervening linkage Z*, such that R^{A1} and/or R^{A2} then has the structure -(Z*)ₙ-Fn wherein n is 1, Fn is the functional group, and Z* is a hydrocarbylene linking group such as an alkylene, substituted alkylene, heteroalkylene, substituted heteroalkene, arylene, substituted arylene, heteroarylene, or substituted heteroarylene linkage.
   J is a saturated or unsaturated hydrocarbylene, substituted hydrocarbylene, heteroatom-containing hydrocarbylene, or substituted heteroatom-containing hydrocarbylene linkage, wherein when J is substituted hydrocarbylene or substituted heteroatom-containing hydrocarbylene, the substituents may include one or more -(Z*)ₙ-Fn groups, wherein n is zero or 1, and Fn and Z* are as defined previously. Additionally, two or more substituents attached to ring carbon (or other) atoms within J may be linked to form a bicyclic or polycyclic olefin. J will generally contain in the range of approximately 5 to 14 ring atoms, typically 5 to 8 ring atoms, for a monocyclic olefin, and, for bicyclic and polycyclic olefins, each ring will generally contain 4 to 8, typically 5 to 7, ring atoms.

Mono-unsaturated cyclic olefins encompassed by structure (A) may be represented by the structure (B) 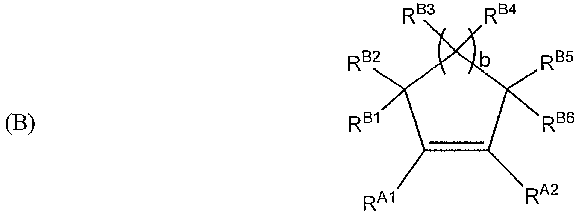 wherein b is an integer generally although not necessarily in the range of 1 to 10, typically 1 to 5, R^{A1} and R^{A2} are as defined above for structure (A), and R^{B1}, R^{B2}, R^{B3}, R^{B4}, R^{B5}, and R^{B6} are independently selected from the group consisting of hydrogen, hydrocarbyl, substituted hydrocarbyl, heteroatom-containing hydrocarbyl, substituted heteroatom-containing hydrocarbyl and -(Z*)ₙ-Fn where n, Z* and Fn are as defined previously, and wherein if any of the R^{B1} through R^{B6} moieties is substituted hydrocarbyl or substituted heteroatom-containing hydrocarbyl, the substituents may include one or more - (Z*)ₙ-Fn groups. Accordingly, R^{B1}, R^{B2}, R^{B3}, R^{B4}, R^{B5}, and R^{B6} may be, for example, hydrogen, hydroxyl, C₁-C₂₀ alkyl, C₅-C₂₀ aryl, C₁-C₂₀ alkoxy, C₅-C₂₀ aryloxy, C₂-C₂₀ alkoxycarbonyl, C₅-C₂₀ aryloxycarbonyl, amino, amido, nitro, etc.
Furthermore, any of the R^{B1}, R^{B2}, R^{B3}, R^{B4}, R^{B5}, and R^{B6} moieties can be linked to any of the other R^{B1}, R^{B2}, R^{B3}, R^{B4}, R^{B5}, and R^{B6} moieties to provide a substituted or unsubstituted alicyclic group containing 4 to 30 ring carbon atoms or a substituted or unsubstituted aryl group containing 6 to 18 ring carbon atoms or combinations thereof and the linkage may include heteroatoms or functional groups, e.g. the linkage may include without limitation an ether, ester, thioether, amino, alkylamino, imino, or anhydride moiety. The alicyclic group can be monocyclic, bicyclic, or polycyclic. When unsaturated the cyclic group can contain monounsaturation or multiunsaturation, with monounsaturated cyclic groups being preferred. When substituted, the rings contain monosubstitution or multisubstitution wherein the substituents are independently selected from hydrogen, hydrocarbyl, substituted hydrocarbyl, heteroatom-containing hydrocarbyl, substituted heteroatom-containing hydrocarbyl, -(Z*)ₙ-Fn where n is zero or 1, Z* and Fn are as defined previously, and functional groups (Fn) provided above.

Examples of monounsaturated, monocyclic olefins encompassed by structure (B) include, without limitation, cyclopentene, cyclohexene, cycloheptene, cyclooctene, cyclononene, cyclodecene, cycloundecene, cyclododecene, tricyclodecene, tetracyclodecene, octacyclodecene, and cycloeicosene, and substituted versions thereof such as 1-methylcyclopentene, 1-ethylcyclopentene, 1-isopropylcyclohexene, 1-chloropentene, 1-fluorocyclopentene, 4-methylcyclopentene, 4-methoxy-cyclopentene, 4-ethoxy-cyclopentene, cyclopent-3-ene-thiol, cyclopent-3-ene, 4-methylsulfanyl-cyclopentene, 3-methylcyclohexene, 1-methylcyclooctene, 1,5-dimethylcyclooctene, etc.

Monocyclic diene reactants encompassed by structure (A) may be generally represented by the structure (C) 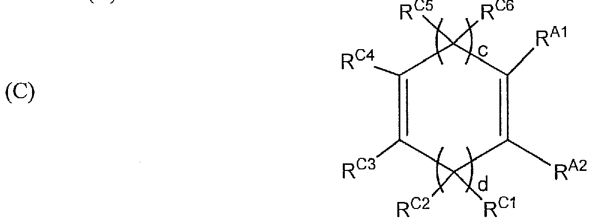 wherein c and d are independently integers in the range of 1 to about 8, typically 2 to 4, preferably 2 (such that the reactant is a cyclooctadiene), R^{A1} and R^{A2} are as defined above for structure (A), and R^{C1}, R^{C2}, R^{C3}, R^{C4}, R^{C5}, and R^{C6} are defined as for R^{B1} through R^{B6}. In this case, it is preferred that R^{C3} and R^{C4} be non-hydrogen substituents, in which case the second olefinic moiety is tetrasubstituted. Examples of monocyclic diene reactants include, without limitation, 1,3-cyclopentadiene, 1,3-cyclohexadiene, 1,4-cyclohexadiene, 5-ethyl-1,3-cyclohexadiene, 1,3-cycloheptadiene, cyclohexadiene, 1,5-cyclooctadiene, 1,3-cyclooctadiene, and substituted analogs thereof. Triene reactants are analogous to the diene structure (C), and will generally contain at least one methylene linkage between any two olefinic segments.

Bicyclic and polycyclic olefins encompassed by structure (A) may be generally represented by the structure (D) 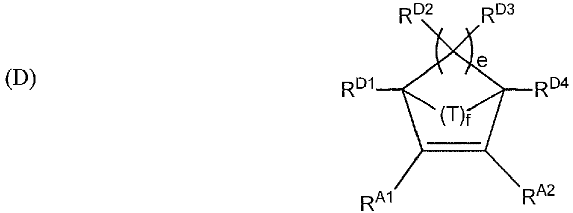 wherein R^{A1} and R^{A2} are as defined above for structure (A), R^{D1}, R^{D2}, R^{D3}, and R^{D4} are as defined for R^{B1} through R^{B6}, e is an integer in the range of 1 to 8 (typically 2 to 4) f is generally 1 or 2; T is lower alkylene or alkenylene (generally substituted or unsubstituted methyl or ethyl), CHR^{G1}, C(R^{G1})₂, O, S, N-R^{G1}, P-R^{G1}, O=P-R^{G1}, Si(R^{G1})₂, B-R^{G1}, or As-R^{G1} where R^{G1} is alkyl, alkenyl, cycloalkyl, cycloalkenyl, aryl, alkaryl, aralkyl, or alkoxy. Furthermore, any of the R^{D1}, R^{D2}, R^{D3}, and R^{D4} moieties can be linked to any of the other R^{D1}, R^{D2}, R^{D3}, and R^{D4} moieties to provide a substituted or unsubstituted alicyclic group containing 4 to 30 ring carbon atoms or a substituted or unsubstituted aryl group containing 6 to 18 ring carbon atoms or combinations thereof and the linkage may include heteroatoms or functional groups, e.g. the linkage may include without limitation an ether, ester, thioether, amino, alkylamino, imino, or anhydride moiety. The cyclic group can be monocyclic, bicyclic, or polycyclic. When unsaturated the cyclic group can contain monounsaturation or multiunsaturation, with monounsaturated cyclic groups being preferred. When substituted, the rings contain monosubstitution or multisubstitution wherein the substituents are independently selected from hydrogen, hydrocarbyl, substituted hydrocarbyl, heteroatom-containing hydrocarbyl, substituted heteroatom-containing hydrocarbyl, -(Z*)ₙ-Fn where n is zero or 1, Z* and Fn are as defined previously, and functional groups (Fn) provided above.

Cyclic olefins encompassed by structure (D) are in the norbornene family. As used herein, norbornene means any compound that includes at least one norbornene or substituted norbornene moiety, including without limitation norbornene, substituted norbornene(s), norbornadiene, substituted norbornadiene(s), polycyclic norbornenes, and substituted polycyclic norbornene(s). Norbornenes within this group may be generally represented by the structure (E) 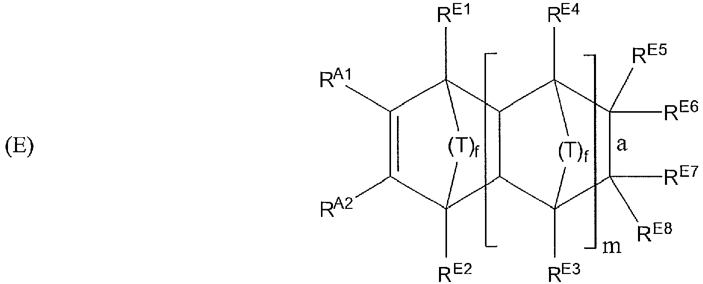 wherein R^{A1} and R^{A2} are as defined above for structure (A), T is as defined above for structure (D), R^{E1}, R^{E2}, R^{E3}, R^{E4}, R^{E5}, R^{E6}, R^{E7}, and R^{E8} are as defined for R^{B1} through R^{B6}, and "a" represents a single bond or a double bond, f is generally 1 or 2, m is an integer from 0 to 5, and when "a" is a double bond one of R^{E5}, R^{E6} and one of R^{E7}, R^{E8} is not present.

Furthermore, any of the R^{E5}, R^{E6}, R^{E7}, and R^{E8} moieties can be linked to any of the other R^{E5}, R^{E6}, R^{E7}, and R^{E8} moieties to provide a substituted or unsubstituted alicyclic group containing 4 to 30 ring carbon atoms or a substituted or unsubstituted aryl group containing 6 to 18 ring carbon atoms or combinations thereof and the linkage may include heteroatoms or functional groups, e.g. the linkage may include without limitation an ether, ester, thioether, amino, alkylamino, imino, or anhydride moiety. The cyclic group can be monocyclic, bicyclic, or polycyclic. When unsaturated the cyclic group can contain monounsaturation or multiunsaturation, with monounsaturated cyclic groups being preferred. When substituted, the rings contain monosubstitution or multisubstitution wherein the substituents are independently selected from hydrogen, hydrocarbyl, substituted hydrocarbyl, heteroatom-containing hydrocarbyl, substituted heteroatom-containing hydrocarbyl, -(Z*)ₙ-Fn where n is zero or 1, Z* and Fn are as defined previously, and functional groups (Fn) provided above.

More preferred cyclic olefins possessing at least one norbornene moiety have the structure (F): 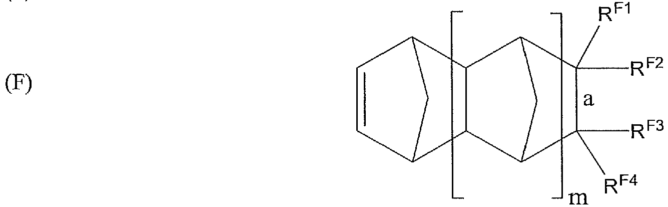 wherein, R^{F1}, R^{F2}, R^{F3}, and R^{F4}, are as defined for R^{B1} through R^{B6}, and "a" represents a single bond or a double bond, m is an integer from 0 to 5, and when "a" is a double bond one of R^{F1}, R^{F2} and one of R^{F3}, R^{F4} is not present.

Furthermore, any of the R^{F1}, R^{F2}, R^{F3}, and R^{F4} moieties can be linked to any of the other R^{F1}, R^{F2}, R^{F3}, and R^{F4} moieties to provide a substituted or unsubstituted alicyclic group containing 4 to 30 ring carbon atoms or a substituted or unsubstituted aryl group containing 6 to 18 ring carbon atoms or combinations thereof and the linkage may include heteroatoms or functional groups, e.g. the linkage may include without limitation an ether, ester, thioether, amino, alkylamino, imino, or anhydride moiety. The alicyclic group can be monocyclic, bicyclic, or polycyclic. When unsaturated the cyclic group can contain monounsaturation or multiunsaturation, with monounsaturated cyclic groups being preferred. When substituted, the rings contain monosubstitution or multisubstitution wherein the substituents are independently selected from hydrogen, hydrocarbyl, substituted hydrocarbyl, heteroatom-containing hydrocarbyl, substituted heteroatom-containing hydrocarbyl, -(Z*)ₙ-Fn where n is zero or 1, Z* and Fn are as defined previously, and functional groups (Fn) provided above.

One route for the preparation of hydrocarbyl substituted and functionally substituted norbornenes employs the Diels-Alder cycloaddition reaction in which cyclopentadiene or substituted cyclopentadiene is reacted with a suitable dienophile at elevated temperatures to form the substituted norbornene adduct generally shown by the following reaction Scheme 1: 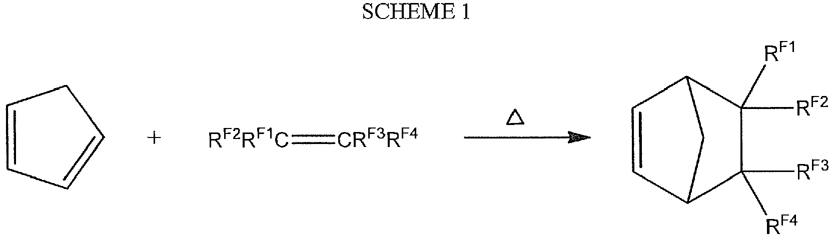 Wherein R^{F1} to R^{F4} are as previously defined for structure (F).

Other norbornene adducts can be prepared by the thermal pyrolysis of dicyclopentadiene in the presence of a suitable dienophile. The reaction proceeds by the initial pyrolysis of dicyclopentadiene to cyclopentadiene followed by the Diels-Alder cycloaddition of cyclopentadiene and the dienophile to give the adduct shown below in Scheme 2: 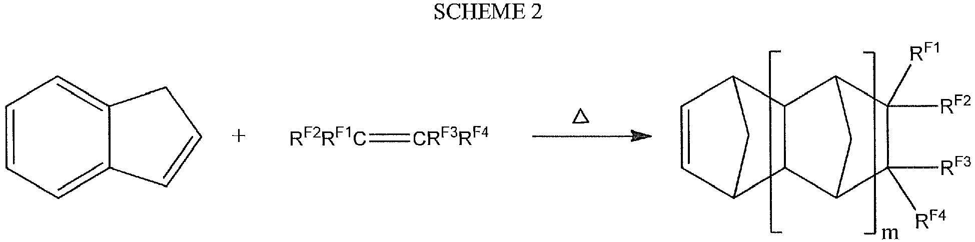 wherein m is an integer from 0 to 5, and R^{F1} to R^{F4} are as previously defined for structure (F).

Norbornadiene and higher Diels-Alder adducts thereof similarly can be prepared by the thermal reaction of cyclopentadiene and dicyclopentadiene in the presence of an acetylenic reactant as shown below in Scheme 3: 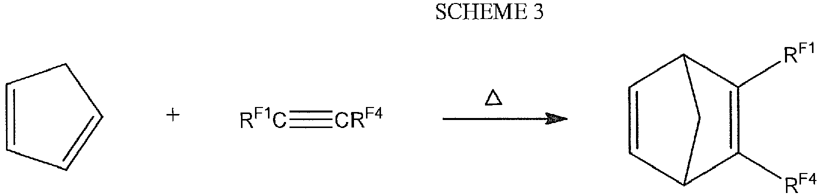 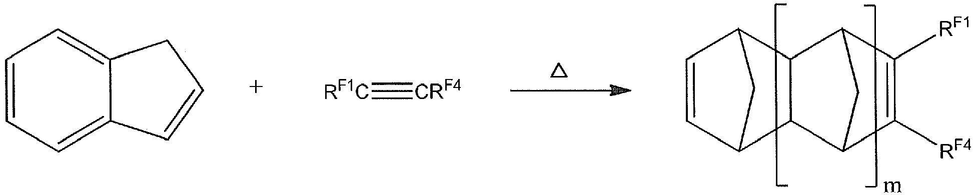 wherein m is an integer from 0 to 5, R^{F1} and R^{F4} are as previously defined for structure (F)

Specific examples of bicyclic and polycyclic olefins thus include, without limitation, dicyclopentadiene (DCPD); trimer and other higher order oligomers of cyclopentadiene including without limitation tricyclopentadiene (cyclopentadiene trimer), cyclopentadiene tetramer, and cyclopentadiene pentamer; ethylidenenorbornene; dicyclohexadiene; norbornene; 5-methyl-2-norbornene; 5-ethyl-2-norbornene; 5-isobutyl-2-norbornene; 5.6-dimethyl-2-norbornene; 5-phenylnorbornene; 5-benzylnorbornene; 5-acetylnorbornene; 5-methoxycarbonylnorbornene; 5-ethyoxycarbonyl-1-norbornene; 5-methyl-5-methoxy-carbonylnorbornene; 5-cyanonorbornene; 5,5,6-trimethyl-2-norbornene; cyclo-hexenylnorbornene; endo, exo-5,6-dimethoxynorbornene; endo, endo-5,6-dimethoxynorbornene; endo, exo-5,6-dimethoxycarbonylnorbornene; endo,endo-5,6-dimethoxycarbonylnorbornene; 2,3-dimethoxynorbomene; norbornadiene; tricycloundecene; tetracyclododecene; 8-methyltetracyclododecene; 8-ethyltetracyclododecene; 8-methoxycarbonyltetracyclododecene; 8-methyl-8-tetracyclododecene; 8-cyanotetracyclododecene; pentacyclopentadecene; pentacyclopentadecene; and the. like, and their structural isomers, stereoisomers, and mixtures thereof. Additional examples of bicyclic and polycyclic olefins include, without limitation, C₂-C₁₂ hydrocarbyl substituted norbornenes such as 5-butyl-2-norbornene, 5-hexyl-2-norbornene, 5-octyl-2-norbornene, 5-decyl-2-norbornene, 5-dodecyl-2-norbornene, 5-vinyl-2-norbornene, 5-ethylidene-2-norbornene, 5-isopropenyl-2-norbornene, 5-propenyl-2-norbornene, and 5-butenyl-2-norbornene, and the like.

Preferred cyclic olefins include C₅ to C₂₄ unsaturated hydrocarbons. Also preferred are C₅ to C₂₄ cyclic hydrocarbons that contain one or more (typically 2 to 12) heteroatoms such as O, N, S, or P. For example, crown ether cyclic olefins may include numerous O heteroatoms throughout the cycle, and these are within the scope of the invention. In addition, preferred cyclic olefins are C₅ to C₂₄ hydrocarbons that contain one or more (typically 2 or 3) olefins. For example, the cyclic olefin may be mono-, di-, or tri-unsaturated. Examples of cyclic olefins include without limitation cyclooctene, cyclododecene, and (c,t,t)-1,5,9-cyclododecatriene.

The cyclic olefins may also comprise multiple (typically 2 or 3) rings. For example, the cyclic olefin may be mono-, di-, or tri-cyclic. When the cyclic olefin comprises more than one ring, the rings may or may not be fused. Preferred examples of cyclic olefins that comprise multiple rings include norbornene, dicyclopentadiene, tricyclopentadiene, and 5-ethylidene-2-norbornene.

More preferred cyclic olefins include dicyclopentadiene; tricyclopentadiene; dicyclohexadiene; norbornene; 5-methyl-2-norbornene; 5-ethyl-2-norbornene; 5-isobutyl-2-norbornene; 5,6-dimethyl-2-norbornene; 5-phenylnorbornene; 5-benzylnorbornene; 5-acetylnorbornene; 5-methoxycarbonylnorbornene; 5-ethoxycarbonyl-1-norbornene; 5-methyl-5-methoxy-carbonylnorbornene; 5-cyanonorbornene; 5,5,6-trimethyl-2-norbornene; cyclo-hexenylnorbornene; endo, exo-5,6-dimethoxynorbornene; endo, endo-5,6-dimethoxynorbornene; endo, exo-5-6-dimethoxycarbonylnorbornene; endo, endo-5,6-dimethoxycarbonylnorbornene; 2,3-dimethoxynorbornene; norbornadiene; tricycloundecene; tetracyclododecene; 8-methyltetracyclododecene; 8-ethyl-tetracyclododecene; 8-methoxycarbonyltetracyclododecene; 8-methyl-8-tetracyclo-dodecene; 8-cyanotetracyclododecene; pentacyclopentadecene; pentacyclohexadecene; higher order oligomers of cyclopentadiene such as cyclopentadiene tetramer, cyclopentadiene pentamer, and the like; and C₂-C₁₂ hydrocarbyl substituted norbornenes such as 5-butyl-2-norbornene; 5-hexyl-2-norbornene; 5-octyl-2-norbornene; 5-decyl-2-norbornene; 5-dodecyl-2-norbornene; 5-vinyl-2-norbornene; 5-ethylidene-2-norbornene; 5-isopropenyl-2-norbornene; 5-propenyl-2-norbornene; and 5-butenyl-2-norbornene, and the like. Even more preferred cyclic olefins include dicyclopentadiene, tricyclopentadiene, and higher order oligomers of cyclopentadiene, such as cyclopentadiene tetramer, cyclopentadiene pentamer, and the like, tetracyclododecene, norbornene, and C₂-C₁₂ hydrocarbyl substituted norbornenes, such as 5-butyl-2-norbornene, 5-hexyl-2-norbornene, 5-octyl-2-norbornene, 5-decyl-2-norbornene, 5-dodecyl-2-norbornene, 5-vinyl-2-norbornene, 5-ethylidene-2-norbornene, 5-isopropenyl-2-norbornene, 5-propenyl-2-norbornene, 5-butenyl-2-norbornene, and the like.

The cyclic olefin may also be substituted, for example, a C₅ to C₂₄ cyclic hydrocarbon wherein one or more (typically 2, 3, 4, or 5) of the hydrogens are replaced with non-hydrogen substituents. Suitable non-hydrogen substituents may be chosen from the substituents described hereinabove. For example, functionalized cyclic olefins, i.e., C₅ to C₂₄ cyclic hydrocarbons wherein one or more (typically 2, 3, 4, or 5) of the hydrogens are replaced with functional groups, are within the scope of the invention. Suitable functional groups may be chosen from the functional groups described hereinabove. For example, a cyclic olefin functionalized with an alcohol group may be used to prepare a telechelic polymer comprising pendent alcohol groups. Functional groups on the cyclic olefin may be protected in cases where the functional group interferes with the metathesis catalyst, and any of the protecting groups commonly used in the art may be employed. Acceptable protecting groups may be found, for example, in Greene et al., Protective Groups in Organic Synthesis, 3rd Ed. (New York: Wiley, 1999). Examples of functionalized cyclic olefins include without limitation 2-hydroxymethyl-5-norbornene, 2-[(2-hydroxyethyl)carboxylate]-5-norbornene, cydecanol, 5-n-hexyl-2-norbornene, 5-n-butyl-2-norbornene.

Cyclic olefins incorporating any combination of the abovementioned features (i.e., heteroatoms, substituents, multiple olefins, multiple rings) are suitable for the methods disclosed herein. Additionally, cyclic olefins incorporating any combination of the abovementioned features (i.e., heteroatoms, substituents, multiple olefins, multiple rings) are suitable for the invention disclosed herein.

The cyclic olefins useful in the methods disclosed herein may be strained or unstrained. It will be appreciated that the amount of ring strain varies for each cyclic olefin compound, and depends upon a number of factors including the size of the ring, the presence and identity of substituents, and the presence of multiple rings. Ring strain is one factor in determining the reactivity of a molecule towards ring-opening olefin metathesis reactions. Highly strained cyclic olefins, such as certain bicyclic compounds, readily undergo ring opening reactions with olefin metathesis catalysts. Less strained cyclic olefins, such as certain unsubstituted hydrocarbon monocyclic olefins, are generally less reactive. In some cases, ring opening reactions of relatively unstrained (and therefore relatively unreactive) cyclic olefins may become possible when performed in the presence of the olefinic compounds disclosed herein. Additionally, cyclic olefins useful in the invention disclosed herein may be strained or unstrained.

The resin compositions of the present invention may comprise a plurality of cyclic olefins. For example, two cyclic olefins selected from the cyclic olefins described hereinabove may be employed in order to form metathesis products that incorporate both cyclic olefins. Where two or more cyclic olefins are used, one example of a second cyclic olefin is a cyclic alkenol, i.e., a C₅-C₂₄ cyclic hydrocarbon wherein at least one of the hydrogen substituents is replaced with an alcohol or protected alcohol moiety to yield a functionalized cyclic olefin.

The use of a plurality of cyclic olefins, and in particular when at least one of the cyclic olefins is functionalized, allows for further control over the positioning of functional groups within the products. For example, the density of cross-linking points can be controlled in polymers and macromonomers prepared using the methods disclosed herein. Control over the quantity and density of substituents and functional groups also allows for control over the physical properties (e.g., melting point, tensile strength, glass transition temperature, etc.) of the products. Control over these and other properties is possible for reactions using only a single cyclic olefin, but it will be appreciated that the use of a plurality of cyclic olefins further enhances the range of possible metathesis products and polymers formed.

### Group 8 Olefin Metathesis Catalysts

A Group 8 olefin metathesis catalyst, which contains Ru as the Group 8 transition metal, that may be used in the invention disclosed herein, is preferably a Group 8 transition metal complex having the structure of formula (I) 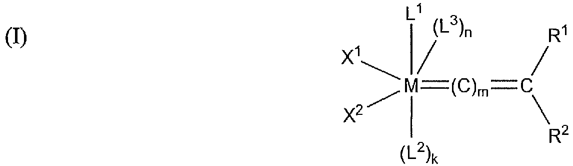 in which:
M is a Group 8 transition metal, which contains Ru as the Group 8 transition metal;
L¹, L², and L³ are neutral electron donor ligands;
n is 0 or 1, such that L³ may or may not be present;
m is 0, 1, or 2;
k is 0 or 1;
X¹ and X² are anionic ligands; and
R¹ and R² are independently selected from hydrogen, hydrocarbyl, substituted hydrocarbyl, heteroatom-containing hydrocarbyl, substituted heteroatom-containing hydrocarbyl, and functional groups,
wherein any two or more of X¹, X², L¹, L², L³, R¹, and R² can be taken together to form one or more cyclic groups, and further wherein any one or more of X¹, X², L¹, L², L³, R¹, and R² may be attached to a support.

Numerous embodiments of the catalysts useful in the reactions disclosed herein are described in more detail *infra.* For the sake of convenience, the catalysts are described in groups, but it should be emphasized that these groups are not meant to be limiting in any way. That is, any of the catalysts useful in the invention may fit the description of more than one of the groups described herein.

A first group of catalysts, then, are commonly referred to as First Generation Grubbs-type catalysts, and have the structure of formula (I). For the first group of catalysts, M is a Group 8 transition which contains Ru as the Group 8 transition metal, m is 0,1, or 2, and n, X¹, X², L¹, L², L³, R¹, and R² are described as follows.

For the first group of catalysts, n is 0, and L¹ and L² are independently selected from phosphine, sulfonated phosphine, phosphite, phosphinite, phosphonite, arsine, stibine, ether, (including cyclic ethers), amine, amide, imine, sulfoxide, carboxyl, nitrosyl, pyridine, substituted pyridine, imidazole, substituted imidazole, pyrazine, substituted pyrazine and thioether. Exemplary ligands are trisubstituted phosphines of the formula PR^{H1}R^{H2}R^{H3}, where R^{H1}, R^{H2}, and R^{H3} are each independently aryl or C₁-C₁₀ alkyl, particularly primary alkyl, secondary alkyl, or cycloalkyl. In the most preferred embodiments, L¹ and L² are independently selected from the group consisting of trimethylphosphine (PMe₃), triethylphosphine (PEt₃), tri-n-butylphosphine (PBu₃), tri(ortho-tolyl)phosphine (P-o-tolyl₃), tri-tert-butylphosphine (P-tert-Bu₃), tricyclopentylphosphine (PCyclopentyl₃), tricyclohexylphosphine (PCy₃), triisopropylphosphine (P-i-Pr₃), trioctylphosphine (POct₃), triisobutylphosphine, (P-i-Bu₃), triphenylphosphine (PPh₃), tri(pentafluorophenyl)phosphine (P(C₆F₅)₃), methyldiphenylphosphine (PMePh₂), dimethylphenylphosphine (PMe₂Ph), and diethylphenylphosphine (PEt₂Ph). Alternatively, L¹ and L² may be independently selected from phosphabicycloalkane (e.g. monosubstituted 9-phosphabicyclo-[3.3.1]nonane, or monosubstituted 9-phosphabicyclo[4.2.1]nonane] such as cyclohexylphoban, isopropylphoban, ethylphoban, methylphoban, butylphoban, pentylphoban and the like). Furthermore, trisubstituted phosphines of the formula PR^{H1}R^{H2}R^{H3}, where R^{H1}, R^{H2}, and R^{H3} are each independently substituted or unsubstituted aryl or C₁-C₁₀ alkyl, particularly primary alkyl, secondary alkyl, or cycloalkyl.

X¹ and X² are anionic ligands, and may be the same or different, or are linked together to form a cyclic group, typically although not necessarily a five- to eight-membered ring. In preferred embodiments, X¹ and X² are each independently hydrogen, halide, or one of the following groups: C₁-C₂₀ alkyl, C₅-C₂₄ aryl, C₁-C₂₀ alkoxy, C₅-C₂₄ aryloxy, C₂-C₂₀ alkoxycarbonyl, C₆-C₂₄ aryloxycarbonyl, C₂-C₂₄ acyl, C₂-C₂₄ acyloxy, C₁-C₂₀ alkylsulfonato, C₅-C₂₄ arylsulfonato, C₁-C₂₀ alkylsulfanyl, C₅-C₂₄ arylsulfanyl, C₁-C₂₀ alkylsulfinyl, NO₃, -N=C=O, -N=C=S, or C₅-C₂₄ arylsulfinyl. Optionally, X¹ and X² may be substituted with one or more moieties selected from C₁-C₁₂ alkyl, C₁-C₁₂ alkoxy, C₅-C₂₄ aryl, and halide, which may, in turn, with the exception of halide, be further substituted with one or more groups selected from halide, C₁-C₆ alkyl, C₁-C₆ alkoxy, and phenyl. In more preferred embodiments, X¹ and X² are halide, benzoate, C₂-C₆ acyl, C₂-C₆ alkoxycarbonyl, C₁-C₆ alkyl, phenoxy, C₁-C₆ alkoxy, C₁-C₆ alkylsulfanyl, aryl, or C₁-C₆ alkylsulfonyl. In even more preferred embodiments, X¹ and X² are each halide, CF₃CO₂, CH₃CO₂, CFH₂CO₂, (CH₃)₃CO, (CF₃)₂(CH₃)CO, (CF₃)(CH₃)₂CO, PhO, MeO, EtO, tosylate, mesylate, or trifluoromethane-sulfonate. In the most preferred embodiments, X¹ and X² are each chloride.

R¹ and R² are independently selected from hydrogen, hydrocarbyl (e.g., C₁-C₂₀ alkyl, C₂-C₂₀ alkenyl, C₂-C₂₀ alkynyl, C₅-C₂₄ aryl, C₆-C₂₄ alkaryl, C₆-C₂₄ aralkyl, etc.), substituted hydrocarbyl (e.g., substituted C₁-C₂₀ alkyl, C₂-C₂₀ alkenyl, C₂-C₂₀ alkynyl, C₅-C₂₄ aryl, C₆-C₂₄ alkaryl, C₆-C₂₄ aralkyl, etc.), heteroatom-containing hydrocarbyl (e.g., heteroatom-containing C₁-C₂₀ alkyl, C₂-C₂₀ alkenyl, C₂-C₂₀ alkynyl, C₅-C₂₄ aryl, C₆-C₂₄ alkaryl, C₆-C₂₄ aralkyl, etc.), and substituted heteroatom-containing hydrocarbyl (e.g., substituted heteroatom-containing C₁-C₂₀ alkyl, C₂-C₂₀ alkenyl, C₂-C₂₀ alkynyl, C₅-C₂₄ aryl, C₆-C₂₄ alkaryl, C₆-C₂₄ aralkyl, etc.), and functional groups. R¹ and R² may also be linked to form a cyclic group, which may be aliphatic or aromatic, and may contain substituents and/or heteroatoms. Generally, such a cyclic group will contain 4 to 12, preferably 5, 6, 7, or 8 ring atoms.

In preferred catalysts, R¹ is hydrogen and R² is selected from C₁-C₂₀ alkyl, C₂-C₂₀ alkenyl, and C₅-C₂₄ aryl, more preferably C₁-C₆ alkyl, C₂-C₆ alkenyl, and C₅-C₁₄ aryl. Still more preferably, R² is phenyl, vinyl, methyl, isopropyl, or t-butyl, optionally substituted with one or more moieties selected from C₁-C₆ alkyl, C₁-C₆ alkoxy, phenyl, and a functional group Fn as defined earlier herein. Most preferably, R² is phenyl or vinyl substituted with one or more moieties selected from methyl, ethyl, chloro, bromo, iodo, fluoro, nitro, dimethylamino, methyl, methoxy, and phenyl. Optimally, R² is phenyl or -CH=C(CH₃)₂.

Any two or more (typically two, three, or four) of X¹, X², L¹, L², L³, R¹, and R² can be taken together to form a cyclic group, including bidentate or multidentate ligands, as disclosed, for example, in U.S. Pat. No. 5,312,940, the disclosure of which is incorporated herein by reference. When any of X¹, X², L¹, L², L³, R¹, and R² are linked to form cyclic groups, those cyclic groups may contain 4 to 12, preferably 4, 5, 6, 7 or 8 atoms, or may comprise two or three of such rings, which may be either fused or linked. The cyclic groups may be aliphatic or aromatic, and may be heteroatom-containing and/or substituted. The cyclic group may, in some cases, form a bidentate ligand or a tridentate ligand. Examples of bidentate ligands include, but are not limited to, bisphosphines, dialkoxides, alkyldiketonates, and aryldiketonates. Additionally, in formula (I), one or both of R¹ and R² may have the structure -(W)ₙ-U⁺V⁻ in which W is selected from hydrocarbylene, substituted hydrocarbylene, heteroatom-containing hydrocarbylene, or substituted heteroatom-containing hydrocarbylene; U is a positively charged Group 15 or Group 16 element substituted with hydrogen, hydrocarbyl, substituted hydrocarbyl, heteroatom-containing hydrocarbyl, or substituted heteroatom-containing hydrocarbyl; V is a negatively charged counterion; and n is zero or 1. Futhermore, R¹ and R² may be taken together to form an indenylidene moiety.

A second group of catalysts, commonly referred to as Second Generation Grubbs-type catalysts, have the structure of formula (I), wherein L¹ is a carbene ligand having the structure of formula (II) 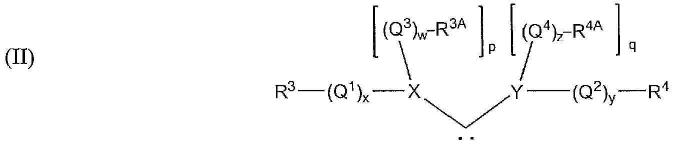 such that the complex may have the structure of formula (III) 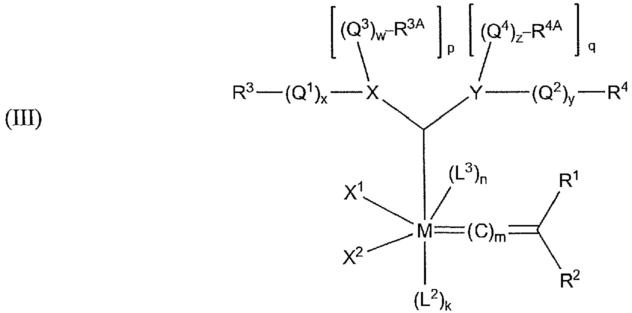
wherein M, m, n, X¹, X², L², L³, R¹, and R² are as defined for the first group of catalysts, and the remaining substituents are as follows;
X and Y are heteroatoms typically selected from N, O, S, and P. Since O and S are divalent, p is necessarily zero when X is O or S, q is necessarily zero when Y is O or S, and k is zero or 1. However, when X is N or P, then p is 1, and when Y is N or P, then q is 1. In a preferred embodiment, both X and Y are N;
Q¹, Q², Q³, and Q⁴ are linkers, e.g., hydrocarbylene (including substituted hydrocarbylene, heteroatom-containing hydrocarbylene, and substituted heteroatom-containing hydrocarbylene, such as substituted and/or heteroatom-containing alkylene) or -(CO)-, and w, x, y, and z are independently zero or 1, meaning that each linker is optional. Preferably, w, x, y, and z are all zero. Further, two or more substituents on adjacent atoms within Q¹, Q², Q³, and Q⁴ may be linked to form an additional cyclic group; and
R³, R^{3A}, R⁴, and R^{4A} are independently selected from hydrogen, hydrocarbyl, substituted hydrocarbyl, heteroatom-containing hydrocarbyl, and substituted heteroatom-containing hydrocarbyl. In addition, X and Y may be independently selected from carbon and one of the heteroatoms mentioned above. Also, L² and L³ may be taken together to form a single bindentate electron-donating heterocyclic ligand. Futhermore, R¹ and R² may be taken together to form an indenylidene moiety. Moreover, X¹, X², L², L³, X and Y may be further coordinated to boron or to a carboxylate.

In addition, any two or more of X¹, X², L¹, L², L³, R¹, R², R³, R^{3A}, R⁴, and R^{4A} can be taken together to form a cyclic group, and any one or more of X¹ X², L², L³, Q¹, Q², Q³, Q⁴, R¹, R², R³, R^{3A}, R⁴, and R^{4A} may be attached to a support. Any two or more of X¹, X², L¹, L², L³, R¹, R², R³, R^{3A}, R⁴, and R^{4A} can also be taken to be -A-Fn, wherein "A" is a divalent hydrocarbon moiety selected from alkylene and arylalkylene, wherein the alkyl portion of the alkylene and arylalkylene groups can be linear or branched, saturated or unsaturated, cyclic or acyclic, and substituted or unsubstituted, wherein the aryl portion of the of arylalkylene can be substituted or unsubstituted, and wherein hetero atoms and/or functional groups may be present in either the aryl or the alkyl portions of the alkylene and arylalkylene groups, and Fn is a functional group, or together to form a cyclic group, and any one or more of X¹, X², L², L³, Q¹, Q², Q³, Q⁴, R¹, R², R³, R^{3A}, R⁴, and R^{4A} may be attached to a support. Additionally, any two or more of X¹, X², L¹, L², L³, R¹, R², R³, R^{3A}, R⁴, R^{4A}, Q¹, Q², Q³ and Q⁴ can be taken together to form a cyclic group.

Preferably, R^{3A} and R^{4A} are linked to form a cyclic group so that the carbene ligand has the structure of formula (IV) 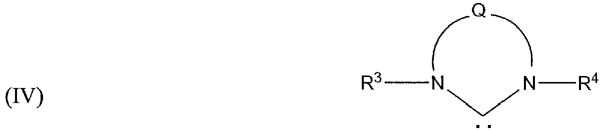 wherein R³ and R⁴ are as defined for the second group of catalysts above, with preferably at least one of R³ and R⁴, and more preferably both R³ and R⁴, being alicyclic or aromatic of one to about five rings, and optionally containing one or more heteroatoms and/or substituents. Q is a linker, typically a hydrocarbylene linker, including substituted hydrocarbylene, heteroatom-containing hydrocarbylene, and substituted heteroatom-containing hydrocarbylene linkers, wherein two or more substituents on adjacent atoms within Q may also be linked to form an additional cyclic structure, which may be similarly substituted to provide a fused polycyclic structure of two to about five cyclic groups. Q is often, although not necessarily, a two-atom linkage or a three-atom linkage.

Examples of N-heterocyclic carbene (NHC) ligands and acyclic diaminocarbene ligands suitable as L¹ thus include, but are not limited to, the following where DIPP is diisopropylphenyl and Mes is 2,4,6-trimethylphenyl:

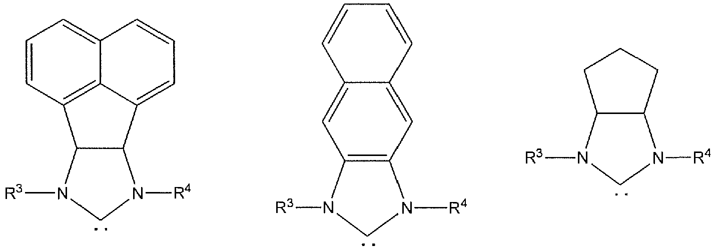

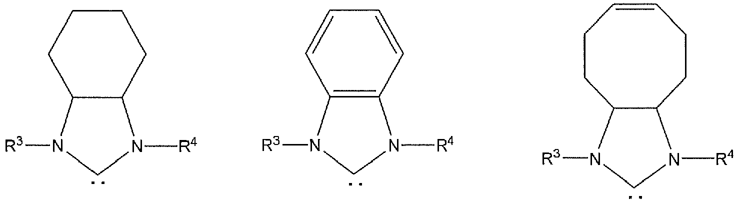

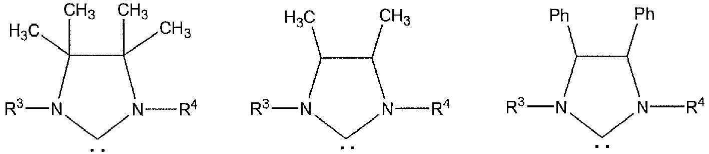

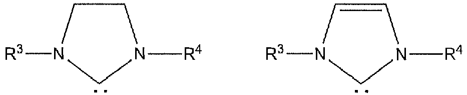

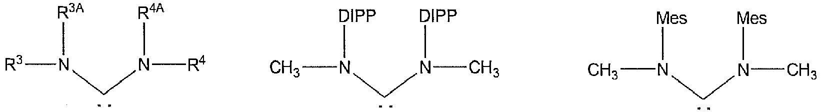

Additional examples of N-heterocyclic carbene (NHC) ligands and acyclic diaminocarbene ligands suitable as L¹ thus include, but are not limited to the following: 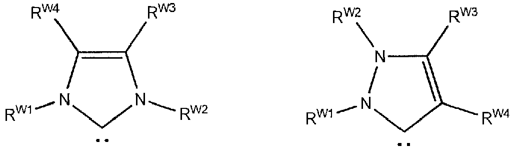 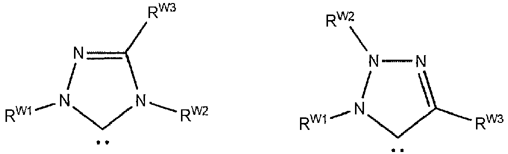 wherein R^{W1}, R^{W2}, R^{W3}, R^{W4} are independently hydrogen, unsubstituted hydrocarbyl, substituted hydrocarbyl, or heteroatom containing hydrocarbyl, and where one or both of R^{W3} and R^{W4} may be in independently selected from halogen, nitro, amido, carboxyl, alkoxy, aryloxy, sulfonyl, carbonyl, thio, or nitroso groups.
Additional examples of N-heterocyclic carbene (NHC) ligands suitable as L¹ are further described in U.S. Pat. Nos. 7,378,528; 7,652,145; 7,294,717; 6,787,620; 6,635,768; and 6,552,139 the contents of each are incorporated herein by reference.
Additionally, thermally activated N-Heterocyclic Carbene Precursors as disclosed in U.S. Pat. No. 6,838,489, may also be used with the present invention, the contents of which is incorporated herein by reference.

When M is ruthenium, then, the preferred complexes have the structure of formula (V)

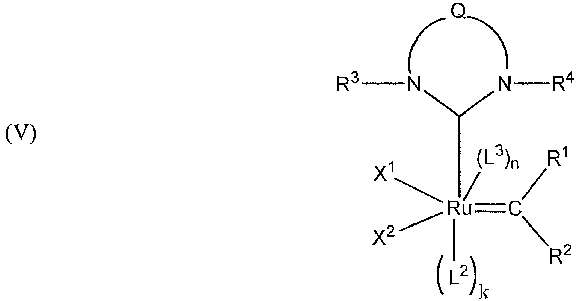

In a more preferred embodiment, Q is a two-atom linkage having the structure -CR¹¹R¹²-CR¹³R¹⁴- or -CR¹¹=CR¹³-, preferably -CR¹¹R¹²-CR¹³R¹⁴-, wherein R¹¹, R¹², R¹³, and R¹⁴ are independently selected from hydrogen, hydrocarbyl, substituted hydrocarbyl, heteroatom-containing hydrocarbyl, substituted heteroatom-containing hydrocarbyl, and functional groups. Examples of functional groups here include without limitation carboxyl, C₁-C₂₀ alkoxy, C₅-C₂₄ aryloxy, C₂-C₂₀ alkoxycarbonyl, C₅-C₂₄ alkoxycarbonyl, C₂-C₂₄ acyloxy, C₁-C₂₀ alkylthio, C₅-C₂₄ arylthio, C₁-C₂₀ alkylsulfonyl, and C₁-C₂₀ alkylsulfinyl, optionally substituted with one or more moieties selected from C₁-C₁₂ alkyl, C₁-C₁₂ alkoxy, C₅-C₁₄ aryl, hydroxyl, sulfhydryl, formyl, and halide. R¹¹, R¹², R¹³, and R¹⁴ are preferably independently selected from hydrogen, C₁-C₁₂ alkyl, substituted C₁-C₁₂ alkyl, C₁-C₁₂ heteroalkyl, substituted C₁-C₁₂ heteroalkyl, phenyl, and substituted phenyl. Alternatively, any two of R¹¹, R¹², R¹³, and R¹⁴ may be linked together to form a substituted or unsubstituted, saturated or unsaturated ring structure, e.g., a C₄-C₁₂ alicyclic group or a C₅ or C₆ aryl group, which may itself be substituted, e.g., with linked or fused alicyclic or aromatic groups, or with other substituents. In one further aspect, any one or more of R¹¹, R¹², R¹³, and R¹⁴ comprises one or more of the linkers. Additionally, R³ and R⁴ may be unsubstituted phenyl or phenyl substituted with one or more substituents selected from C₁-C₂₀ alkyl, substituted C₁-C₂₀ alkyl, C₁-C₂₀ heteroalkyl, substituted C₁-C₂₀ heteroalkyl, C₅-C₂₄ aryl, substituted C₅-C₂₄ aryl, C₅-C₂₄ heteroaryl, C₆-C₂₄ aralkyl, C₆-C₂₄ alkaryl, or halide. Furthermore, X¹ and X² may be halogen.

When R³ and R⁴ are aromatic, they are typically although not necessarily composed of one or two aromatic rings, which may or may not be substituted, e.g., R³ and R⁴ may be phenyl, substituted phenyl, biphenyl, substituted biphenyl, or the like. In one preferred embodiment, R³ and R⁴ are the same and are each unsubstituted phenyl or phenyl substituted with up to three substituents selected from C₁-C₂₀ alkyl, substituted C₁-C₂₀ alkyl, C₁-C₂₀ heteroalkyl, substituted C₁-C₂₀ heteroalkyl, C₅-C₂₄ aryl, substituted C₅-C₂₄ aryl, C₅-C₂₄ heteroaryl, C₆-C₂₄ aralkyl, C₆-C₂₄ alkaryl, or halide. Preferably, any substituents present are hydrogen, C₁-C₁₂ alkyl, C₁-C₁₂ alkoxy, C₅-C₁₄ aryl, substituted C₅-C₁₄ aryl, or halide. As an example, R³ and R⁴ are mesityl (i.e. Mes as defined herein).

In a third group of catalysts having the structure of formula (I), M, m, n, X¹, X², R¹, and R² are as defined for the first group of catalysts, L¹ is a strongly coordinating neutral electron donor ligand such as any of those described for the first and second group of catalysts, and L² and L³ are weakly coordinating neutral electron donor ligands in the form of optionally substituted heterocyclic groups. Again, n is zero or 1, such that L³ may or may not be present. Generally, in the third group of catalysts, L² and L³ are optionally substituted five- or six-membered monocyclic groups containing 1 to 4, preferably 1 to 3, most preferably 1 to 2 heteroatoms, or are optionally substituted bicyclic or polycyclic structures composed of 2 to 5 such five- or six-membered monocyclic groups. If the heterocyclic group is substituted, it should not be substituted on a coordinating heteroatom, and any one cyclic moiety within a heterocyclic group will generally not be substituted with more than 3 substituents.

For the third group of catalysts, examples of L² and L³ include, without limitation, heterocycles containing nitrogen, sulfur, oxygen, or a mixture thereof.

Examples of nitrogen-containing heterocycles appropriate for L² and L³ include pyridine, bipyridine, pyridazine, pyrimidine, bipyridamine, pyrazine, 1,3,5-triazine, 1,2,4-triazine, 1,2,3-triazine, pyrrole, 2H-pyrrole, 3H-pyrrole, pyrazole, 2H-imidazole, 1,2,3-triazole, 1,2,4-triazole, indole, 3H-indole, 1H-isoindole, cyclopenta(b)pyridine, indazole, quinoline, bisquinoline, isoquinoline, bisisoquinoline, cinnoline, quinazoline, naphthyridine, piperidine, piperazine, pyrrolidine, pyrazolidine, quinuclidine, imidazolidine, picolylimine, purine, benzimidazole, bisimidazole, phenazine, acridine, and carbazole. Additionally, the nitrogen-containing heterocycles may be optionally substituted on a non-coordinating heteroatom with a non-hydrogen substitutent.

Examples of sulfur-containing heterocycles appropriate for L² and L³ include thiophene, 1,2-dithiole, 1,3-dithiole, thiepin, benzo(b)thiophene, benzo(c)thiophene, thionaphthene, dibenzothiophene, 2H-thiopyran, 4H-thiopyran, and thioanthrene.

Examples of oxygen-containing heterocycles appropriate for L² and L³ include 2H-pyran, 4H-pyran, 2-pyrone, 4-pyrone, 1,2-dioxin, 1,3-dioxin, oxepin, furan, 2H-1-benzopyran, coumarin, coumarone, chromene, chroman-4-one, isochromen-1-one, isochromen-3-one, xanthene, tetrahydrofuran, 1,4-dioxan, and dibenzofuran.

Examples of mixed heterocycles appropriate for L² and L³ include isoxazole, oxazole, thiazole, isothiazole, 1,2,3-oxadiazole, 1,2,4-oxadiazole, 1,3,4-oxadiazole, 1,2,3,4-oxatriazole, 1,2,3,5-oxatriazole, 3H-1,2,3-dioxazole, 3H-1,2-oxathiole, 1,3-oxathiole, 4H-1,2-oxazine, 2H-1,3-oxazine, 1,4-oxazine, 1,2,5-oxathiazine, o-isooxazine, phenoxazine, phenothiazine, pyrano[3,4-b]pyrrole, indoxazine, benzoxazole, anthranil, and morpholine.

Preferred L² and L³ ligands are aromatic nitrogen-containing and oxygen-containing heterocycles, and particularly preferred L² and L³ ligands are monocyclic N-heteroaryl ligands that are optionally substituted with 1 to 3, preferably 1 or 2, substituents. Specific examples of particularly preferred L² and L³ ligands are pyridine and substituted pyridines, such as 3-bromopyridine, 4-bromopyridine, 3,5-dibromopyridine, 2,4,6-tribromopyridine, 2,6-dibromopyridine, 3-chloropyridine, 4-chloropyridine, 3,5-dichloropyridine, 2,4,6-trichloropyridine, 2,6-dichloropyridine, 4-iodopyridine, 3,5-diiodopyridine, 3,5-dibromo-4-methylpyridine, 3,5-dichloro-4-methylpyridine, 3,5-dimethyl-4-bromopyridine, 3,5-dimethylpyridine, 4-methylpyridine, 3,5-diisopropylpyridine, 2,4,6-trimethylpyridine, 2,4,6-triisopropylpyridine, 4-(*tert*-butyl)pyridine, 4-phenylpyridine, 3,5-diphenylpyridine, 3,5-dichloro-4-phenylpyridine, and the like.

In general, any substituents present on L² and/or L³ are selected from halo, C₁-C₂₀ alkyl, substituted C₁-C₂₀ alkyl, C₁-C₂₀ heteroalkyl, substituted C₁-C₂₀ heteroalkyl, C₅-C₂₄ aryl, substituted C₅-C₂₄ aryl, C₅-C₂₄ heteroaryl, substituted C₅-C₂₄ heteroaryl, C₆-C₂₄ alkaryl, substituted C₆-C₂₄ alkaryl, C₆-C₂₄ heteroalkaryl, substituted C₆-C₂₄ heteroalkaryl, C₆-C₂₄ aralkyl, substituted C₆-C₂₄ aralkyl, C₆-C₂₄ heteroaralkyl, substituted C₆-C₂₄ heteroaralkyl, and functional groups, with suitable functional groups including, without limitation, C₁-C₂₀ alkoxy, C₅-C₂₄ aryloxy, C₂-C₂₀ alkylcarbonyl, C₆-C₂₄ arylcarbonyl, C₂-C₂₀ alkylcarbonyloxy, C₆-C₂₄ arylcarbonyloxy, C₂-C₂₀ alkoxycarbonyl, C₆-C₂₄ aryloxycarbonyl, halocarbonyl, C₂-C₂₀ alkylcarbonato, C₆-C₂₄ arylcarbonato, carboxy, carboxylato, carbamoyl, mono-(C₁-C₂₀ alkyl)-substituted carbamoyl, di-(C₁-C₂₀ alkyl)-substituted carbamoyl, di-N-(C₁-C₂₀ alkyl), N-(C₅-C₂₄ aryl)-substituted carbamoyl, mono-(C₅-C₂₄ aryl)-substituted carbamoyl, di-(C₆-C₂₄ aryl)-substituted carbamoyl, thiocarbamoyl, mono-(C₁-C₂₀ alkyl)-substituted thiocarbamoyl, di-(C₁-C₂₀ alkyl)-substituted thiocarbamoyl, di-N-(C₁-C₂₀ alkyl)-N-(C₆-C₂₄ aryl)-substituted thiocarbamoyl, mono-(C₆-C₂₄ aryl)-substituted thiocarbamoyl, di-(C₆-C₂₄ aryl)-substituted thiocarbamoyl, carbamido, formyl, thioformyl, amino, mono-(C₁-C₂₀ alkyl)-substituted amino, di-(C₁-C₂₀ alkyl)-substituted amino, mono-(C₅-C₂₄ aryl)-substituted amino, di-(C₅-C₂₄ aryl)-substituted amino, di-N-(C₁-C₂₀ alkyl),N-(C₅-C₂₄ aryl)-substituted amino, C₂-C₂₀ alkylamido, C₆-C₂₄ arylamido, imino, C₁-C₂₀ alkylimino, C₅-C₂₄ arylimino, nitro, and nitroso. In addition, two adjacent substituents may be taken together to form a ring, generally a five- or six-membered alicyclic or aryl ring, optionally containing 1 to 3 heteroatoms and 1 to 3 substituents as above.

Preferred substituents on L² and L³ include, without limitation, halo, C₁-C₁₂ alkyl, substituted C₁-C₁₂ alkyl, C₁-C₁₂ heteroalkyl, substituted C₁-C₁₂ heteroalkyl, C₅-C₁₄ aryl, substituted C₅-C₁₄ aryl, C₅-C₁₄ heteroaryl, substituted C₅-C₁₄ heteroaryl, C₆-C₁₆ alkaryl, substituted C₆-C₁₆ alkaryl, C₆-C₁₆ heteroalkaryl, substituted C₆-C₁₆ heteroalkaryl, C₆-C₁₆ aralkyl, substituted C₆-C₁₆ aralkyl, C₆-C₁₆ heteroaralkyl, substituted C₆-C₁₆ heteroaralkyl, C₁-C₁₂ alkoxy, C₅-C₁₄ aryloxy, C₂-C₁₂ alkylcarbonyl, C₆-C₁₄ arylcarbonyl, C₂-C₁₂ alkylcarbonyloxy, C₆-C₁₄ arylcarbonyloxy, C₂-C₁₂ alkoxycarbonyl, C₆-C₁₄ aryloxycarbonyl, halocarbonyl, formyl, amino, mono-(C₁-C₁₂ alkyl)-substituted amino, di-(C₁-C₁₂ alkyl)-substituted amino, mono-(C₅-C₁₄ aryl)-substituted amino, di-(C₅-C₁₄ aryl)-substituted amino, and nitro.

Of the foregoing, the most preferred substituents are halo, C₁-C₆ alkyl, C₁-C₆ haloalkyl, C₁-C₆ alkoxy, phenyl, substituted phenyl, formyl, N,N-di(C₁-C₆ alkyl)amino, nitro, and nitrogen heterocycles as described above (including, for example, pyrrolidine, piperidine, piperazine, pyrazine, pyrimidine, pyridine, pyridazine, etc.).

In certain embodiments, L² and L³ may also be taken together to form a bidentate or multidentate ligand containing two or more, generally two, coordinating heteroatoms such as N, O, S, or P, with preferred such ligands being diimine ligands of the Brookhart type. One representative bidentate ligand has the structure of formula (VI) 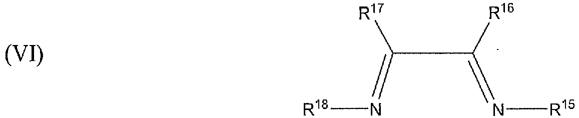 wherein R¹⁵, R¹⁶, R¹⁷, and R¹⁸ hydrocarbyl (e.g., C₁-C₂₀ alkyl, C₂-C₂₀ alkenyl, C₂-C₂₀ alkynyl, C₅-C₂₄ aryl, C₆-C₂₄ alkaryl, or C₆-C₂₄ aralkyl), substituted hydrocarbyl (e.g., substituted C₁-C₂₀ alkyl, C₂-C₂₀ alkenyl, C₂-C₂₀ alkynyl, C₅-C₂₄ aryl, C₆-C₂₄ alkaryl, or C₆-C₂₄ aralkyl), heteroatom-containing hydrocarbyl (e.g., C₁-C₂₀ heteroalkyl, C₅-C₂₄ heteroaryl, heteroatom-containing C₆-C₂₄ aralkyl, or heteroatom-containing C₆-C₂₄ alkaryl), or substituted heteroatom-containing hydrocarbyl (e.g., substituted C₁-C₂₀ heteroalkyl, C₅-C₂₄ heteroaryl, heteroatom-containing C₆-C₂₄ aralkyl, or heteroatom-containing C₆-C₂₄ alkaryl), or (1) R¹⁵ and R¹⁶, (2) R¹⁷ and R¹⁸, (3) R¹⁶ and R¹⁷, or (4) both R¹⁵ and R¹⁶, and R¹⁷ and R¹⁸, may be taken together to form a ring, i.e., an N-heterocycle. Preferred cyclic groups in such a case are five-and six-membered rings, typically aromatic rings.

In a fourth group of catalysts that have the structure of formula (I), two of the substituents are taken together to form a bidentate ligand or a tridentate ligand. Examples of bidentate ligands include, but are not limited to, bisphosphines, dialkoxides, alkyldiketonates, and aryldiketonates. Specific examples include -P(Ph)₂CH₂CH₂P(Ph)₂-, -As(Ph)₂CH₂CH₂As(Ph₂)-, -P(Ph)₂CH₂CH₂C(CF₃)₂O-, binaphtholate dianions, pinacolate dianions, -P(CH₃)₂(CH₂)₂P(CH₃)₂-, and -OC(CH₃)₂(CH₃)₂CO-. Preferred bidentate ligands are -P(Ph)₂CH₂CH₂P(Ph)₂- and -P(CH₃)₂(CH₂)₂P(CH₃)₂-. Tridentate ligands include, but are not limited to, (CH₃)₂NCH₂CH₂P(Ph)CH₂CH₂N(CH₃)₂. Other preferred tridentate ligands are those in which any three of X¹, X², L¹, L², L³, R¹, and R² (e.g., X¹, L¹, and L²) are taken together to be cyclopentadienyl, indenyl, or fluorenyl, each optionally substituted with C₂-C₂₀ alkenyl, C₂-C₂₀ alkynyl, C₁-C₂₀ alkyl, C₅-C₂₀ aryl, C₁-C₂₀ alkoxy, C₂-C₂₀ alkenyloxy, C₂-C₂₀ alkynyloxy, C₅-C₂₀ aryloxy, C₂-C₂₀ alkoxycarbonyl, C₁-C₂₀ alkylthio, C₁-C₂₀ alkylsulfonyl, or C₁-C₂₀ alkylsulfinyl, each of which may be further substituted with C₁-C₆ alkyl, halide, C₁-C₆ alkoxy or with a phenyl group optionally substituted with halide, C₁-C₆ alkyl, or C₁-C₆ alkoxy. More preferably, in compounds of this type, X, L¹, and L² are taken together to be cyclopentadienyl or indenyl, each optionally substituted with vinyl, C₁-C₁₀ alkyl, C₅-C₂₀ aryl, C₁-C₁₀ carboxylate, C₂-C₁₀ alkoxycarbonyl, C₁-C₁₀ alkoxy, or C₅-C₂₀ aryloxy, each optionally substituted with C₁-C₆ alkyl, halide, C₁-C₆ alkoxy or with a phenyl group optionally substituted with halide, C₁-C₆ alkyl or C₁-C₆ alkoxy. Most preferably, X, L¹ and L² may be taken together to be cyclopentadienyl, optionally substituted with vinyl, hydrogen, methyl, or phenyl. Tetradentate ligands include, but are not limited to O₂C(CH₂)₂P(Ph)(CH₂)₂P(Ph)(CH₂)₂CO₂, phthalocyanines, and porphyrins.

Complexes wherein Y is coordinated to the metal are examples of a fifth group of catalysts, and are commonly called "Grubbs-Hoveyda" catalysts. Grubbs-Hoveyda metathesis-active metal carbene complexes may be described by the formula (VII) 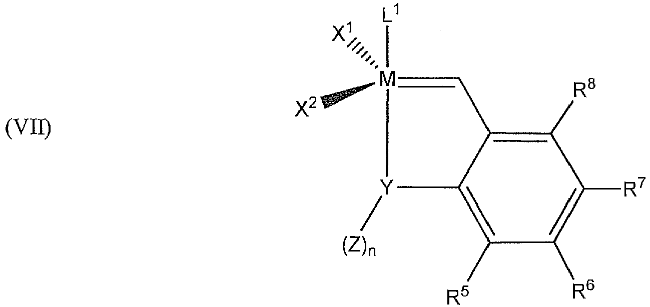 wherein,
M is a Group 8 transition metal, particularly Ru or Os, or, more particularly, Ru;
X¹, X², and L¹ are as previously defined herein for the first and second groups of catalysts;
Y is a heteroatom selected from N, O, S, and P; preferably Y is O or N;
R⁵, R⁶, R⁷, and R⁸ are each, independently, selected from the group consisting of hydrogen, halogen, alkyl, alkenyl, alkynyl, aryl, heteroalkyl, heteroatom containing alkenyl, heteroalkenyl, heteroaryl, alkoxy, alkenyloxy, aryloxy, alkoxycarbonyl, carbonyl, alkylamino, alkylthio, aminosulfonyl, monoalkylaminosulfonyl, dialkylaminosulfonyl, alkylsulfonyl, nitrile, nitro, alkylsulfinyl, trihaloalkyl, perfluoroalkyl, carboxylic acid, ketone, aldehyde, nitrate, cyano, isocyanate, hydroxyl, ester, ether, amine, imine, amide, halogen-substituted amide, trifluoroamide, sulfide, disulfide, sulfonate, carbamate, silane, siloxane, phosphine, phosphate, borate, or -A-Fn, wherein "A" and Fn have been defined above; and any combination of Y, Z, R⁵, R⁶, R⁷, and R⁸ can be linked to form one or more cyclic groups;
n is 0, 1, or 2, such that n is 1 for the divalent heteroatoms O or S, and n is 2 for the trivalent heteroatoms N or P; and
Z is a group selected from hydrogen, alkyl, aryl, functionalized alkyl, functionalized aryl where the functional group(s) may independently be one or more or the following: alkoxy, aryloxy, halogen, carboxylic acid, ketone, aldehyde, nitrate, cyano, isocyanate, hydroxyl, ester, ether, amine, imine, amide, trifluoroamide, sulfide, disulfide, carbamate, silane, siloxane, phosphine, phosphate, or borate; methyl, isopropyl, sec-butyl, t-butyl, neopentyl, benzyl, phenyl and trimethylsilyl; and wherein any combination or combinations of X¹, X², L¹, Y, Z, R⁵, R⁶, R⁷, and R⁸ are linked to a support. Additionally, R⁵, R⁶, R⁷, R⁸, and Z may independently be thioisocyanate, cyanato, or thiocyanato.

In general, Grubbs-Hoveyda complexes useful in the invention contain a chelating alkylidene moiety of the formula (VIII) 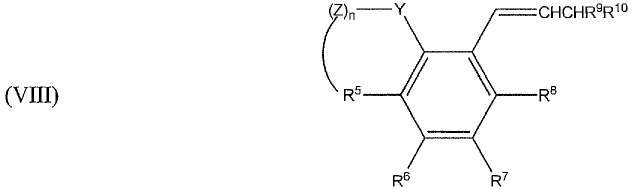
wherein Y, n, Z, R⁵, R⁶, R⁷, and R⁸ are as previously defined herein for catalysts of the fifth group;
Y, Z, and R⁵ can optionally be linked to form a cyclic structure; and
R⁹ and R¹⁰ are each, independently, selected from hydrogen or a substituent group selected from alkyl, aryl, alkoxy, aryloxy, C₂-C₂₀ alkoxycarbonyl, or C₁-C₂₀ trialkylsilyl, wherein each of the substituent groups is substituted or unsubstituted; and wherein any combination or combinations of Z, Y, R⁵, R⁶, R⁷, R⁸, R⁹, and R¹⁰ may be linked to a support. Furthermore, the chelating alkylidene moiety may be derived from a ligand precursor having the formula (VIIIa)

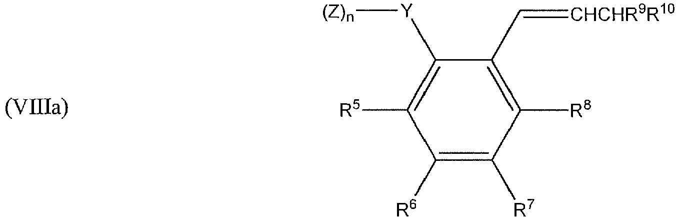

Examples of complexes comprising Grubbs-Hoveyda ligands suitable in the invention include: 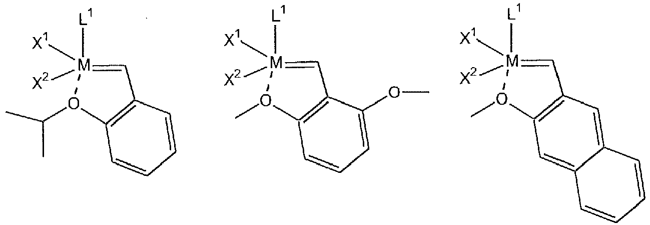 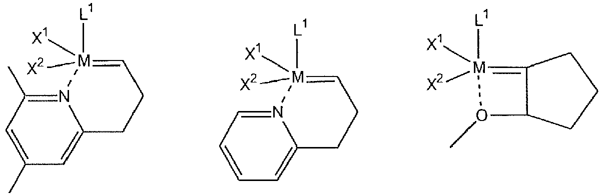 wherein, L¹, X¹, X², and M are as described for any of the other groups of catalysts. Suitable chelating carbenes and carbene precursors are further described by Pederson et al. (U.S. Pat. Nos. 7,026,495 and 6,620,955, the disclosures of both of which are incorporated herein by reference) and Hoveyda et al. (U.S. Pat. No. 6,921,735 and WO0214376, the disclosures of both of which are incorporated herein by reference).

Other useful complexes include structures wherein L² and R² according to formulae (I), (III), or (V) are linked, such as styrenic compounds that also include a functional group for attachment to a support. Examples in which the functional group is a trialkoxysilyl functionalized moiety include, but are not limited to, the following:

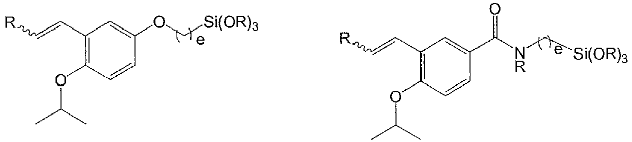

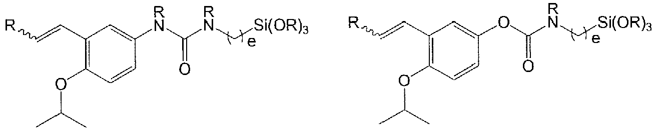

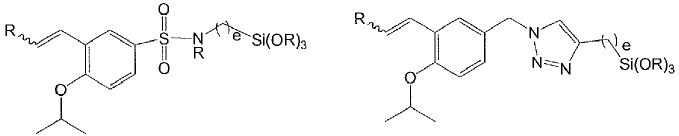

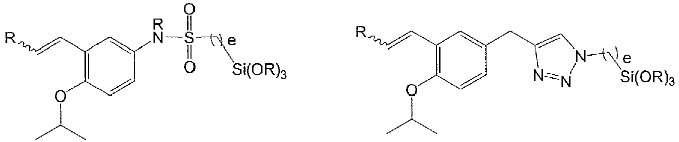

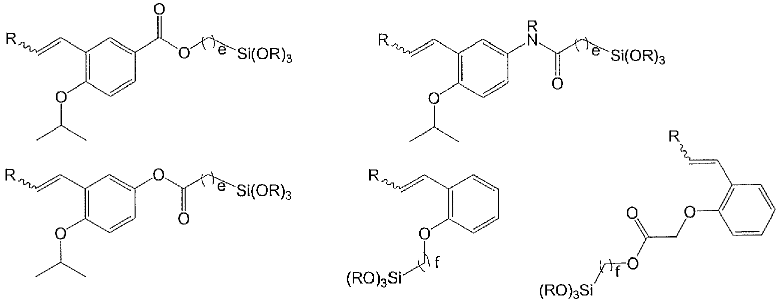

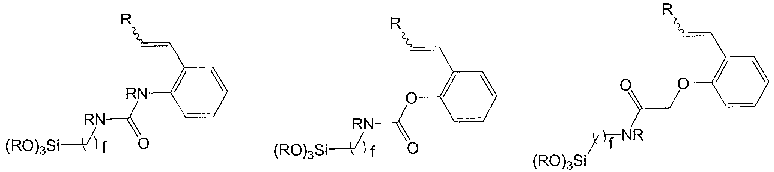

Further examples of complexes having linked ligands include those having linkages between a neutral NHC ligand and an anionic ligand, a neutral NHC ligand and an alkylidine ligand, a neutral NHC ligand and an L² ligand, a neutral NHC ligand and an L³ ligand, an anionic ligand and an alkylidine ligand, and any combination thereof. While the possible structures are too numerous to list herein, some suitable structures based on formula (III) include:

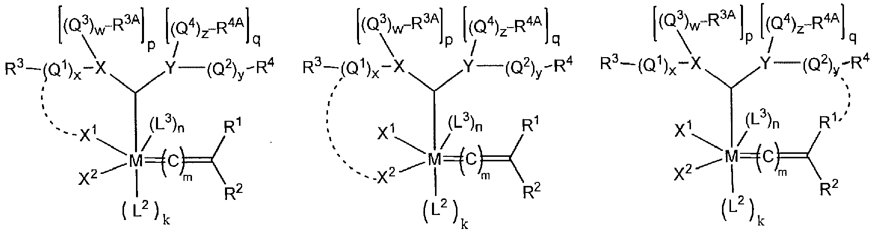

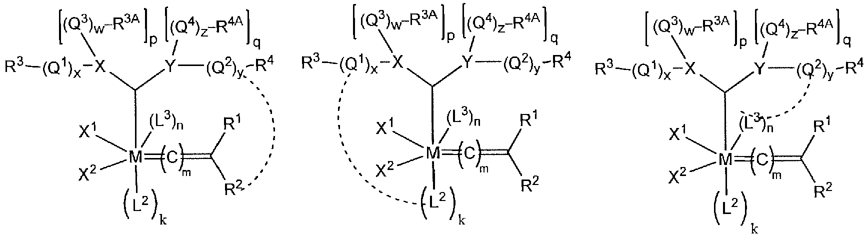

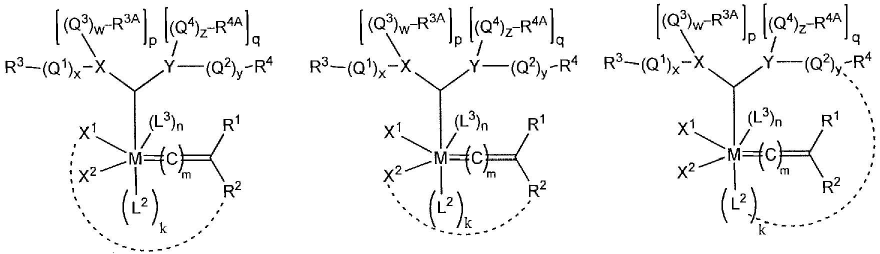

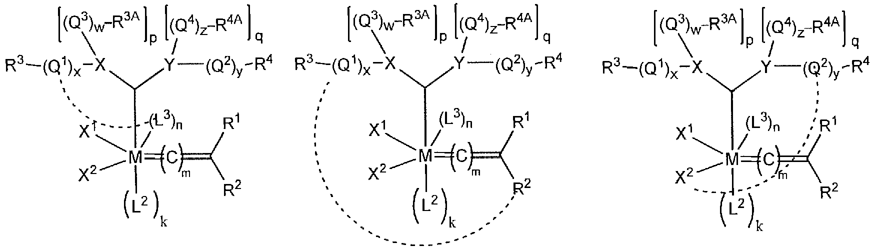

In addition to the catalysts that have the structure of formula (I), as described above, other transition metal carbene complexes include, but are not limited to:
neutral ruthenium or osmium metal carbene complexes containing metal centers that are formally in the +2 oxidation state, have an electron count of 16, are penta-coordinated, and are of the general formula (IX); neutral ruthenium or osmium metal carbene complexes containing metal centers that are formally in the +2 oxidation state, have an electron count of 18, are hexa-coordinated, and are of the general formula (X); cationic ruthenium or osmium metal carbene complexes containing metal centers that are formally in the +2 oxidation state, have an electron count of 14, are tetra-coordinated, and are of the general formula (XI); and cationic ruthenium or osmium metal carbene complexes containing metal centers that are formally in the +2 oxidation state, have an electron count of 14 or 16, are tetra-coordinated or penta-coordinated, respectively, and are of the general formula (XII) 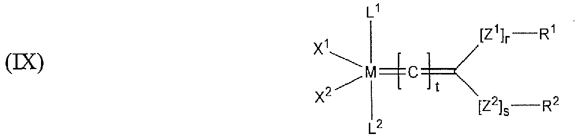 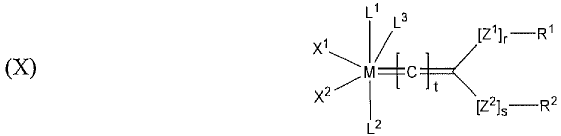 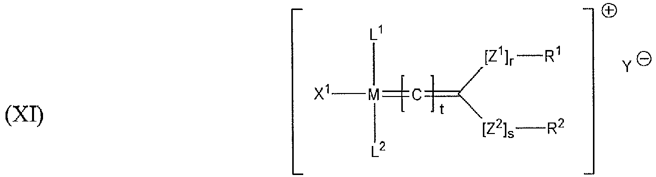 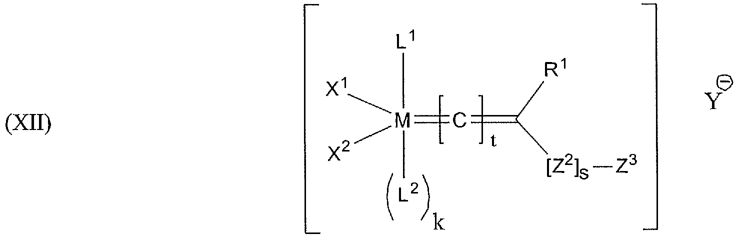 wherein:
   M, X¹, X², L¹, L², L³, R¹, and R² are as defined for any of the previously defined four groups of catalysts;
   r and s are independently zero or 1;
   t is an integer in the range of zero to 5;
   k is an integer in the range of zero to 1;
   Y is any non-coordinating anion (e.g., a halide ion, BF₄⁻, etc.);
   Z¹ and Z² are independently selected from -O-, -S-, -NR²-, -PR²-, -P(=O)R²-, -P(OR²)-, -P(=O)(OR²)-, -C(=O)-, -C(=O)O-, -OC(=O)-, -OC(=O)O-, -S(=O)-, -S(=O)₂-, -, and an optionally substituted and/or optionally heteroatom-containing C₁-C₂₀ hydrocarbylene linkage;
   Z³ is any cationic moiety such as -P(R²)₃⁺ or -N(R²)₃⁺; and
   any two or more of X¹, X², L¹, L², L³,, Z¹, Z², Z³, R¹, and R² may be taken together to form a cyclic group, e.g., a multidentate ligand, and wherein any one or more of X¹, X², L¹, L², L³, Z¹, Z², Z³, R¹, and R² may be attached to a support.

Additionally, another group of olefin metathesis catalysts that may be used in the invention disclosed herein, is a Group 8 transition metal complex having the structure of formula (XIII): 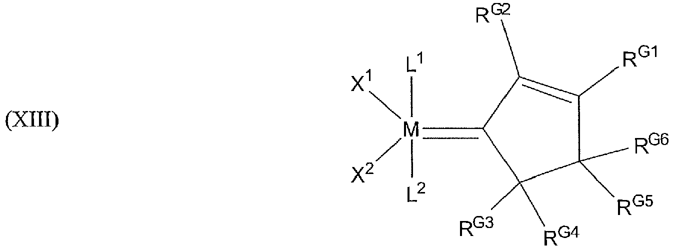
wherein M is a Group 8 transition metal, particularly ruthenium or osmium, or more particularly, ruthenium;
X¹, X², L¹ and L² are as defined for the first and second groups of catalysts defined above; and R^{G1}, R^{G2}, R^{G3}, R^{G4}, R^{G5}, and R^{G6} are each independently selected from the group consisting of hydrogen, halogen, alkyl, alkenyl, alkynyl, aryl, heteroalkyl, heteroatom containing alkenyl, heteroalkenyl, heteroaryl, alkoxy, alkenyloxy, aryloxy, alkoxycarbonyl, carbonyl, alkylamino, alkylthio, aminosulfonyl, monoalkylaminosulfonyl, dialkylaminosulfonyl, alkylsulfonyl, nitrile, nitro, alkylsulfinyl, trihaloalkyl, perfluoroalkyl, carboxylic acid, ketone, aldehyde, nitrate, cyano, isocyanate, thioisocyanate, cyanato, thiocyanato, hydroxyl, ester, ether, thioether, amine, alkylamine, imine, amide, halogen-substituted amide, trifluoroamide, sulfide, disulfide, sulfonate, carbamate, silane, siloxane, phosphine, phosphate, borate, or -A-Fn, wherein "A" is a divalent hydrocarbon moiety selected from alkylene and arylalkylene, wherein the alkyl portion of the alkylene and arylalkylene groups can be linear or branched, saturated or unsaturated, cyclic or acyclic, and substituted or unsubstituted, wherein the aryl portion of the arylalkylene can be substituted or unsubstituted, and wherein hetero atoms and/or functional groups may be present in either the aryl or the alkyl portions of the alkylene and arylalkylene groups, and Fn is a functional group, or any one or more of the R^{G1}, R^{G2}, R^{G3}, R^{G4}, R^{G5}, and R^{G6} may be linked together to form a cyclic group, or any one or more of the R^{G1}, R^{G2}, R^{G3}, R^{G4}, R^{G5}, and R^{G6} may be attached to a support.

Additionally, one preferred embodiment of the Group 8 transition metal complex of formula XIII is a Group 8 transition metal complex of formula (XIV): 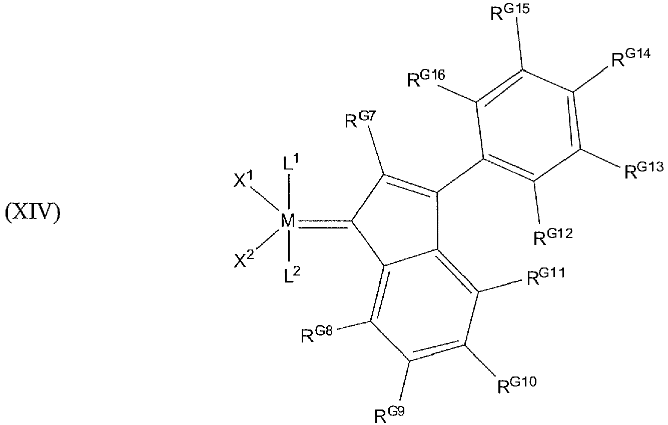
wherein M, X¹, X², L¹, L², are as defined above for Group 8 transition metal complex of formula XIII; and
R^{G7}, R^{G8}, R^{G9}, R^{G10}, R^{G11}, R^{G12}, R^{G13}, R^{G14}, R^{G15} and R^{G16} are as defined above for R^{G1}, R^{G2}, R^{G3}, R^{G4}, R^{G5}, and R^{G6} for Group 8 transition metal complex of formula XIII or any one or more of the R^{G7}, R^{G8}, R^{G9}, R^{G10}, R^{G11}, R^{G12}, R^{G13}, R^{G14}, R^{G15} and R^{G16} may be linked together to form a cyclic group, or any one or more of the R^{G7}, R^{G8}, R^{G9}, R^{G10}, R^{G11}, R^{G12}, R^{G13}, R^{G14}, R^{G15} and R^{G16} may be attached to a support.

Additionally, another preferred embodiment of the Group 8 transition metal complex of formula XIII is a Group 8 transition metal complex of formula (XV): 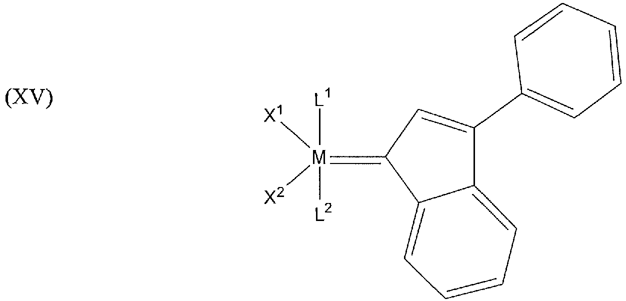 wherein M, X¹, X², L¹, L², are as defined above for Group 8 transition metal complex of formula XIII.

Additionally, another group of olefin metathesis catalysts that may be used in the invention disclosed herein, is a Group 8 transition metal complex having the structure of formula (XVI): 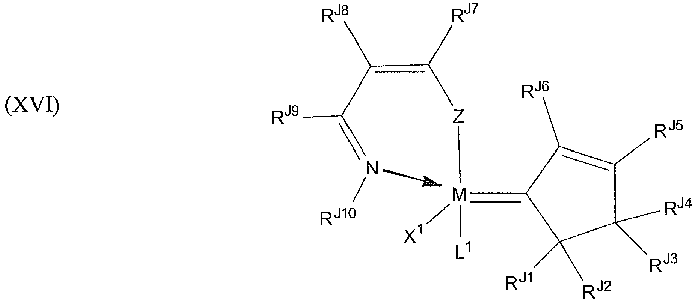
wherein M is a Group 8 transition metal, particularly ruthenium or osmium, or more particularly, ruthenium;
X¹, and L¹ are as defined for the first and second groups of catalysts defined above;
Z is selected from the group consisting of oxygen, sulfur, selenium, NR^{J11}, PR^{J11}, AsR^{J11}, and
SbR^{J11}; and
R^{J1}, R^{J2}, R^{J3}, R^{J4}, R^{J5}, R^{J6}, R^{J7}, R^{J8}, R^{J9}, R^{J10}, and R^{J11} are each independently selected from the group consisting of hydrogen, halogen, alkyl, alkenyl, alkynyl, aryl, heteroalkyl, heteroatom containing alkenyl, heteroalkenyl, heteroaryl, alkoxy, alkenyloxy, aryloxy, alkoxycarbonyl, carbonyl, alkylamino, alkylthio, aminosulfonyl, monoalkylaminosulfonyl, dialkylaminosulfonyl, alkylsulfonyl, nitrile, nitro, alkylsulfinyl, trihaloalkyl, perfluoroalkyl, carboxylic acid, ketone, aldehyde, nitrate, cyano, isocyanate, thioisocyanate, cyanato, thiocyanato, hydroxyl, ester, ether, thioether, amine, alkylamine, imine, amide, halogen-substituted amide, trifluoroamide, sulfide, disulfide, sulfonate, carbamate, silane, siloxane, phosphine, phosphate, borate, or -A-Fn, wherein "A" is a divalent hydrocarbon moiety selected from alkylene and arylalkylene, wherein the alkyl portion of the alkylene and arylalkylene groups can be linear or branched, saturated or unsaturated, cyclic or acyclic, and substituted or unsubstituted, wherein the aryl portion of the arylalkylene can be substituted or unsubstituted, and wherein hetero atoms and/or functional groups may be present in either the aryl or the alkyl portions of the alkylene and arylalkylene groups, and Fn is a functional group, or any one or more of the R^{J1}, R^{J2}, R^{J3}, R^{J4}, R^{J5}, R^{J6}, R^{J7}, R^{J8}, R^{J9}, R^{J10}, and R^{J11} may be linked together to form a cyclic group, or any one or more of the R^{J1}, R^{J2}, R^{J3}, R^{J4}, R^{J5}, R^{J6}, R^{J7}, R^{J8}, R^{J9}, R^{J10}, and R^{J11} may be attached to a support.

Additionally, one preferred embodiment of the Group 8 transition metal complex of formula XVI is a Group 8 transition metal complex of formula (XVII): 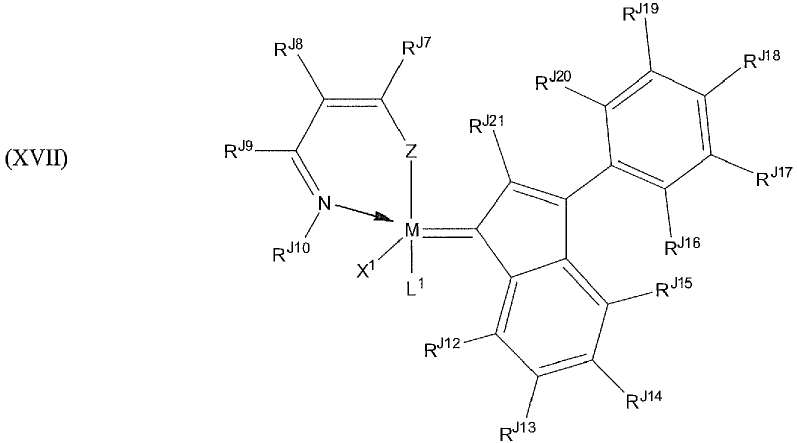
wherein M, X¹, L¹, Z, R^{J7}, R^{J8}, R^{J9}, R^{J10}, and R^{J11} are as defined above for Group 8 transition metal complex of formula XVI; and
R^{J12}, R^{J13}, R^{J14}, R^{J15}, R^{J16}, R^{J17}, R^{J18}, R^{J19}, R^{J20}, and R^{J21} are as defined above for R^{J1}, R^{J2}, R^{J3}, R^{J4}, R^{J5}, and R^{J6} for Group 8 transition metal complex of formula XVI, or any one or more of the R^{J7}, R^{J8}, R^{J9}, R^{J10}, R^{J11}, R^{J12}, R^{J13}, R¹¹⁴, R^{J15}, R^{J16}, R^{J17}, R^{J18}, R^{J19} R^{J20}, and R^{J21} may be linked together to form a cyclic group, or any one or more of the R^{J7}, R^{J8}, R^{J9}, R^{J10}, R^{J11}, R^{J12}, R^{J13}, R^{J14}, R^{J15}, R^{J16}, R^{J17}, R^{J18}, R^{J19}, R^{J20}, and R^{J21} may be attached to a support.

Additionally, another preferred embodiment of the Group 8 transition metal complex of formula XVI is a Group 8 transition metal complex of formula (XVIII): 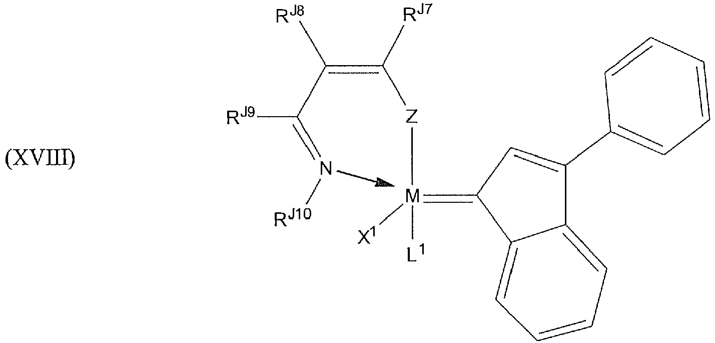 wherein M, X¹, L¹, Z, R^{J7}, R^{J8}, R^{J9}, R^{J10}, and R^{J11}, are as defined above for Group 8 transition metal complex of formula (XVI).

Additionally, another group of olefin metathesis catalysts that may be used in the invention disclosed herein, is a Group 8 transition metal complex having the structure of formula (XIX): 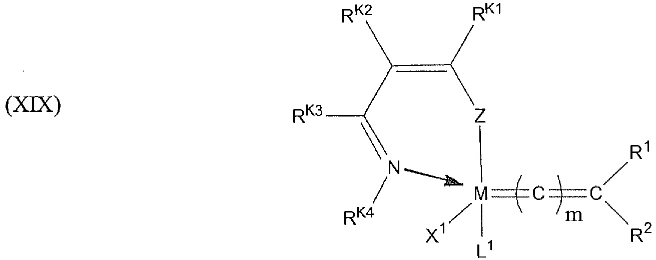
wherein M is a Group 8 transition metal, particularly ruthenium or osmium, or more particularly, ruthenium;
X¹, L¹, R¹, and R² are as defined for the first and second groups of catalysts defined above;
Z is selected from the group consisting of oxygen, sulfur, selenium, NR^{K5}, PR^{K5}, AsR^{K5}, and SbR^{K5};
m is 0, 1, or 2; and
R^{K1}, R^{K2}, R^{K3}, R^{K4}, and R^{K5} are each independently selected from the group consisting of hydrogen, halogen, alkyl, alkenyl, alkynyl, aryl, heteroalkyl, heteroatom containing alkenyl, heteroalkenyl, heteroaryl, alkoxy, alkenyloxy, aryloxy, alkoxycarbonyl, carbonyl, alkylamino, alkylthio, aminosulfonyl, monoalkylaminosulfonyl, dialkylaminosulfonyl, alkylsulfonyl, nitrile, nitro, alkylsulfinyl, trihaloalkyl, perfluoroalkyl, carboxylic acid, ketone, aldehyde, nitrate, cyano, isocyanate, thioisocyanate, cyanato, thiocyanato, hydroxyl, ester, ether, thioether, amine, alkylamine, imine, amide, halogen-substituted amide, trifluoroamide, sulfide, disulfide, sulfonate, carbamate, silane, siloxane, phosphine, phosphate, borate, or -A-Fn, wherein "A" is a divalent hydrocarbon moiety selected from alkylene and arylalkylene, wherein the alkyl portion of the alkylene and arylalkylene groups can be linear or branched, saturated or unsaturated, cyclic or acyclic, and substituted or unsubstituted, wherein the aryl portion of the arylalkylene can be substituted or unsubstituted, and wherein hetero atoms and/or functional groups may be present in either the aryl or the alkyl portions of the alkylene and arylalkylene groups, and Fn is a functional group, or any one or more of the R^{K1}, R^{K2}, R^{K3}, R^{K4}, and R^{K5} may be linked together to form a cyclic group, or any one or more of the R^{K1}, R^{K2}, R^{K3}, R^{K4}, and R^{K5} may be attached to a support.

In addition, catalysts of formulas (XVI) to (XIX) may be optionally contacted with an activating compound, where at least partial cleavage of a bond between the Group 8 transition metal and at least one Schiff base ligand occurs, wherein the activating compound is either a metal or silicon compound selected from the group consisting of copper (I) halides; zinc compounds of the formula Zn(R^{Y1})₂, wherein R^{Y1} is halogen, C₁-C₇ alkyl or aryl; tin compounds represented by the formula SnR^{Y2}R^{Y3}R^{Y4}R^{Y5} wherein each of R^{Y2}, R^{Y3}, R^{Y4} and R^{Y5} is independently selected from the group consisting of halogen, C₁-C₂₀ alkyl, C₃-C₁₀ cycloalkyl, aryl, benzyl and C₂-C₇ alkenyl; and silicon compounds represented by the formula SiR^{Y6}R^{Y7}R^{Y8}R^{Y9} wherein each of R^{Y6}, R^{Y7}, R^{Y8}, R^{Y9} is independently selected from the group consisting of hydrogen, halogen, C₁-C₂₀ alkyl, halo, C₁-C₇ alkyl, aryl, heteroaryl, and vinyl. In addition, catalysts of formulas (XVI) to (XIX) may be optionally contacted with an activating compound where at least partial cleavage of a bond between the Group 8 transition metal and at least one Schiff base ligand occurs, wherein the activating compound is an inorganic acid such as hydrogen iodide, hydrogen bromide, hydrogen chloride, hydrogen fluoride, sulfuric acid, nitric acid, iodic acid, periodic acid, perchloric acid, HOClO, HOClO₂ and HOIO₃. In addition, catalysts of formulas (XVI) to (XIX) may be optionally contacted with an activating compound where at least partial cleavage of a bond between the Group 8 transition metal and at least one Schiff base ligand occurs, wherein the activating compound is an organic acid such as sulfonic acids including but not limited to methanesulfonic acid, aminobenzenesulfonic acid, benzenesulfonic acid, napthalenesulfonic acid, sulfanilic acid and trifluoromethanesulfonic acid; monocarboxylic acids including but not limited to acetoacetic acid, barbituric acid, bromoacetic acid, bromobenzoic acid, chloroacetic acid, chlorobenzoic acid, chlorophenoxyacetic acid, chloropropionic acid, cis-cinnamic acid, cyanoacetic acid, cyanobutyric acid, cyanophenoxyacetic acid, cyanopropionic acid, dichloroacetic acid, dichloroacetylacetic acid, dihydroxybenzoic acid, dihydroxymalic acid, dihydroxytartaric acid, dinicotinic acid, diphenylacetic acid, fluorobenzoic acid, formic acid, furancarboxylic acid, furoic acid, glycolic acid, hippuric acid, iodoacetic acid, iodobenzoic acid, lactic acid, lutidinic acid, mandelic acid, α-naphtoic acid, nitrobenzoic acid, nitrophenylacetic acid, o-phenylbenzoic acid, thioacetic acid, thiophene-carboxylic acid, trichloroacetic acid, and trihydroxybenzoic acid; and other acidic substances such as but not limited to picric acid and uric acid.

In addition, other examples of catalysts that may be used with the present invention are located in the following diclosures, each of which is incorporated herein by reference, U.S. Pat. Nos. 7,687,635; 7,671,224 and 5,977,393; International Publication No. WO2010/037550; and U.S. Pat. Appl. Nos. 12/303,615; 10/590,380; 11/465,651 (Publication No.: US 2007/0043188); and 11/465,651 (Publication No. : US 2008/0293905 Corrected Publication). In addition, other examples of catalysts that may be used with the present invention are located in the following disclosures, each of which is incorporated herein by reference, U.S. Pat. Nos. 6,284,852 and 6,486,279; and European Pat. Nos. EP1757613B1 and EP1577282B1.

Non-limiting examples of catalysts that may be used to prepare supported complexes and in the reactions disclosed herein include the following, some of which for convenience are identified throughout this disclosure by reference to their molecular weight:

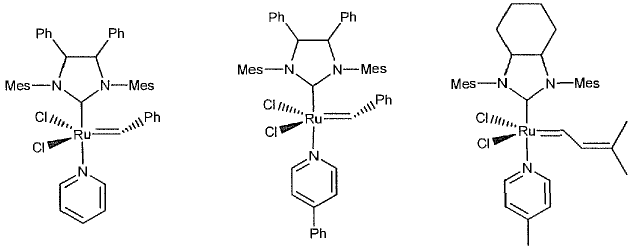

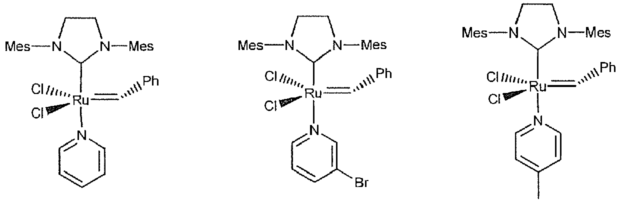

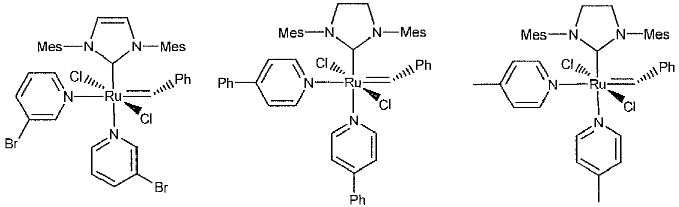

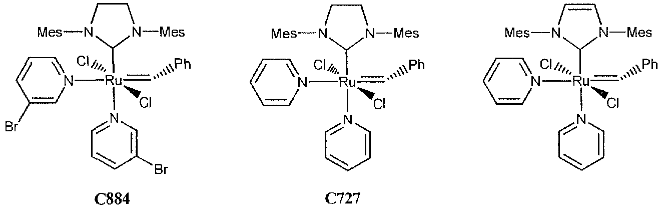

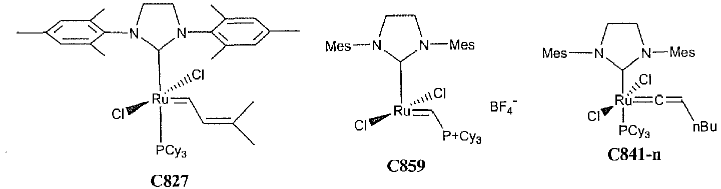

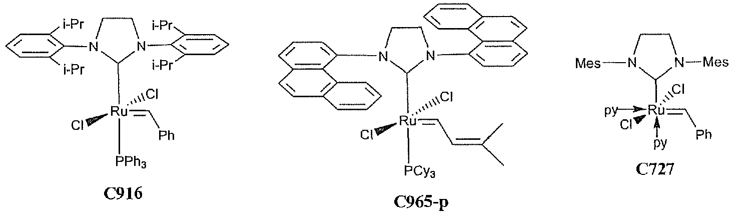

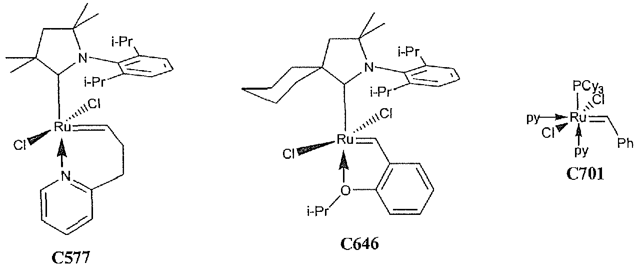

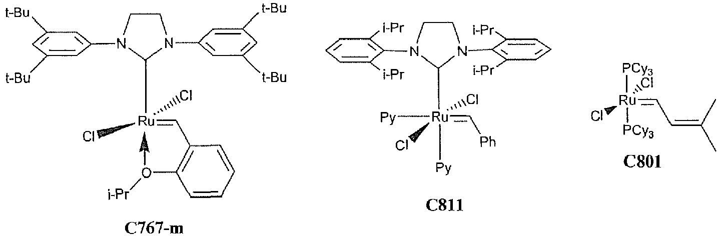

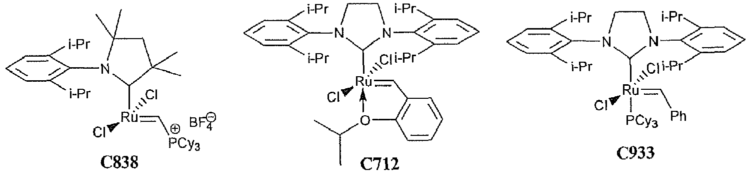

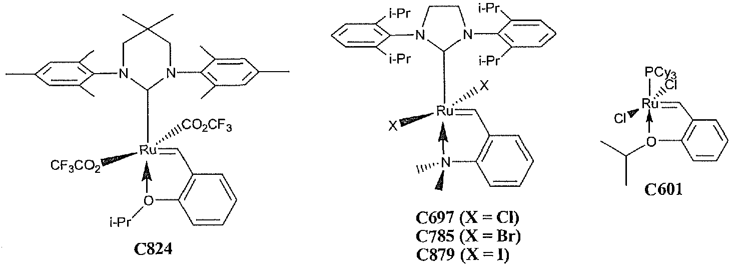

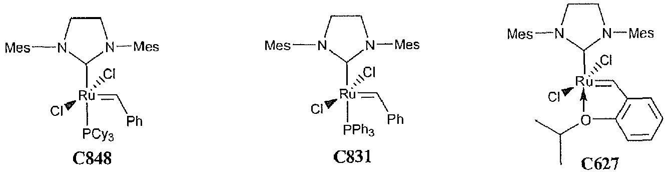

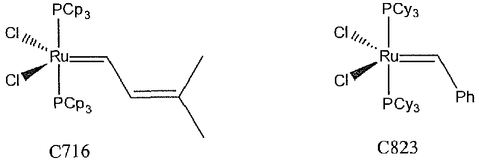

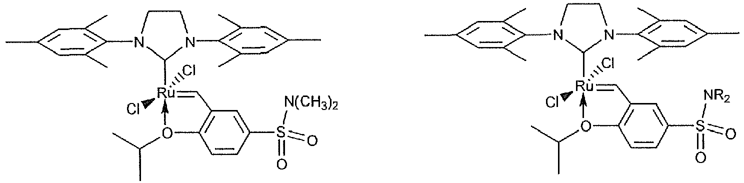

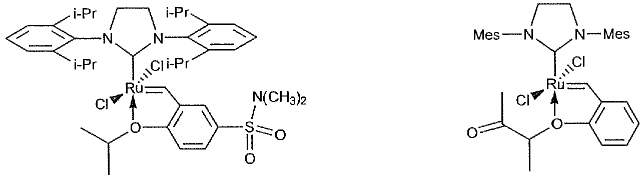

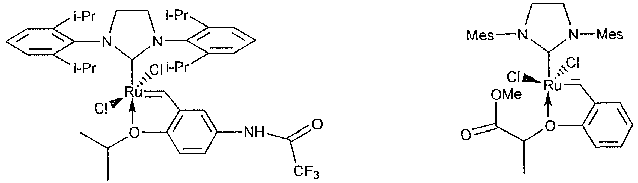

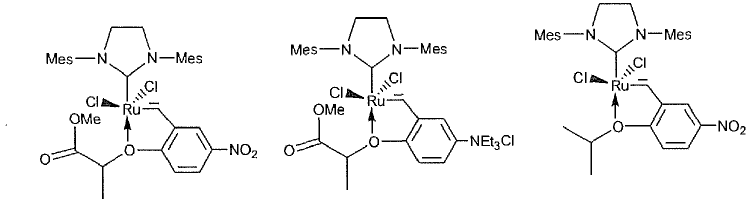

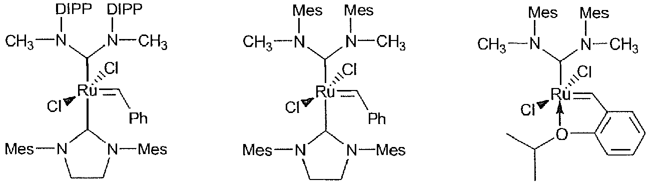

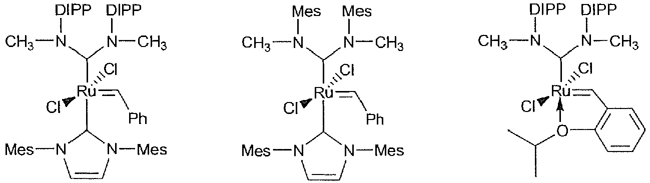

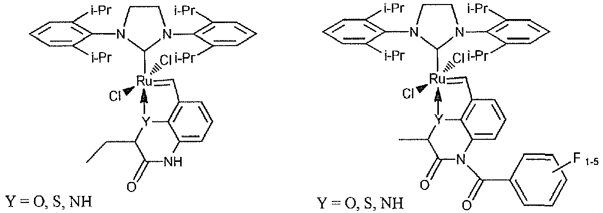

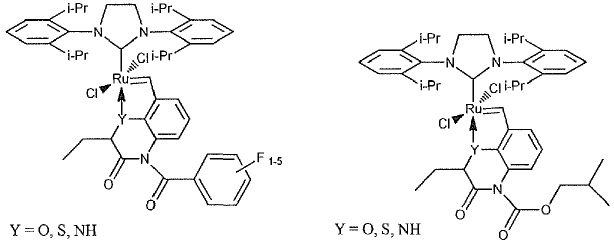

In the foregoing molecular structures and formulae, Ph represents phenyl, Cy represents cyclohexyl, Me represents methyl, Bu represents *n*-butyl, *i*-Pr represents isopropyl, py represents pyridine (coordinated through the N atom), Mes represents mesityl (i.e., 2,4,6-trimethylphenyl), DiPP represents 2,6-diisopropylphenyl, and MiPP respresents 2-isopropylphenyl. Additionally, t-Bu represents *tert*-butyl, Cp represents cyclopentyl, and DIPP also represents 2,6-diisopropylphenyl.

Further examples of catalysts useful to prepare supported complexes and in the reactions disclosed herein include the following: ruthenium (**II**) dichloro (3-methyl--2-butenylidene) bis(tricyclopentyl-phosphine) (C**716**); ruthenium (II) dichloro (3-methyl-2-butenylidene) bis(tricyclohexylphosphine) (C**801**); ruthenium (II) dichloro(phenylmethylene) bis(tricyclohexylphosphine) (C**823**); ruthenium (II) (1,3-bis-(2,4,6-trimethylphenyl)-2-imidazolidinylidene) dichloro (phenylmethylene) (triphenylphosphine) (C**830**), and ruthenium (II) dichloro (phenylvinylidene) bis(tricyclohexylphosphine) (C**835**); ruthenium (II) dichloro (tricyclohexylphosphine) (o-isopropoxyphenylmethylene) (C**601**), and ruthenium (II) (1,3-bis-(2, 4,6-trimethylphenyl)-2-imidazolidinylidene) dichloro (phenylmethylene) bis(3-bromopyridine) (C**884**)).

Still further catalysts useful in ROMP reactions, and/or in other metathesis reactions, such as ring-closing metathesis, cross metathesis, ring-opening cross metathesis, self-metathesis, ethenolysis, alkenolysis, acyclic diene metathesis polymerization, and combinations thereof, include the following structures:

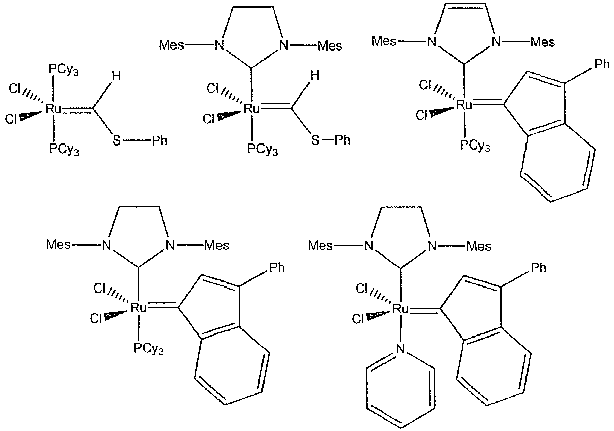

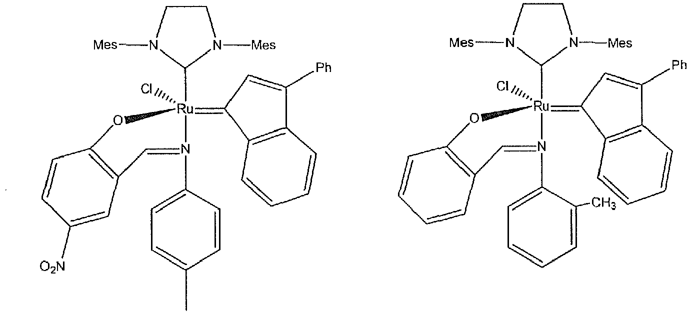

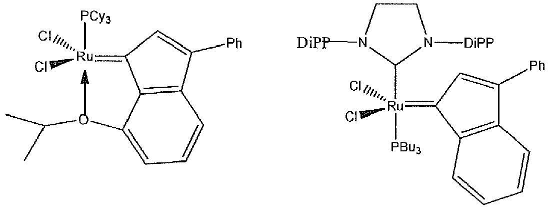

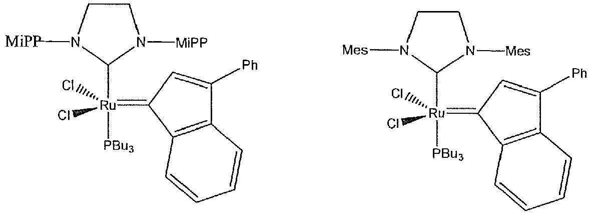

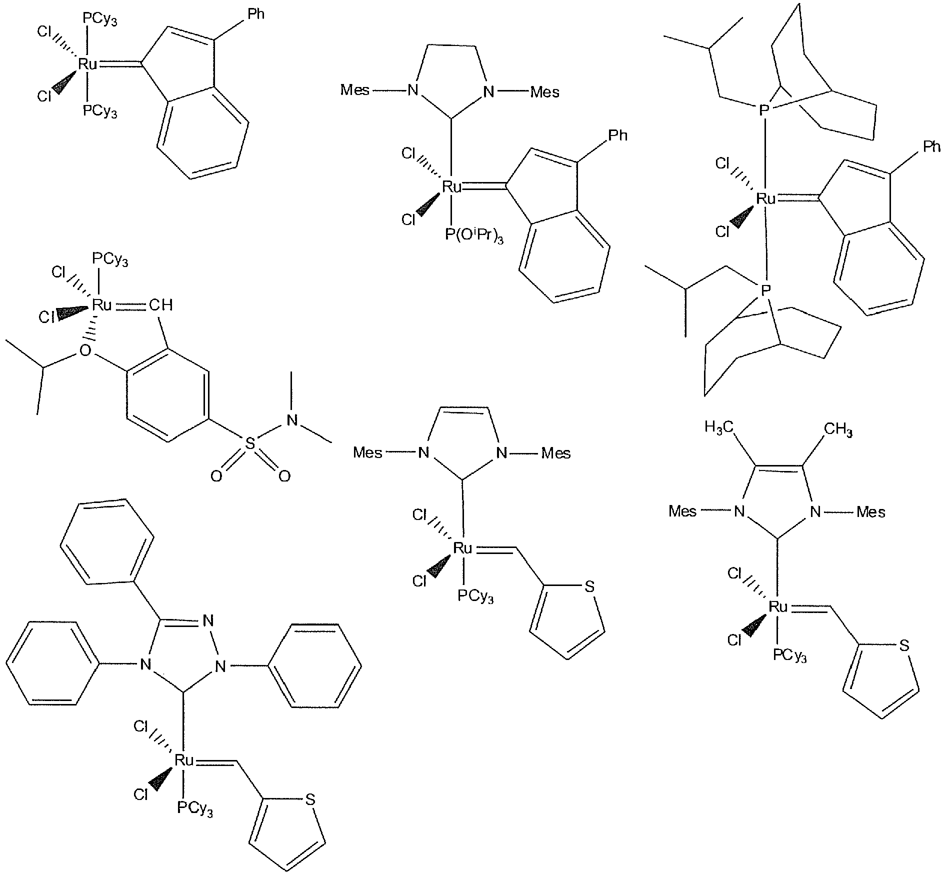

In general, the transition metal complexes used as catalysts herein can be prepared by several different methods, such as those described by Schwab et al. (1996) J. Am. Chem. Soc. 118:100-110, Scholl et al. (1999) Org. Lett. 6:953-956, Sanford et al. (2001) J. Am. Chem. Soc. 123:749-750, U.S. Pat. No. 5,312,940, and U.S. Pat. No. 5,342,909, the disclosures of each of which are incorporated herein by reference. Also see U.S. Pat. Pub. No. 2003/0055262 to Grubbs et al., WO 02/079208, and U.S. Pat. No. 6,613,910 to Grubbs et al., the disclosures of each of which are incorporated herein by reference. Preferred synthetic methods are described in WO 03/11455A1 to Grubbs et al., the disclosure of which is incorporated herein by reference.

Preferred olefin metathesis catalysts are Group 8 transition metal complexes having the structure of formula (I) commonly called "First Generation Grubbs" catalysts, formula (III) commonly called "Second Generation Grubbs" catalysts, or formula (VII) commonly called "Grubbs-Hoveyda" catalysts.

More preferred olefin metathesis catalyst has the structure of formula (I) 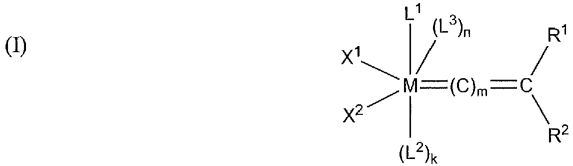 in which:
M is a Group 8 transition metal;
L¹, L², and L³ are neutral electron donor ligands;
n is 0 or 1;
m is 0,1, or 2;
k is 0 or 1;
X¹ and X² are anionic ligands;
R¹ and R² are independently selected from hydrogen, hydrocarbyl, substituted hydrocarbyl, heteroatom-containing hydrocarbyl, substituted heteroatom-containing hydrocarbyl, and functional groups,
wherein any two or more of X¹, X², L¹, L², L³, R¹, and R² can be taken together to form one or more cyclic groups, and futher wherein any one or more of X¹, X², L¹, L², L³, R¹, and R² may be attached to a support.

Most preferred olefin metathesis catalyst has the structure of formula (I) 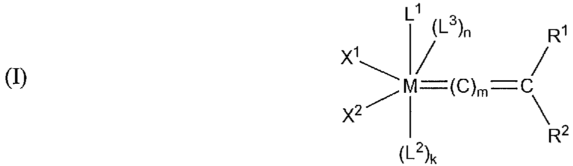 in which:
M is ruthenium;
n is 0;
m is 0;
k is 1;
L¹ and L² are trisubstituted phosphines independently selected from the group consisting of tri-n-butylphosphine (Pn-Bu₃), tricyclopentylphosphine (PCp₃), tricyclohexylphosphine (PCy₃), triisopropylphosphine (P-i-Pr₃), triphenylphosphine (PPh₃), methyldiphenylphosphine (PMePh₂), dimethylphenylphosphine (PMe₂Ph), and diethylphenylphosphine (PEt₂Ph); or L¹ is an N-heterocyclic carbene selected from the group consisting of 1,3-bis(2,4,6-trimethylphenyl)-2-imidazolidinylidene, 1,3-bis(2,4,6-trimethylphenyl)imidazol-2-ylidene, 1,3-bis(2,6-di-isopropylphenyl)-2-imidazolidinylidene, and 1,3-bis(2,6-di-isopropylphenyl)imidazol-2-ylidene and L² is a trisubstituted phosphine selected from the group consisting of tri-n-butylphosphine (Pn-Bu₃), tricyclopentylphosphine (PCp₃), tricyclohexylphosphine (PCy₃), triisopropylphosphine (P-i-Pr₃), triphenylphosphine (PPh₃), methyldiphenylphosphine (PMePh₂), dimethylphenylphosphine (PMe₂Ph), and diethylphenylphosphine (PEt₂Ph);
X¹ and X² are chloride;
R¹ is hydrogen and R² is phenyl or -CH=C(CH₃)₂ or thienyl; or R¹ and R² are taken together to form 3-phenyl-1H-indene.Suitable supports for any of the catalysts described herein may be of synthetic, semi-synthetic, or naturally occurring materials, which may be organic or inorganic, e.g., polymeric, ceramic, or metallic. Attachment to the support will generally, although not necessarily, be covalent, and the covalent linkage may be direct or indirect. Indirect covalent linkages are typically, though not necessarily, through a functional group on a support surface. Ionic attachments are also suitable, including combinations of one or more anionic groups on the metal complexes coupled with supports containing cationic groups, or combinations of one or more cationic groups on the metal complexes coupled with supports containing anionic groups.

When utilized, suitable supports may be selected from silicas, silicates, aluminas, aluminum oxides, silica-aluminas, aluminosilicates, zeolites, titanias, titanium dioxide, magnetite, magnesium oxides, boron oxides, clays, zirconias, zirconium dioxide, carbon, polymers, cellulose, cellulosic polymers amylose, amylosic polymers, or a combination thereof. The support preferably comprises silica, a silicate, or a combination thereof.

In certain embodiments, it is also possible to use a support that has been treated to include functional groups, inert moieties, and/or excess ligands. Any of the functional groups described herein are suitable for incorporation on the support, and may be generally accomplished through techniques known in the art. Inert moieties may also be incorporated on the support to generally reduce the available attachment sites on the support, e.g., in order to control the placement, or amount, of a complex linked to the support.

The metathesis catalysts that are described *infra* may be utilized in olefin metathesis reactions according to techniques known in the art. The catalyst is typically added to the resin composition as a solid, a solution, or as a suspension. When the catalyst is added to the resin composition as a suspension, the catalyst is suspended in a dispersing carrier such as mineral oil, paraffin oil, soybean oil, triisopropylbenzene, or any hydrophobic liquid which has a sufficiently high viscosity so as to permit effective dispersion of the catalyst, and which is sufficiently inert and which has a sufficiently high boiling point so that is does not act as a low-boiling impurity in the olefin metathesis reaction. It will be appreciated that the amount of catalyst that is used (i.e., the "catalyst loading") in the reaction is dependent upon a variety of factors such as the identity of the reactants and the reaction conditions that are employed. It is therefore understood that catalyst loading may be optimally and independently chosen for each reaction. In general, however, the catalyst will be present in an amount that ranges from a low of about 0.1 ppm, 1 ppm, or 5 ppm, to a high of about 10 ppm, 15 ppm, 25 ppm, 50 ppm, 100 ppm, 200 ppm, 500 ppm, or 1000 ppm relative to the amount of an olefinic substrate.

The catalyst will generally be present in an amount that ranges from a low of about 0.00001 mol%, 0.0001 mol%, or 0.0005 mol%, to a high of about 0.001 mol%, 0.0015 mol%, 0.0025 mol%, 0.005 mol%, 0.01 mol%, 0.02 mol%, 0.05 mol%, or 0.1 mol% relative to the olefinic substrate.

When expressed as the molar ratio of monomer to catalyst, the catalyst (the "monomer to catalyst ratio"), loading will generally be present in an amount that ranges from a low of about 10,000,000:1, 1,000,000:1, or 200,00:1, to a high of about 100,000:1 66,667:1, 40,000:1, 20,000:1, 10,000:1, 5,000:1, or 1,000:1.

### Resin Compositions

Resin compositions that may be used in the present invention disclosed herein generally comprise one or more cyclic olefins. The cyclic olefins described hereinabove are suitable for use and may be functionalized or unfunctionalized, and may be substituted or unsubstituted. Additionally, resin compositions according to the invention may comprise one or more cyclic olefins and an olefin metathesis catalyst. Additionally, resin compositions according to the invention may also comprise one or more cyclic olefins, where the resin composition is combined with an olefin metathesis catalyst.

Resin compositions of the invention may be optionally formulated with additives. Suitable additives include, but are not limited to, gel modifiers, hardness modulators, antioxidants, antiozonants, stabilizers, fillers, binders, coupling agents, thixotropes, impact modifiers, elastomers, wetting agents, biocides, plasticizers, pigments, flame retardants, dyes, fibers and reinforcement materials, including sized reinforcements and substrates, such as those treated with finishes, coatings, coupling agents, film formers and/or lubricants. Furthermore, the amount of additives present in the resin compositions may vary depending on the particular type of additive used. The concentration of the additives in the resin compositions typically ranges from, for example, 0.001-85 percent by weight, particularly, from 0.1-75 percent by weight, or even more particularly, from 2-60 percent by weight.

Suitable impact modifiers or elastomers include without limitation natural rubber, butyl rubber, polyisoprene, polybutadiene, polyisobutylene, ethylene-propylene copolymer, styrene-butadienestyrene triblock rubber, random styrene-butadiene rubber, styrene-isoprene-styrene triblock rubber, styrene-ethylene/butylene-styrene copolymer, styrene-ethylene/propylene-styrene copolymer, ethylene-propylene-diene terpolymers, ethylene-vinyl acetate and nitrile rubbers. Preferred impact modifiers or elastomers are polybutadiene Diene 55AC10 (Firestone), polybutadiene Diene 55AM5 (Firestone), EPDM Royalene 301T, EPDM Buna T9650 (Bayer), styrene-ethylene/butylene-styrene copolymer Kraton G1651H, Polysar Butyl 301 (Bayer), polybutadiene Taktene 710 (Bayer), styrene-ethylene/butylene-styrene Kraton G1726M, Ethylene-Octene Engage 8150 (DuPont-Dow), styrene-butadiene Kraton D1184, EPDM Nordel 1070 (DuPont-Dow), and polyisobutylene Vistanex MML-140 (Exxon). Such materials are normally employed in the resin composition at levels of about 0.10 phr to 10 phr, but more preferably at levels of about 0.1 phr to 5 phr. Various polar impact modifiers or elastomers can also be used.

Antioxidants and antiozonants include any antioxidant or antiozonant used in the rubber or plastics industry. An "Index of Commercial Antioxidants and Antiozonants, Fourth Edition" is available from Goodyear Chemicals, The Goodyear Tire and Rubber Company, Akron, Ohio 44316. Suitable stabilizers (i.e. antioxidants or antiozonants) include without limitation: 2,6-di-tert-butyl-4-methylphenol (BHT); styrenated phenol, such as Wingstay S (Goodyear); 2- and 3-tert-butyl-4-methoxyphenol; alkylated hindered phenols, such as Wingstay C (Goodyear); 4-hydroxymethyl-2,6-di-tert-butylphenol; 2,6-di-tert-butyl-4-sec-butylphenol; 2,2'-methylenebis(4-methyl-6-tert-butylphenol); 2,2'-methylenebis(4-ethyl-6-tert-butylphenol); 4,4'-methylenebis(2,6-di-tert-butylphenol); miscellaneous bisphenols, such as Cyanox 53 and Permanax WSO; 2,2'-ethylidenebis(4,6-di-tert-butylphenol); 2,2'-methylenebis(4-methyl-6-(1-methylcyclohexyl)phenol); 4,4'-butylidenebis(6-tert-butyl-3-methylphenol); polybutylated Bisphenol A; 4,4'-thiobis(6-tert-butyl-3-methylphenol); 4,4'-methylenebis(2,6-dimethylphenol); 1,1'-thiobis(2-naphthol); methylene bridged polyaklylphenol, such as Ethyl antioxidant 738; 2,2'-thiobis(4-methyl-6-tert-butylphenol); 2,2'-isobutylidenebis(4,6-dimethylphenol); 2,2'-methylenebis(4-methyl-6-cyclohexylphenol); butylated reaction product of p-cresol and dicyclopentadiene, such as Wingstay L; tetrakis(methylene-3,5-di-tert-butyl-4-hydroxyhydrocinnamate)methane, i.e., Irganox 1010; 1,3,5-trimethyl-2,4,6-tris(3,5-di-tert-butyl-4-hydroxybenzyl)benzene, e.g., Ethanox 330; 4,4'-methylenebis (2,6-di-tertiary-butylphenol), e.g. Ethanox 4702 or Ethanox 4710; 1,3,5-tris(3,5-di-tert-butyl-4-hydroxybenzyl)isocyanurate, i.e., Good-rite 3114, 2,5-di-tert-amylhydroquinone, tert-butylhydroquinone, tris(nonylphenylphosphite), bis(2,4-di-tert-butyl)pentaerythritol)diphosphite, distearyl pentaerythritol diphosphite, phosphited phenols and bisphenols, such as Naugard 492, phosphite/phenolic antioxidant blends, such as Irganox B215; di-n-octadecyl(3,5-di-tert-butyl-4-hydroxybenzyl)phosphonate, such as Irganox 1093; 1,6-hexamethylene bis(3-(3,5-di-tert-butyl-4-hydroxyphenylpropionate), such as Irganox 259, and octadecyl-3,5-di-tert-butyl-4-hydroxyhydrocinnamate, i.e., Irganox 1076, tetrakis(2,4-di-tert-butylphenyl)4,4'-biphenylylenediphosp honite, diphenylamine, and 4,4'-diemthoxydiphenylamine. Such materials are normally employed in the resin composition at levels of about 0.10 phr to 10 phr, but more preferably at levels of about 0.1 phr to 5 phr.

Suitable reinforcing materials include those that add to the strength or stiffness of a polymer composite when incorporated with the polymer. Reinforcing materials can be in the form of filaments, fibers, rovings, mats, weaves, fabrics, knitted material, cloth, or other known structures. Suitable reinforcement materials include glass fibers and fabrics, carbon fibers and fabrics, aramid fibers and fabrics, polyolefin fibers or fabrics (including ultrahigh molecular weight polyethylene fabrics such as those produced by Honeywell under the Spectra trade name), and polyoxazole fibers or fabrics (such as those produced by the Toyobo Corporation under the Zylon trade name).

Other suitable fillers include, for example, metallic density modulators, microparticulate density modulators, such as, for example, microspheres, and macroparticulate density modulators, such as, for example, glass or ceramic beads. Metallic density modulators include, but are not limited to, powdered, sintered, shaved, flaked, filed, particulated, or granulated metals, metal oxides, metal nitrides, and/or metal carbides, and the like. Preferred metallic density modulators include, among others, tungsten, tungsten carbide, aluminum, titanium, iron, lead, silicon oxide, aluminum oxide, boron carbide, and silicon carbide. Microparticulate density modulators include, but are not limited to, glass, metal, thermoplastic (either expandable or pre-expanded) or thermoset, and/or ceramic/silicate microspheres. Macroparticulate density modulators include, but are not limited to, glass, plastic, or ceramic beads; metal rods, chunks, pieces, or shot; hollow glass, ceramic, plastic, or metallic spheres, balls, or tubes; and the like.

The invention is also directed to electrolytic cell covers and other articles manufactured from a resin composition comprising a cyclic olefin and a catalyst comprising a Group 8 olefin metathesis catalyst, such as a ROMP catalyst, using the methods of the invention. Furthermore, the electrolytic cell covers, and other articles of manufacture of the invention are not limited to a single polymer-surface interface but include also multilayers and laminates containing multiple polymer-surface interfaces. The invention is also suitable for manufacture electrolytic cell covers and other articles by the infusion of the resin composition or polymerizable composition into a porous material. Such porous materials include but are not limited to wood, cement, concrete, open-cell and reticulated foams and sponges, papers, cardboards, felts, ropes or braids of natural or synthetic fibers, and various sintered materials.

In a preferred embodiment, the metathesis reactions disclosed herein are carried out under a dry, inert atmosphere. Such an atmosphere may be created using any inert gas, including such gases as nitrogen and argon. The use of an inert atmosphere is optimal in terms of promoting catalyst activity, and reactions performed under an inert atmosphere typically are performed with relatively low catalyst loading. The reactions disclosed herein may also be carried out in an oxygen-containing and/or a water-containing atmosphere, and in one embodiment, the reactions are carried out under ambient conditions. The presence of oxygen or water in the reaction may, however, necessitate the use of higher catalyst loadings as compared with reactions performed under an inert atmosphere. Where the vapor pressure of the reactants allows, the reactions disclosed herein may also be carried out under reduced pressure.

The reactions disclosed herein may be carried out in a solvent, and any solvent that is inert towards cross-metathesis may be employed. Generally, solvents that may be used in the metathesis reactions include organic, protic, or aqueous solvents, such as aromatic hydrocarbons, chlorinated hydrocarbons, ethers, aliphatic hydrocarbons, alcohols, water, or mixtures thereof. Example solvents include benzene, toluene, p-xylene, methylene chloride, 1,2-dichloroethane, dichlorobenzene, chlorobenzene, tetrahydrofuran, diethylether, pentane, methanol, ethanol, water, or mixtures thereof. In a preferred embodiment, the reactions disclosed herein are carried out neat, i.e., without the use of a solvent.

It will be appreciated that the temperature at which a metathesis reaction according to methods disclosed herein is conducted can be adjusted as needed, and may be at least about -78°C, -40°C, -10°C, 0°C, 10°C, 20°C, 25°C, 35°C, 50°C, 70°C, 100°C, or 150°C, or the temperature may be in a range that has any of these values as the upper or lower bounds. In a preferred embodiment, the reactions are carried out at a temperature of at least about 35°C, and in another preferred embodiment, the reactions are carried out at a temperature of at least about 50°C.

It is to be understood that while the invention has been described in conjunction with specific embodiments thereof, the description above as well as the examples that follow are intended to illustrate and not limit the scope of the invention. Other aspects, advantages, and modifications within the scope of the invention will be apparent to those skilled in the art to which the invention pertains.

### EXPERIMENTAL

### Example 1

This example demonstrates the manufacture of an article within the scope of the present invention, particularly an electrolytic cell cover. An electrolytic cell cover having a weight of approximately 550 lbs. was molded from a resin composition polymerized with a Group 8 olefin metathesis catalyst. The resin composition was (i) Ultrene® 99 Polymer Grade DCPD (containing 6% tricyclopentadiene); (ii) 2 phr Ethanox® 4702; and (iii) 4 phr Kraton® G1651H. The Group 8 olefin metathesis catalyst was ruthenium catalyst[1,3-bis-(2,4,6-trimethylphenyl)-2-imidazolidinylidene]dichloro(3-methyl-2-butenylidene)(tricyclohexylphosphine) ruthenium (II) (C**827**, available from Materia, Inc.) (monomer to catalyst ratio 60,000:1) suspended in mineral oil (Crystal Plus 500FG) containing 2 phr Cab-o-sil TS610. The electrolytic cell cover was molded in an aluminum mold. The mold comprised two aluminum sections, one male section to define the interior (core) of the electrolytic cell cover and one female section to define the exterior (cavity) of the electrolytic cell cover. Both the male and female sections of the mold contained heating/cooling channels for the circulation of liquid (water/propylene glycol mixture) to control the mold temperature. The mold had a width of approximately 5 feet, a length of approximately 5 feet, and a height of approximately 3 feet 6 inches. The two mold sections (male and female) were held together by a series of latch action manual clamps. The mold was gated at the bottom, where the top of the electrolytic cell cover is defined and a plurality of vents (4) were distributed on the top of the mold, where the flanged base of the electrolytic cell cover is defined. The resin composition was combined at a single mix head with the catalyst suspension at a 100:2 volume ratio (resin composition : catalyst suspension) and injected into the mold by the use of a three component reaction injection molding (RIM) machine provided by Gusmer. The resin composition was injected from the reaction injection molding (RIM) machine at a continuous rate of approximately 131.3 lb/min at an injection pressure of 800 -1200 psig. The catalyst suspension was injected from the reaction injection molding (RIM) machine at a continuous rate of approximately 2.7 lb/min at an injection pressure of 800 - 1200 psig. The mold was inclined at less than 10 degrees compound angle. The female section of the mold (cavity) was 120 °F and the male section of the mold (core) was 80.8 °F. The resin composition was 70 °F in the day tank immediately prior to injection. The catalyst suspension was 88 °F in the catalyst dispensing tank immediately prior to injection. The mold was filled in 3 minutes 59 seconds (shot time). The time to exotherm (smoke time) for the reactive formulation was observed at 26 minutes 10 seconds. The molded electrolytic cell cover was demolded after 56 minutes and allowed to cool to ambient temperature. Using a hand-held portable light source, the translucent molded electrolytic cell cover was visually inspected for structural defects and imperfections; surface (external) imperfections (e.g. bubbles or unwanted voids); and subsurface (internal) imperfections (e.g. bubbles or unwanted voids). No structural imperfections, surface (external) imperfections, or subsurface (internal) imperfections were observed.

### Example 2

This example demonstrates the manufacture of an article within the scope of the present invention. An electrolytic cell cover having a weight of approximately 550 lb was molded from a resin composition polymerized with a Group 8 olefin metathesis catalyst. The resin composition comprising (i) Ultrene® 99 Polymer Grade DCPD (containing 6% tricyclopentadiene); (ii) 2 phr Ethanox® 4702; and (iii) 4 phr Kraton® G1651H. The Group 8 olefin metathesis catalyst was ruthenium catalyst [1,3-bis-(2,4,6-trimethylphenyl)-2-imidazolidinylidene]dichloro(3-methyl-2-butenylidene)(tricyclohexylphosphine) ruthenium (II) (C**827**, available from Materia, Inc.) (monomer to catalyst ratio 60,000:1) suspended in mineral oil (Crystal Plus 500FG) containing 2phr Cab-o-sil TS610. The electrolytic cell cover was molded in an aluminum mold. The mold comprised two aluminum sections, one male section to define the interior (core) of the electrolytic cell cover and one female section to define the exterior (cavity) of the electrolytic cell cover. Both the male and female sections of the mold contained heating/cooling channels for the circulation of liquid (water/propylene glycol mixture) to control the mold temperature. The mold had a width of approximately 5 feet, a length of approximately 5 feet, and a height of approximately 3 feet 6 inches. The two mold sections (male and female) were held together by a series of latch action manual clamps. The mold was gated at the bottom, where the top of the electrolytic cell cover is defined and a plurality of vents (4) were distributed on the top of the mold, where the flanged base of the electrolytic cell cover is defined. The resin composition was combined at a single mix head with the catalyst suspension at a 100:2 volume ratio (resin composition : catalyst suspension) and injected into the mold by the use of a three component reaction injection molding (RIM) machine provided by Gusmer. The resin composition was injected from the reaction injection molding (RIM) machine at a continuous rate of approximately 130.5 lb/min at an injection pressure of 800 -1200 psig. The catalyst suspension was injected from the reaction injection molding (RIM) machine at a continuous rate of approximately 2.7 lb/min at an injection pressure of 800 - 1200 psig. The mold was inclined at less than 10 degrees compound angle. The female section of the mold (cavity) was 118 °F and the male section of the mold (core) was 86.8 °F. The resin composition was 66 °F in the day tank immediately prior to injection. The catalyst suspension was 94 °F in the catalyst dispensing tank immediately prior to injection. The mold was filled in 4 minutes 2 seconds (shot time). The time to exotherm (smoke time) for the reactive formulation was observed at 12 minutes 10 seconds. The molded electrolytic cell cover was demolded after 30 minutes 0 seconds and allowed to cool to ambient temperature. Using a hand-held portable light source, the translucent molded electrolytic cell cover was visually inspected for structural defects and imperfections; surface (external) imperfections (e.g. bubbles or unwanted voids); and subsurface (internal) imperfections (e.g. bubbles or unwanted voids). No structural imperfections, surface (external) imperfections, or subsurface (internal) imperfections were observed.

### Example 3

This example demonstrates the manufacture of an article within the scope of the present invention. An electrolytic cell cover having a weight of approximately 880 lb was molded from a resin composition polymerized with a Group 8 olefin metathesis catalyst. The resin composition comprising (i) Ultrene® 99 Polymer Grade DCPD (containing 6% tricyclopentadiene); (ii) 2 phr Ethanox® 4702; and (iii) 4 phr Kraton® G1651H. The Group 8 olefin metathesis catalyst was ruthenium catalyst [1,3-bis-(2,4,6-trimethylphenyl)-2-imidazolidinylidene]dichloro(3-methyl-2-butenylidene)(tricyclohexylphosphine) ruthenium (II) (C**827**, available from Materia, Inc.) (monomer to catalyst ratio 60,000:1) suspended in mineral oil (Crystal Plus 500FG) containing 2 phr Cab-o-sil TS610. The electrolytic cell cover was molded in a composite mold. The mold comprised two composite sections, one male section to define the interior (core) of the electrolytic cell cover and one female section to define the exterior (cavity) of the electrolytic cell cover. Both the male and female sections of the mold contained heating/cooling channels for the circulation of liquid (water/propylene glycol mixture) to control the mold temperature. The mold had a width of approximately 5 feet, a length of approximately 8 feet, and a height of approximately 4 feet. The two mold sections (male and female) were held together by a series of latch action manual clamps. The mold was gated at the bottom, where the top of the electrolytic cell cover is defined and a plurality of vents (4) were distributed on the top of the mold, where the flanged base of the electrolytic cell cover is defined. The resin composition was combined at a single mix head with the catalyst suspension at a 100:2 volume ratio (resin composition : catalyst suspension) and injected into the mold by the use of a three component reaction injection molding (RIM) machine provided by Gusmer. The resin composition was injected from the reaction injection molding (RIM) machine at a continuous rate of approximately 131.6 lb/min at an injection pressure of 800 -1200 psig. The catalyst suspension was injected from the reaction injection molding (RIM) machine at a continuous rate of approximately 2.7 lb/min at an injection pressure of 800 - 1200 psig. The mold was inclined at less than 10 degrees compound angle. The female section of the mold (cavity) was 93°F and the male section of the mold (core) was 73 °F. The resin composition was 70 °F in the day tank immediately prior to injection. The catalyst suspension was 90 °F in the catalyst dispensing tank immediately prior to injection. The mold was filled in 6 minutes 30 seconds (shot time). The time to exotherm (smoke time) for the reactive formulation was observed at 42 minutes 34 seconds. The molded electrolytic cell cover was demolded after 57 minutes 0 seconds. and allowed to cool to ambient temperature. Using a hand-held portable light source, the translucent molded electrolytic cell cover was visually inspected for structural defects and imperfections; surface (external) imperfections (e.g. bubbles or unwanted voids); and subsurface (internal) imperfections (e.g. bubbles or unwanted voids). No structural imperfections, surface (external) imperfections, or subsurface (internal) imperfections were observed.

### Example 4

Eight (10" x 10" x 1") blocks (Samples B-I) were cast in an aluminum mold (10" x 10" x 1") according to Table 2. Each resin composition (B-I) in Table 2 additionally contained 2 phr Ethanox® 4702 and 4 phr Kraton® G1651H and was polymerized with Group 8 olefin metathesis catalyst [1,3-bis-(2,4,6-trimethylphenyl)-2-imidazolidinylidene]dichloro(3-methyl-2-butenylidene)(tricyclohexylphosphine) ruthenium (II) (C**827**, available from Materia, Inc.) suspended in mineral oil (Crystal Plus 70FG). Resin compositions (B-E) and (F-I) were polymerized using a monomer to catalyst ratio of 60,000:1 and 30,000:1, respectively. Samples B - I were not post-cured. NR means not reported.

**Table 2.**

| Sample ID | Resin Composition | Resin Temperature (°C) | Mold Temperature (°C) |
|---|---|---|---|
| B | Ultrene® 99 DCPD (containing 5% tricyclopentadiene) | 17 | 48 |
| C | Ultrene® 99 DCPD (containing 10% tricyclopentadiene) | 19 | 41 |
| D | RIMTEC DCPD (containing 10% tricyclopentadiene) | 13 | 45 |
| E | Ultrene® 99 DCPD (containing 24% tricyclopentadiene) | 15 | 39 |
| F | Ultrene® 99 DCPD (containing 5% tricyclopentadiene) | 20 | 45 |
| G | Ultrene® 99 DCPD (containing 24% tricyclopentadiene) | 14 | 26 |
| H | Ultrene® 99 DCPD (containing 10% tricyclopentadiene) | 17 | 25 |
| I | RIMTEC DCPD (containing 10% tricyclopentadiene) | 18 | NR |

Four test specimens having dimensions (5.5" x 2.5" x 1") were cut from each of the aforementioned (10" x 10" x 1") blocks. As an experimental control, four test specimens having dimensions (5.5" x 2.5" x 1") were cut from a freshly molded electrolytic cell cover using commercially available Telene® DCPD resin (Grade 1650). The Telene® 1650 control specimens and the test specimens from each resin composition (B - I) were subjected to both aqueous anolyte and chlorine gas in accordance with normal test procedures using a bench scale apparatus designed to mimic an industrial or commercial scale electrolytic cell for the electrolysis of brine. One of the four Telene® 1650 control specimens and one of the four test specimens from each resin composition (B - I) were submerged in the aqueous anolyte solution. In addition, in an effort to measure the effects of chlorine gas on the test specimens, one of the four Telene® 1650 control specimens and one of the four test specimens from each resin composition (B - I) were suspended above the aqueous anolyte. Upon completion of the exposure period, the Telene® 1650 control specimens and the test specimens from each resin composition (B - I) were visually inspected for defects. Defects include cracking or cratering of the test specimen surface. Following exposure, the Telene® 1650 control specimens had a white chalk-like surface, whereas the test specimens from each resin composition (B - I) were discolored but did not have the same white chalk-like surface. The results from the visual inspection are shown below in Table 3.

**Table 3.**

| Test Specimen ID | Corrosion Environment | Visually Observed Defects | Initial Weight (grams) | Weight Change (%) |
|---|---|---|---|---|
| Telene® 1650 | Aqueous Anolyte | No | 276.543 | 0.39 |
| | Chlorine Gas | No | 269.221 | 0.51 |
| B | Aqueous Anolyte | No | 239.848 | 0.46 |
| | Chlorine Gas | No | 230.851 | 0.45 |
| C | Aqueous Anolyte | No | 241.622 | 0.45 |
| | Chlorine Gas | No | 232.567 | 0.46 |
| D | Aqueous Anolyte | No | 240.448 | 0.43 |
| | Chlorine Gas | Yes | 237.571 | 0.44 |
| E | Aqueous Anolyte | Yes | 238.252 | 0.45 |
| | Chlorine Gas | No | 237.280 | 0.39 |
| F | Aqueous Anolyte | No | 233.083 | 0.44 |
| | Chlorine Gas | No | 245.975 | 0.43 |
| G | Aqueous Anolyte | Yes | 252.555 | 0.43 |
| | Chlorine Gas | No | 259.001 | 0.48 |
| H | Aqueous Anolyte | No | 252.839 | 0.24 |
| | Chlorine Gas | No | 246.385 | 0.42 |
| I | Aqueous Anolyte | No | 254.312 | 0.46 |
| | Chlorine Gas | No | 242.556 | 0.41 |

The Telene® 1650 control specimens and three test specimens (B - D) from the aforementioned exposure test, Example 4, were selected for further analysis via optical microscopy. Cross sectional samples of the Telene® 1650 control specimens and test specimens (B - D) were polished and analyzed to determine the thickness of the discoloration layer from the exposed surface of the specimen. The Telene® 1650 control specimens and the test specimens (B - D) were analyzed via dark field illumination at 50x magnification. The results from the optical microscopy inspection for the Telene® 1650 control specimens and test specimens (B - D) showing the approximate thickness of the discoloration layer in microns (um) for each test environment (aqueous anolyte or chlorine gas) are shown below in Table 4. According to the data in Table 4, the Telene® 1650 control specimens had a thicker discoloration layer for each test environment (anolyte and gas) than the three test specimens (B - D). This quantifiable decrease in corrosion related degradation for test specimens (B - D) enables the manufacture of electrolytic cell covers and other molded articles of the present invention which (i) have a longer service life in chlor-alkali conditions; (ii) can be designed to have thinner portions, walls, or cross sections; and (iii) are lighter in weight.

**Table 4.**

| Test Specimen ID | Corrosion Environment | Thickness of Discoloration Layer (um) |
|---|---|---|
| Telene® | Aqueous Anolyte | 800 |
| | Chlorine Gas | 700 |
| B | Aqueous Anolyte | 650 |
| | Chlorine Gas | 400 |
| C | Aqueous Anolyte | 450 |
| | Chlorine Gas | 500 |
| D | Aqueous Anolyte | 500 |
| | Chlorine Gas | 600 |

The Telene® 1650 control specimens and three test specimens (B - D) from the aforementioned exposure test, Example 4, were selected for further analysis via Electron Dispersion Spectroscopy to determine the depth of chlorine penetration in the exposed specimens. The results from the Electron Dispersion Spectroscopy for the Telene® 1650 control specimens and test specimens (B - D) showing the concentration of chlorine in parts per million (ppm) for each test environment (anolyte or gas) at 100 um from the exposed surface are shown below in Table 5. According to the data in Table 5, the Telene® 1650 control specimens had a higher concentration of chlorine for each test environment (anolyte and gas) than the three test specimens (B - D). This quantifiable reduction in chlorine concentration for test specimens (B - D) enables the manufacture of electrolytic cell covers and other molded articles of the present invention which (i) have a longer service life in chlor-alkali conditions; (ii) can be designed to have thinner portions, walls, or cross sections; and (iii) are lighter in weight.

**Table 5.**

| Test Specimen | Corrosion Environment | Chlorine Concentration at 100 um from surface |
|---|---|---|
| Telene® 1650 | Aqueous Anolyte | 416 ppm |
| | Chlorine Gas | 221 ppm |
| B | Aqueous Anolyte | 76 ppm |
| | Chlorine Gas | 57 ppm |
| C | Aqueous Anolyte | 51 ppm |
| | Chlorine Gas | 90 ppm |
| D | Aqueous Anolyte | 59 ppm |
| | Chlorine Gas | 33 ppm |

### Example 5

Twenty plaques (5A1 - 5A20) were molded having the formulations shown below in Tables 6 -11. All plaques (5A1 - 5A20) were post-cured at 200 °C for 90 minutes. Multiple test specimens, each having dimensions (2" x 5" x 0.125"), were cut from each plaque for corrosion testing. The test specimens were tested in accordance with ASTM C851 under the following conditions: Table 6: hydrochloric acid (37%) at 220 °F for 30 days; Table 7: hydrochloric acid (37%) at 220 °F for 90 days; Table 8: sodium hydroxide (10%) at 200 °F for 30 days; Table 9: sodium hydroxide (10%) at 200 °F for 90 days; Table 10: sodium hypochlorite (12.5%) at 120 °F for 30 days; Table 11: sodium hypochlorite (12.5%) at 120 °F for 90 days. In Tables 6-11, trimer means tricyclopentadiene (including all structural isomers, stereoisomers, and mixtures thereof) and DCPD means dicyclopentadiene (including endo and exo stereoisomers and mixtures thereof). NR means not reported.

**Table 6: hydrochloric acid (37%) at 220 °F for 30 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | 19.296 | 16,088 | 343,000 | 0.53 | 109 | 101 |
| 5A2 | 90 | 10 | C827 | 60,000:1 | 0 | 0 | 20.030 | 15,775 | 348,000 | 1.07 | 111 | 98 |
| 5A3 | 90 | 10 | C801 | 7,500:1 | 0 | 0 | 20.256 | 15,790 | 347,000 | 0.50 | 112 | 102 |
| 5A4 | 90 | 10 | C827 | 30,000:1 | 1 | 0 | 20.975 | 16,708 | 359,000 | 0.82 | 108 | 95 |
| 5A5 | 90 | 10 | C827 | 60,000:1 | 1 | 0 | 18.283 | 15,227 | 378,000 | 1.09 | 72 | 93 |
| 5A6 | 90 | 10 | C801 | 7,500:1 | 1 | 0 | 20.298 | 15,537 | 339,000 | 0.07 | 72 | 101 |
| 5A7 | 77 | 23 | C827 | 30,000:1 | 0 | 0 | 21.063 | 17,123 | 361,000 | 0.46 | 107 | 98 |
| 5A8 | 77 | 23 | C827 | 60,000:1 | 0 | 0 | 20.925 | 17,172 | 366,000 | 0.59 | 88 | 100 |
| 5A9 | 77 | 23 | C801 | 7,500:1 | 0 | 0 | 20.295 | 16,795 | 356,000 | 0.07 | 119 | 109 |
| 5A10 | 77 | 23 | C827 | 30,000:1 | 1 | 0 | 20.331 | 16,748 | 356,000 | 0.68 | 64 | 101 |
| 5A11 | 77 | 23 | C827 | 60,000:1 | 1 | 0 | 20.004 | 16,429 | 362,000 | 1.12 | 111 | 100 |
| 5A12 | 77 | 23 | C801 | 7,500:1 | 1 | 0 | 21.185 | 18,218 | 368,000 | 0.76 | 78 | 94 |
| 5A13 | 35 | 65 | C827 | 30,000:1 | 0 | 0 | 20.820 | 19,022 | 425,000 | 1.14 | 109 | 101 |
| 5A14 | 35 | 65 | C827 | 60,000:1 | 0 | 0 | 20.802 | 19,170 | 420,000 | 1.34 | 102 | 107 |
| 5A15 | 35 | 65 | C801 | 7,500:1 | 0 | 0 | NR | 19,178 | 421,000 | NR | 124 | 108 |
| 5A16 | 35 | 65 | C827 | 30,000:1 | 1 | 0 | 23.345 | 14,841 | 426,000 | 0.99 | 96 | 101 |
| 5A17 | 35 | 65 | C827 | 60,000:1 | 1 | 0 | 20.206 | 14,600 | 411,000 | 3.35 | 123 | 105 |
| 5A18 | 35 | 65 | C801 | 7,500:1 | 1 | 0 | 21.234 | 20,935 | 428,000 | 1.34 | 60 | 104 |
| 5A19 | 35 | 65 | C827 | 30,000:1 | 0 | 4 | 22.883 | 18,157 | 406,000 | 0.95 | 67 | 101 |
| 5A20 | 35 | 65 | C827 | 60,000:1 | 0 | 4 | 21.955 | 16,287 | 407,000 | 1.22 | 117 | 99 |

**Table 7: hydrochloric acid (37%) at 220 °F for 90 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | 19.396 | 16,088 | 343,000 | 0.89 | 105 | 106 |
| 5A2 | 90 | 10 | C827 | 60,000:1 | 0 | 0 | 20.384 | 15,775 | 348,000 | 1.15 | 79 | 101 |
| 5A3 | 90 | 10 | C801 | 7,500:1 | 0 | 0 | 20.512 | 15,790 | 347,000 | 0.72 | 108 | 104 |
| 5A4 | 90 | 10 | C827 | 30,000:1 | 1 | 0 | 21.090 | 16,708 | 359,000 | 1.03 | 107 | 102 |
| 5A5 | 90 | 10 | C827 | 60,000:1 | 1 | 0 | 18.145 | 15,227 | 378,000 | 1.57 | 105 | 96 |
| 5A6 | 90 | 10 | C801 | 7,500:1 | 1 | 0 | 20.333 | 15,537 | 339,000 | -2.80 | 106 | 104 |
| 5A7 | 77 | 23 | C827 | 30,000:1 | 0 | 0 | 21.602 | 17,123 | 361,000 | 0.71 | 110 | 106 |
| 5A8 | 77 | 23 | C827 | 60,000:1 | 0 | 0 | 20.937 | 17,172 | 366,000 | 0.85 | 98 | 105 |
| 5A9 | 77 | 23 | C801 | 7,500:1 | 0 | 0 | 20.254 | 16,795 | 356,000 | 1.22 | 73 | 110 |
| 5A10 | 77 | 23 | C827 | 30,000:1 | 1 | 0 | 21.104 | 16,748 | 356,000 | 0.89 | 57 | 103 |
| 5A11 | 77 | 23 | C827 | 60,000:1 | 1 | 0 | 20.528 | 16,429 | 362,000 | 0.22 | 96 | 116 |
| 5A12 | 77 | 23 | C801 | 7,500:1 | 1 | 0 | 21.086 | 18,218 | 368,000 | 1.25 | 56 | 110 |
| 5A13 | 35 | 65 | C827 | 30,000:1 | 0 | 0 | 20.838 | 19,022 | 425,000 | 1.43 | 86 | 104 |
| 5A14 | 35 | 65 | C827 | 60,000:1 | 0 | 0 | 21.487 | 19,170 | 420,000 | 1.76 | 94 | 118 |
| 5A15 | 35 | 65 | C801 | 7,500:1 | 0 | 0 | 21.193 | 19,178 | 421,000 | 1.76 | 84 | 111 |
| 5A16 | 35 | 65 | C827 | 30,000:1 | 1 | 0 | 22.840 | 14,841 | 426,000 | 1.25 | 72 | 107 |
| 5A17 | 35 | 65 | C827 | 60,000:1 | 1 | 0 | 19.981 | 14,600 | 411,000 | 1.98 | 102 | 109 |
| 5A18 | 35 | 65 | C801 | 7,500:1 | 1 | 0 | 21.090 | 20,935 | 428,000 | 1.72 | 60 | 109 |
| 5A19 | 35 | 65 | C827 | 30,000:1 | 0 | 4 | 21.874 | 18,157 | 406,000 | 1.16 | 82 | 107 |
| 5A20 | 35 | 65 | C827 | 60,000:1 | 0 | 4 | 22.178 | 16,287 | 407,000 | 1.49 | 112 | 93 |

**Table 8: sodium hydroxide (10%) at 200 °F for 30 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | 18.909 | 16,088 | 343,000 | 0.05 | 97 | 98 |
| 5A2 | 90 | 10 | C827 | 60,000:1 | 0 | 0 | 20.496 | 15,775 | 348,000 | 0.08 | 107 | 100 |
| 5A3 | 90 | 10 | C801 | 7,500:1 | 0 | 0 | 20.251 | 15,790 | 347,000 | 0.05 | 102 | 99 |
| 5A4 | 90 | 10 | C827 | 30,000:1 | 1 | 0 | 20.778 | 16,708 | 359,000 | 0.12 | 98 | 95 |
| 5A5 | 90 | 10 | C827 | 60,000:1 | 1 | 0 | 20.917 | 15,227 | 378,000 | 0.06 | 107 | 92 |
| 5A6 | 90 | 10 | C801 | 7,500:1 | 1 | 0 | 20.728 | 15,537 | 339,000 | -2.57 | 101 | 98 |
| 5A7 | 77 | 23 | C827 | 30,000:1 | 0 | 0 | 21.459 | 17,123 | 361,000 | 0.11 | 102 | 101 |
| 5A8 | 77 | 23 | C827 | 60,000:1 | 0 | 0 | 21.010 | 17,172 | 366,000 | 0.11 | 104 | 102 |
| 5A9 | 77 | 23 | C801 | 7,500:1 | 0 | 0 | 20.295 | 16,795 | 356,000 | 0.07 | 109 | 105 |
| 5A10 | 77 | 23 | C827 | 30,000:1 | 1 | 0 | 20.252 | 16,748 | 356,000 | 0.14 | 101 | 100 |
| 5A11 | 77 | 23 | C827 | 60,000:1 | 1 | 0 | 20.040 | 16,429 | 362,000 | -0.09 | 100 | 97 |
| 5A12 | 77 | 23 | C801 | 7,500:1 | 1 | 0 | 19.960 | 18,218 | 368,000 | 0.04 | 91 | 97 |
| 5A13 | 35 | 65 | C827 | 30,000:1 | 0 | 0 | 21.975 | 19,022 | 425,000 | 0.10 | 104 | 102 |
| 5A14 | 35 | 65 | C827 | 60,000:1 | 0 | 0 | 21.341 | 19,170 | 420,000 | -0.05 | 97 | 96 |
| 5A15 | 35 | 65 | C801 | 7,500:1 | 0 | 0 | 21.174 | 19,178 | 421,000 | 0.06 | 108 | 106 |
| 5A16 | 35 | 65 | C827 | 30,000:1 | 1 | 0 | 22.263 | 14,841 | 426,000 | 0.10 | 113 | 101 |
| 5A17 | 35 | 65 | C827 | 60,000:1 | 1 | 0 | 20.267 | 14,600 | 411,000 | 0.09 | 131 | 100 |
| 5A18 | 35 | 65 | C801 | 7,500:1 | 1 | 0 | 21.337 | 20,935 | 428,000 | 0.10 | 99 | 100 |
| 5A19 | 35 | 65 | C827 | 30,000:1 | 0 | 4 | 21.569 | 18,157 | 406,000 | 0.09 | 98 | 101 |
| 5A20 | 35 | 65 | C827 | 60,000:1 | 0 | 4 | 21.918 | 16,287 | 407,000 | 0.05 | 106 | 98 |

**Table 9: sodium hydroxide (10%) at 200 °F for 90 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | 20.193 | 16,088 | 343,000 | 0.02 | 104 | 101 |
| 5A2 | 90 | 10 | C827 | 60,000:1 | 0 | 0 | 19.925 | 15,775 | 348,000 | 0.08 | 108 | 99 |
| 5A3 | 90 | 10 | C801 | 7,500:1 | 0 | 0 | 20.442 | 15,790 | 347,000 | 0.02 | 106 | 101 |
| 5A4 | 90 | 10 | C827 | 30,000:1 | 1 | 0 | 20.436 | 16,708 | 359,000 | 0.08 | 98 | 95 |
| 5A5 | 90 | 10 | C827 | 60,000:1 | 1 | 0 | 20.180 | 15,227 | 378,000 | -0.02 | 103 | 88 |
| 5A6 | 90 | 10 | C801 | 7,500:1 | 1 | 0 | 20.173 | 15,537 | 339,000 | -0.07 | 105 | 98 |
| 5A7 | 77 | 23 | C827 | 30,000:1 | 0 | 0 | 21.566 | 17,123 | 361,000 | 0.31 | 104 | 100 |
| 5A8 | 77 | 23 | C827 | 60,000:1 | 0 | 0 | 20.962 | 17,172 | 366,000 | 0.06 | 107 | 103 |
| 5A9 | 77 | 23 | C801 | 7,500:1 | 0 | 0 | 19.953 | 16,795 | 356,000 | 0.04 | 110 | 107 |
| 5A10 | 77 | 23 | C827 | 30,000:1 | 1 | 0 | 20.991 | 16,748 | 356,000 | 0.08 | 103 | 97 |
| 5A11 | 77 | 23 | C827 | 60,000:1 | 1 | 0 | 19.757 | 16,429 | 362,000 | 0.02 | 106 | 108 |
| 5A12 | 77 | 23 | C801 | 7,500:1 | 1 | 0 | 20.226 | 18,218 | 368,000 | -0.05 | 94 | 93 |
| 5A13 | 35 | 65 | C827 | 30,000:1 | 0 | 0 | 21.543 | 19,022 | 425,000 | 0.19 | 73 | 103 |
| 5A14 | 35 | 65 | C827 | 60,000:1 | 0 | 0 | 20.971 | 19,170 | 420,000 | 0.06 | 79 | 99 |
| 5A15 | 35 | 65 | C801 | 7,500:1 | 0 | 0 | 21.272 | 19,178 | 421,000 | 0.08 | 103 | 106 |
| 5A16 | 35 | 65 | C827 | 30,000:1 | 1 | 0 | 21.524 | 14,841 | 426,000 | 0.13 | 111 | 97 |
| 5A17 | 35 | 65 | C827 | 60,000:1 | 1 | 0 | 20.292 | 14,600 | 411,000 | 0.03 | 107 | 98 |
| 5A18 | 35 | 65 | C801 | 7,500:1 | 1 | 0 | 20.957 | 20,935 | 428,000 | 0.29 | 88 | 107 |
| 5A19 | 35 | 65 | C827 | 30,000:1 | 0 | 4 | 22.513 | 18,157 | 406,000 | 0.08 | 99 | 99 |
| 5A20 | 35 | 65 | C827 | 60,000:1 | 0 | 4 | 21.572 | 16,287 | 407,000 | 0.02 | 110 | 97 |

**Table 10: sodium hypochlorite (12.5%) at 120 °F for 30 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | NR | 16,088 | 343,000 | NR | NR | NR |
| 5A2 | 90 | 10 | C827 | 60,000:1 | 0 | 0 | 19.733 | 15,775 | 348,000 | -2.01 | 97 | 98 |
| 5A3 | 90 | 10 | C801 | 7,500:1 | 0 | 0 | 20.386 | 15,790 | 347,000 | -1.99 | 96 | 96 |
| 5A4 | 90 | 10 | C827 | 30,000:1 | 1 | 0 | 21.177 | 16,708 | 359,000 | -1.97 | 95 | 96 |
| 5A5 | 90 | 10 | C827 | 60.000:1 | 1 | 0 | 20.194 | 15,227 | 378,000 | -2.34 | 103 | 92 |
| 5A6 | 90 | 10 | C801 | 7,500:1 | 1 | 0 | 20.727 | 15,537 | 339,000 | -2.00 | 101 | 99 |
| 5A7 | 77 | 23 | C827 | 30,000:1 | 0 | 0 | 21.569 | 17,123 | 361,000 | -1.44 | 100 | 102 |
| 5A8 | 77 | 23 | C827 | 60,000:1 | 0 | 0 | 20.653 | 17,172 | 366,000 | -1.86 | 101 | 102 |
| 5A9 | 77 | 23 | C801 | 7,500:1 | 0 | 0 | 19.941 | 16,795 | 356,000 | -1.67 | 101 | 104 |
| 5A10 | 77 | 23 | C827 | 30,000:1 | 1 | 0 | 21.395 | 16,748 | 356,000 | -1.42 | 102 | 102 |
| 5A11 | 77 | 23 | C827 | 60,000:1 | 1 | 0 | 20.748 | 16,429 | 362,000 | -1.99 | 104 | 104 |
| 5A12 | 77 | 23 | C801 | 7,500:1 | 1 | 0 | 20.655 | 18,218 | 368,000 | -1.69 | 95 | 98 |
| 5A13 | 35 | 65 | C827 | 30,000:1 | 0 | 0 | 21.078 | 19,022 | 425,000 | -1.11 | 90 | 102 |
| 5A14 | 35 | 65 | C827 | 60,000:1 | 0 | 0 | 21.553 | 19,170 | 420,000 | -1.21 | 79 | 102 |
| 5A15 | 35 | 65 | C801 | 7,500:1 | 0 | 0 | 21.078 | 19,178 | 421,000 | -1.41 | 104 | 102 |
| 5A16 | 35 | 65 | C827 | 30,000:1 | 1 | 0 | 22.052 | 14,841 | 426,000 | -1.00 | 128 | 100 |
| 5A17 | 35 | 65 | C827 | 60,000:1 | 1 | 0 | 21.165 | 14,600 | 411,000 | -1.29 | 97 | 102 |
| 5A18 | 35 | 65 | C801 | 7,500:1 | 1 | 0 | 22.360 | 20,935 | 428,000 | -2.15 | 100 | 102 |
| 5A19 | 35 | 65 | C827 | 30,000:1 | 0 | 4 | 22.131 | 18,157 | 406,000 | -1.07 | 86 | 100 |
| 5A20 | 35 | 65 | C827 | 60,000:1 | 0 | 4 | 21.455 | 16,287 | 407,000 | -1.07 | 107 | 98 |

**Table 11: sodium hypochlorite (12.5%) at 120 °F for 90 days**

| **Sample ID** | **DCPD (%)** | **Trimer (%)** | **Catalyst** | **Monomer: Catalyst Ratio** | **Peroxide (t-butyl) (phr)** | **Kraton G1651H (phr)** | **Initial Weight (grams)** | **Initial Flex Strength (psi)** | **Initial Flex Modulus (psi)** | **Weight Change (%)** | **Flex Strength Retention (%)** | **Flex Modulus Retention (%)** |
|---|---|---|---|---|---|---|---|---|---|---|---|---|
| 5A1 | 90 | 10 | C827 | 30,000:1 | 0 | 0 | NR | 16,088 | 343,000 | NR | NR | NR |
| 5A2 | 90 | 10 | C827 | 60,000:1 | 0 | 0 | 20.288 | 15,775 | 348,000 | -12.50 | 102 | 103 |
| 5A3 | 90 | 10 | C801 | 7,500:1 | 0 | 0 | 20.034 | 15,790 | 347,000 | -16.75 | 98 | 107 |
| 5A4 | 90 | 10 | C827 | 30,000:1 | 1 | 0 | 20.570 | 16,708 | 359,000 | -12.03 | 97 | 97 |
| 5A5 | 90 | 10 | C827 | 60,000:1 | 1 | 0 | 20.455 | 15,227 | 378,000 | -13.25 | 108 | 97 |
| 5A6 | 90 | 10 | C801 | 7,500:1 | 1 | 0 | NR | 15,537 | 339,000 | NR | 105 | 106 |
| 5A7 | 77 | 23 | C827 | 30,000:1 | 0 | 0 | 20.848 | 17,123 | 361,000 | -13.00 | 105 | 106 |
| 5A8 | 77 | 23 | C827 | 60,000:1 | 0 | 0 | 20.166 | 17,172 | 366,000 | -17.86 | 110 | 116 |
| 5A9 | 77 | 23 | C801 | 7,500:1 | 0 | 0 | 20.758 | 16,795 | 356,000 | NR | NR | 103 |
| 5A10 | 77 | 23 | C827 | 30,000:1 | 1 | 0 | 21.230 | 16,748 | 356,000 | -11.57 | 102 | 100 |
| 5A11 | 77 | 23 | C827 | 60,000:1 | 1 | 0 | 20.091 | 16,429 | 362,000 | -16.87 | 107 | 110 |
| 5A12 | 77 | 23 | C801 | 7,500:1 | 1 | 0 | 20.984 | 18,218 | 368,000 | -13.56 | 95 | 104 |
| 5A13 | 35 | 65 | C827 | 30,000:1 | 0 | 0 | 20.665 | 19,022 | 425,000 | -7.45 | 88 | 106 |
| 5A14 | 35 | 65 | C827 | 60,000:1 | 0 | 0 | 21.247 | 19,170 | 420,000 | -7.96 | 86 | 104 |
| 5A15 | 35 | 65 | C801 | 7,500:1 | 0 | 0 | 21.058 | 19,178 | 421,000 | -10.84 | 103 | 114 |
| 5A16 | 35 | 65 | C827 | 30,000:1 | 1 | 0 | 22.377 | 14,841 | 426,000 | -9.55 | 145 | 112 |
| 5A17 | 35 | 65 | C827 | 60,000:1 | 1 | 0 | 21.004 | 14,600 | 411,000 | -9.27 | 147 | 112 |
| 5A18 | 35 | 65 | C801 | 7,500:1 | 1 | 0 | 22.014 | 20,935 | 428,000 | -10.70 | 104 | 107 |
| 5A19 | 35 | 65 | C827 | 30,000:1 | 0 | 4 | 21.516 | 18,157 | 406,000 | -9.20 | 100 | 100 |
| 5A20 | 35 | 65 | C827 | 60,000:1 | 0 | 4 | 22.208 | 16,287 | 407,000 | -11.95 | 112 | 98 |

### Example 6

A 50 g mass of DCPD (containing 8 wt% tricyclopentadiene) was polymerized using C716 = 0.0361 g at a DCPD:C716 ratio of (7,500:1) by heating the mixture to a starting temperature of 48.0° C. Polymerized sample was not post-cured. Result: Time to reach maximum temperature (Tₘₐₓ) = 42.5 seconds. Tₘₐₓ= 192 °C. Conversion measured by thermogravimetric analysis (TGA) performed under nitrogen at 400 °C = 82.42%. Glass transition temperature measured by thermal mechanical analysis (TMA) = 68° C. % Residual monomer (toluene extraction at room temperature) = 15.51%.

### Example 7

A 50 g mass of DCPD (containing 24 wt% tricyclopentadiene) was polymerized using C801 = 0.0372 g at a DCPD:C801 ratio of (7,500:1) by heating the mixture to a starting temperature of 30.2 °C. Polymerized sample was not post-cured. The DCPD monomer was sparged with argon for approximately 30 minutes, but not filtered prior to polymerization. Result: Time to reach maximum temperature (Tₘₐₓ) = 280 seconds. Tₘₐₓ= 200.1 °C. % Residual monomer (toluene extraction at room temperature) = 3.03%. % Weight loss at 300 °C and 400 °C measured by thermogravimetric analysis (TGA) = 2.85% and 4.51%. Glass transition temperature measured by thermal mechanical analysis (TMA) =153 °C.

### Example 8

A 50 g mass of DCPD (containing 24 wt% tricyclopentadiene) was polymerized using C801 = 0.0093 g at a DCPD:C801 ratio of (30,000:1) by heating the mixture to a starting temperature of 30.4 °C. Polymerized sample was not post-cured. The DCPD monomer was sparged with argon for approximately 30 minutes and filtered with activated Al₂O₃ prior to polymerization. Result: Time to reach maximum temperature (Tₘₐₓ= 593 seconds. Tₘₐₓ=164.2 °C. % Residual monomer (toluene extraction at room temperature) = 16.29%. % Weight loss at 300 °C and 400° C measured by thermogravimetric analysis (TGA) = 17.9% and 21.6%. Glass transition temperature measured by thermal mechanical analysis (TMA) = 86 °C.

### Example 9

A 50 g mass of DCPD (containing 24 wt% tricyclopentadiene) was polymerized using C823 = 0.0048 g at a DCPD:C823 ratio of (60,000:1) by heating the mixture to a starting temperature of 33.2 °C. Polymerized sample was not post-cured. The DCPD monomer was sparged with argon for approximately 30 minutes and filtered with activated Al₂O₃ prior to polymerization. Result: Time to reach maximum temperature (Tₘₐₓ) = 182 seconds. Tₘₐₓ= 158.1° C. % Residual monomer (toluene extraction at room temperature) = 20.35%. % Weight loss at 300 °C and 400 °C measured by thermogravimetric analysis (TGA) = 20.70% and 24.71%. Glass transition temperature measured by thermal mechanical analysis (TMA) = 72 °C.

### Example 10

A 50 g mass of DCPD (containing 24 wt% tricyclopentadiene) was polymerized using C848 = 0.0049 g at a DCPD:C848 ratio of (60,000:1) by heating the mixture to a starting temperature of 30.5 °C. Polymerized sample was not post-cured. The DCPD monomer was sparged with argon for approximately 30 minutes and filtered with activated Al₂O₃ prior to polymerization. Result: Time to reach maximum temperature (Tₘₐₓ) = 293 seconds. Tₘₐₓ = 186.7 °C. % Residual DCPD (solvent extraction) = 1.48%. Glass transition temperature measured by thermal mechanical analysis (TMA) = 170.8 °C.

### Example 11

Table 12 discloses the heat distortion temperature, flexural strength, flexural modulus, and compression modulus values of polymer samples prepared by polymerizing DCPD (with or without tricyclopentadiene) using C716, C848, or C827 catalysts. In all samples (11A - 11E) the DCPD (with or without trimer) was not degassed, but was filtered prior to polymerization. Typical monomer to catalyst ratios (DCPD:C716) are from 5,000:1 to 7,500:1. Typical monomer to catalyst ratios (DCPD:C848) are from 30,000:1 to 60,000:1. Typical monomer to catalyst ratios (DCPD:C827) are from 30,000:1 to 60,000:1. In Table 12, trimer means tricyclopentadiene (including all structural isomers, stereoisomers, and mixtures thereof) and DCPD means dicyclopentadiene (including endo and exo stereoisomers and mixtures thereof).

**Table 12**

| Sample ID | Catalyst | DCPD (%) | Trimer (%) | HDT (°C) | Flexural Strength (ksi) | Flexural Modulus (ksi) | Compression Modulus (ksi) |
|---|---|---|---|---|---|---|---|
| 11A | C716 | 100 | 0 | 126.7 | 12.1 | 295 | 240 |
| 11B | C716 | 76.5 | 23.5 | 142.7 | 13.8 | 334 | 288 |
| 11C | C848 | 100 | 0 | 126 | 10.7 | 265 | 234 |
| 11D | C848 | 76.5 | 23.5 | 163 | 12.2 | 302 | 260 |
| 11E | C827 | 100 | 0 | 129 | 10.7 | 290 | 232 |

### Example 12

Table 13 discloses the heat distortion temperature, flexural strength, flexural modulus, and compression modulus values of polymer samples prepared by polymerizing DCPD (with or without tricyclopentadiene) using C716, C848, or C827 catalysts. In all samples (12A - 12E) the DCPD (with or without trimer) was both degassed and filtered prior to polymerization. Typical monomer to catalyst ratios (DCPD:C716) are from 5,000:1 to 7,500:1. Typical monomer to catalyst ratios (DCPD:C848) are from 30,000:1 to 60,000:1. Typical monomer to catalyst ratios (DCPD:C827) are from 30,000:1 to 60,000:1. In Table 13, trimer means tricyclopentadiene (including all structural isomers, stereoisomers, and mixtures thereof) and DCPD means dicyclopentadiene (including endo and exo stereoisomers and mixtures thereof).

**Table 13**

| Sample ID | Catalyst | DCPD (%) | Trimer (%) | HDT (°C) | Flexural Strength (ksi) | Flexural Modulus (ksi) | Compression Modulus (ksi) |
|---|---|---|---|---|---|---|---|
| 12A | C716 | 100 | 0 | 129.2 | 12.5 | 306 | 237 |
| 12B | C716 | 76.5 | 23.5 | 146.4 | 13.9 | 333 | 292 |
| 12C | C848 | 100 | 0 | 145 | 10.4 | 256 | 221 |
| 12D | C848 | 76.5 | 23.5 | 166.1 | 11.9 | 294 | 253 |
| 12E | C827 | 100 | 0 | 146.7 | 10.3 | 276 | 216 |

### Example 13

Table 14 discloses the heat distortion temperature, notched Izod, flexural strength, flexural modulus, compression modulus, and compression strength values of polymer samples prepared by polymerizing DCPD containing different amounts of trimer using C716 or C848 catalysts. Typical monomer to catalyst ratios (DCPD:C716) are from 5,000:1 to 7,500:1. Typical monomer to catalyst ratios (DCPD:C848) are from 30,000:1 to 60,000:1. NR means not reported. In Table 14, trimer means tricyclopentadiene (including all structural isomers, stereoisomers, and mixtures thereof) and DCPD means dicyclopentadiene (including endo and exo stereoisomers and mixtures thereof).

**Table 14**

| Trimer (%) | HDT (°C) (C716) | HDT (°C) (C848) | Izod (ft-lb/in) (C716) | Izod (ft-lb/in) (C848) | Flexural Strength (ksi) (C716) | Flexural Strength (ksi) (C848) | Flexural Modulus (ksi) (C716) | Flexural Modulus (ksi) (C848) | Compression Modulus (ksi) (C716) | Compression Modulus (ksi) (C848) | Compression Strength (ksi) (C716) | Compression Strength (ksi) (C848) |
|---|---|---|---|---|---|---|---|---|---|---|---|---|
| 0 | 129.2 | 145 | 1.767 | 2.551 | 12.5 | 10.4 | 306 | 256 | 237 | 221 | 9.9 | 8.6 |
| 4.64 | 133 | 147.9 | 1.623 | 4.062 | 12.7 | 10.7 | 325 | 269 | 268 | 226 | 11.1 | 9.1 |
| 8.84 | 132.2 | 153.5 | 1.404 | 2.676 | 12.7 | 10.8 | 325 | 270 | 275 | 231 | 11.7 | 8.9 |
| 11.1 | 146.6 | 158.6 | 1.722 | 2.082 | 12.8 | 11.2 | NR | NR | 269 | 238 | 11.1 | 9.6 |
| 14.59 | 138.8 | 160.6 | 1.738 | 2.299 | 12.9 | 11.2 | 3115 | 278 | 274 | 240 | 11.2 | 9.4 |
| 19.37 | 143.4 | 162.8 | 1.648 | 1.621 | 13.5 | 11.9 | 324 | 293 | 276 | 246 | 11.4 | 9.8 |
| 23.51 | 146.4 | 166.1 | 2.199 | 2.052 | 13.9 | 11.9 | 333 | 294 | 292 | 253 | 12.4 | 10 |

## Claims

1. An electrolytic cell cover or a corrosion resistant article selected from piping, end boxes used in mercury cells, inlet box used in mercury cells, wash box used in mercury cells, sidewalls of mercury cells, membrane frames for membrane cells, headers, valves, manifolds, interrupter cups, interrupter assemblies, reagent and product distribution devices, dip tubes, lids, containers, liners, covers, flanges, support structures, funnels, pipe fittings, tanks, tank liners, pipe liners, containment vessels, drums, drum liners, vessels, and vessel liners, comprising: a resin composition comprising at least one cyclic olefin and at least one Group 8 olefin metathesis catalyst which contains Ru as the Group 8 transition metal.

2. The electrolytic cell cover or corrosion resistant article of claim 1, wherein the at least one Group 8 olefin metathesis catalyst has the structure 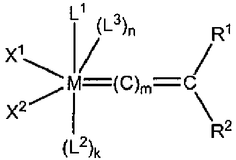 wherein,
M is the Group 8 transition metal Ru;
L¹, L² and L³ are independently selected from neutral electron donor ligands;
n is 0 or 1, such that L³ may or may not be present;
m is 0, 1, or 2;
k is 0 or 1;
X¹ and X² are independently anionic ligands; and
R¹ and R² are independently selected from hydrogen, hydrocarbyl, substituted hydrocarbyl, heteroatom-containing hydrocarbyl, substituted heteroatom-containing hydrocarbyl, and functional groups; wherein one or both of R¹ and R² may have the structure -(W)ₙ-U⁺V⁻, in which W is selected from hydrocarbylene, substituted hydrocarbylene, heteroatom-containing hydrocarbylene, or substituted heteroatom-containing hydrocarbylene; U is a positively charged Group 15 or Group 16 element substituted with hydrogen, hydrocarbyl, substituted hydrocarbyl, heteroatom-containing hydrocarbyl, or substituted heteroatom-containing hydrocarbyl; V is a negatively charged counterion; and n is zero or 1,
wherein any two or more of X¹, X², L¹, L², L³, R¹, and R² can be taken together to form one or more cyclic groups, and further wherein any one or more of X¹, X², L¹, L², L³, R¹, and R² may be attached to a support.

3. The electrolytic cell cover or corrosion resistant article of claim 2, wherein at least one of L¹, L², and L³ is an N-heterocyclic carbene ligand.

4. The electrolytic cell cover or corrosion resistant article of claim 1 which is translucent.

5. The electrolytic cell cover or corrosion resistant article of claim 1 having less than one visible void per square inch of polymer.

6. The electrolytic cell cover of claim 1.

7. The electrolytic cell cover of claim 6, comprising:
(a) a flanged base;
(b) a plurality of side walls integrally connected to said flanged base; and
(c) a top portion integrally connected to said plurality of side walls.

8. The electrolytic cell cover of claim 7, further comprising at least one orifice positioned in or near said top portion.

9. The electrolytic cell cover of claim 7 which is translucent.

10. The electrolytic cell cover of claim 7 having less than one visible void per square inch of polymer.

11. A method of making an electrolytic cell cover or a corrosion resistant article selected from piping, end boxes used in mercury cells, inlet box used in mercury cells, wash box used in mercury cells, sidewalls of mercury cells, membrane frames for membrane cells, headers, valves, manifolds, interrupter cups, interrupter assemblies, reagent and product distribution devices, dip tubes, lids, containers, liners, covers, flanges, support structures, funnels, pipe fittings, tanks, tank liners, pipe liners, containment vessels, drums, drum liners, vessels, and vessel liners, comprising:
combining at least one Group 8 olefin metathesis catalyst which contains Ru as the Group 8 transition metal and a resin composition comprising at least one cyclic olefin to form a ROMP composition, and polymerizing the ROMP composition.

12. The method of claim 11, wherein an electrolytic cell cover is made.

13. The method of claim 11, wherein the at least one Group 8 olefin metathesis catalyst has the structure 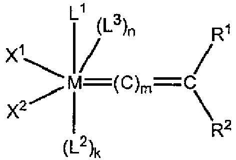 wherein,
M is the Group 8 transition metal Ru;
L¹, L² and L³ are independently selected from neutral electron donor ligands;
n is 0 or 1, such that L³ may or may not be present;
m is 0, 1, or 2;
k is 0 or 1;
X¹ and X² are independently anionic ligands; and
R¹ and R² are independently selected from hydrogen, hydrocarbyl, substituted hydrocarbyl, heteroatom-containing hydrocarbyl, substituted heteroatom-containing hydrocarbyl, and functional groups; wherein one or both of R¹ and R² may have the structure -(W)ₙ-U⁺V⁻, in which W is selected from hydrocarbylene, substituted hydrocarbylene, heteroatom-containing hydrocarbylene, or substituted heteroatom-containing hydrocarbylene; U is a positively charged Group 15 or Group 16 element substituted with hydrogen, hydrocarbyl, substituted hydrocarbyl, heteroatom-containing hydrocarbyl, or substituted heteroatom-containing hydrocarbyl; V is a negatively charged counterion; and n is zero or 1,
wherein any two or more of X¹, X², L¹, L², L³, R¹, and R² can be taken together to form one or more cyclic groups, and further wherein any one or more of X¹, X², L¹, L², L³, R¹, and R² may be attached to a support.

14. The method of claim 13, wherein at least one of L¹, L², and L³ is an N-heterocyclic carbene ligand.

## Patentansprüche

1. Abdeckung einer elektrolytischen Zelle oder korrosionsresistenter Gegenstand ausgewählt aus Rohren, Endkästen verwendet in Quecksilberzellen, Einlaufkasten verwendet in Quecksilberzellen, Waschkasten verwendet in Quecksilberzellen, Seitenwänden von Quecksilberzellen, Membranrahmen für Membranzellen, Sammlern, Ventilen, Anschlussstücken, Unterbrecher-Behältern, Unterbrecher-Baugruppen, Verteilungsvorrichtungen für Reagenz und Produkt, Tauchrohren, Deckeln, Behältern, Auskleidungen, Abdeckungen, Flanschen, Halterstrukturen, Trichtern, Rohrfittings, Tanks, Tankauskleidungen, Rohrauskleidungen, Sicherheitsbehältern, Fässern, Fass-Auskleidungen, Gefäßen und Gefäß-Auskleidungen enthaltend: eine HarzZusammensetzung enthaltend mindestens ein cyclisches Olefin und mindestens einen Olefin-Metathesekatalysator der Gruppe 8, welcher Ru als Übergangsmetall der Gruppe 8 enthält.

2. Abdeckung einer elektrolytischen Zelle oder korrosionsresistenter Gegenstand nach Anspruch 1, wobei der mindestens einen Olefin-Metathesekatalysator der Gruppe 8 die Struktur 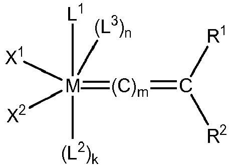 aufweist, wobei
M das Übergangsmetall der Gruppe 8 Ru ist,
L¹, L² und L³ unabhängig ausgewählt sind aus neutralen Elektronendonor-Liganden;
n 0 oder 1 ist, so dass L³ vorhanden sein kann oder nicht vorhanden sein kann;
m 0, 1 oder 2 ist;
k 0 oder 1 ist;
X¹ und X² unabhängig anionische Liganden sind; und
R¹ und R² unabhängig ausgewählt sind aus Wasserstoff, Hydrocarbylgruppen, substituierten Hydrocarbylgruppen, Heteroatom-enthaltenden Hydrocarbylgruppen, substituierten Heteroatom-enthaltenden Hydrocarbylgruppen, und funktionellen Gruppen; wobei einer oder beide Reste R¹ und R² die Struktur -(W)ₙ-U⁺V⁻ aufweisen können, in der W ausgewählt ist aus Hydrocarbylengruppen, substituierten Hydrocarbylengruppen, Heteroatom-enthaltenden Hydrocarbylengruppen oder substituierten Heteroatom-enthaltenden Hydrocarbylengruppen; U ein positiv geladenes Element der Gruppe 15 oder der Gruppe 16, substituiert mit Wasserstoff, Hydrocarbylgruppen, substituierten Hydrocarbylgruppen, Heteroatom-enthaltenden Hydrocarbylgruppen oder substituierten Heteroatom-enthaltenden Hydrocarbylgruppen, ist; V ein negativ geladenes Gegenion ist; und n Null oder 1 ist;
wobei zwei oder mehr beliebige Reste X¹, X², L¹, L², L³, R¹ und R² zusammengenommen eine oder mehrere cyclische Gruppen bilden können, und wobei weiter ein oder mehrere beliebige Reste X¹, X², L¹, L², L³, R¹ und R² an einen Träger gebunden sein können.

3. Abdeckung einer elektrolytischen Zelle oder korrosionsresistenter Gegenstand nach Anspruch 2, wobei mindestens einer der Reste der L¹, L² und L³ ein N-Heterocyclischer Carben-Ligand ist.

4. Abdeckung einer elektrolytischen Zelle oder korrosionsresistenter Gegenstand nach Anspruch 1, welche/welcher transluzent ist.

5. Abdeckung einer elektrolytischen Zelle oder korrosionsresistenter Gegenstand nach Anspruch 1, welche/welcher weniger als eine sichtbare Fehlstelle pro Quadratzoll Polymer aufweist.

6. Abdeckung einer elektrolytischen Zelle nach Anspruch 1.

7. Abdeckung einer elektrolytischen Zelle nach Anspruch 6 enthaltend:
(a) eine geflanschte Grundfläche;
(b) mehrere Seitenwände, welche einstückig mit der geflanschten Grundfläche verbunden sind, und
(c) einen oberen Teil, welcher einstückig mit den mehreren Seitenwänden verbunden ist.

8. Abdeckung einer elektrolytischen Zelle nach Anspruch 7 enthaltend zudem mindestens eine Öffnung, welche in oder nahe dem oberen Teil positioniert ist.

9. Abdeckung einer elektrolytischen Zelle nach Anspruch 7, welche transluzent ist.

10. Abdeckung einer elektrolytischen Zelle nach Anspruch 7, welche weniger als eine sichtbare Fehlstelle pro Quadratzoll Polymer aufweist.

11. Verfahren zur Herstellung einer Abdeckung einer elektrolytischen Zelle oder eines korrosionsresistenten Gegenstandes ausgewählt aus Rohren, Endkästen verwendet in Quecksilberzellen, Einlaufkasten verwendet in Quecksilberzellen, Waschkasten verwendet in Quecksilberzellen, Seitenwänden von Quecksilberzellen, Membranrahmen für Membranzellen, Sammlern, Ventilen, Anschlussstücken, Unterbrecher-Behältern, Unterbrecher-Baugruppen, Verteilungsvorrichtungen für Reagenz und Produkt, Tauchrohren, Deckeln, Behältern, Auskleidungen, Abdeckungen, Flanschen, Halterstrukturen, Trichtern, Rohrfittings, Tanks, Tankauskleidungen, Rohrauskleidungen, Sicherheitsbehältern, Fässern, Fass-Auskleidungen, Gefäßen und Gefäß-Auskleidungen, enthaltend:
zusammengeben von mindestens einem Olefin-Metathesekatalysator der Gruppe 8, welcher Ru als Übergangsmetall der Gruppe 8 enthält, und einer HarzZusammensetzung enthaltend mindestens ein cyclisches Olefin, um eine ROMP-Zusammensetzung zu bilden, und polymerisieren der ROMP-Zusammensetzung.

12. Verfahren nach Anspruch 11, wobei eine Abdeckung einer elektrolytischen Zelle hergestellt wird.

13. Verfahren nach Anspruch 11, wobei der mindestens eine Olefin-Metathesekatalysator der Gruppe 8 die Struktur 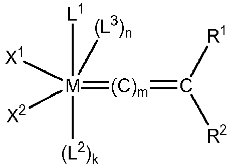 aufweist, wobei
M das Übergangsmetall der Gruppe 8 Ru ist,
L¹, L² und L³ unabhängig ausgewählt sind aus neutralen Elektronendonor-Liganden;
n 0 oder 1 ist, so dass L³ vorhanden sein kann oder nicht vorhanden sein kann;
m 0, 1 oder 2 ist;
k 0 oder 1 ist;
X¹ und X² unabhängig anionische Liganden sind; und
R¹ und R² unabhängig ausgewählt sind aus Wasserstoff, Hydrocarbylgruppen, substituierten Hydrocarbylgruppen, Heteroatom-enthaltenden Hydrocarbylgruppen, substituierten Heteroatom-enthaltenden Hydrocarbylgruppen, und funktionellen Gruppen; wobei einer oder beide Reste R¹ und R² die Struktur -(W)ₙ-U⁺V⁻ aufweisen können, in der W ausgewählt ist aus Hydrocarbylengruppen, substituierten Hydrocarbylengruppen, Heteroatom-enthaltenden Hydrocarbylengruppen oder substituierten Heteroatom-enthaltenden Hydrocarbylengruppen; U ein positiv geladenes Element der Gruppe 15 oder der Gruppe 16, substituiert mit Wasserstoff, Hydrocarbylgruppen, substituierten Hydrocarbylgruppen, Heteroatom-enthaltenden Hydrocarbylgruppen oder substituierten Heteroatom-enthaltenden Hydrocarbylgruppen, ist; V ein negativ geladenes Gegenion ist; und n Null oder 1 ist;
wobei zwei oder mehr beliebige Reste X¹, X², L¹, L², L³, R¹ und R² zusammengenommen eine oder mehrere cyclische Gruppen bilden können, und wobei weiter ein oder mehrere beliebige Reste X¹, X², L¹, L², L³, R¹ und R² an einen Träger gebunden sein können.

14. Verfahren nach Anspruch 13, wobei mindestens einer der Reste der L¹, L² und L³ ein N-Heterocyclischer Carben-Ligand ist.

## Revendications

1. Couvercle de cellule électrolytique ou article résistant à la corrosion choisi parmi une tuyauterie, des boîtes d'extrémité utilisées dans des cellules à mercure, une boîte d'entrée utilisée dans des cellules à mercure, une boîte de lavage utilisée dans des cellules à mercure, des parois latérales de cellules à mercure, des cadres pour membrane pour des électrolyseurs à membrane, des collecteurs, des soupapes, des distributeurs, des cloches d'interrupteur, des ensembles interrupteurs, des dispositifs de distribution de réactifs et de produits, des tubes plongeurs, des capots, des récipients, des revêtements intérieurs, des couvercles, des brides, des structures de support, des entonnoirs, des raccords de tuyauterie, des réservoirs, des revêtements intérieurs de réservoir, des revêtements intérieurs de tuyauterie, des cuves de confinement, des ballons, des revêtements intérieurs de ballon, des cuves et des revêtements intérieurs de cuve, comprenant : une composition de résine comprenant au moins une oléfine cyclique et au moins un catalyseur de métathèse d'oléfines du groupe 8 qui contient du Ru en tant que métal de transition du groupe 8.

2. Couvercle de cellule électrolytique ou article résistant à la corrosion selon la revendication 1, dans lequel l'au moins un catalyseur de métathèse d'oléfines du groupe 8 a la structure 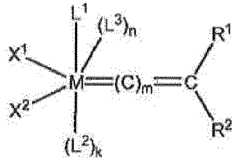 dans laquelle
M est le métal de transition du groupe 8 Ru ;
L¹, L² et L³ sont indépendamment choisis parmi les ligands donneurs d'électrons neutres ;
n vaut 0 ou 1, de façon telle que L³ peut être présent ou non ;
m vaut 0, 1 ou 2 ;
k vaut 0 ou 1 ;
X¹ et X² sont indépendamment des ligands anioniques ; et
R¹ et R² sont indépendamment choisis parmi l'atome d'hydrogène, les groupes hydrocarbyle, les groupes hydrocarbyle substitués, les groupes hydrocarbyle contenant un ou plusieurs hétéroatomes, les groupes hydrocarbyle contenant un ou plusieurs hétéroatomes substitués et les groupes fonctionnels ;
l'un de R¹ ou R² ou les deux pouvant avoir la structure -(W)ₙ-U⁺V⁻, dans laquelle
W est choisi parmi les groupes hydrocarbylène, les groupes hydrocarbylène substitués, les groupes hydrocarbylène contenant un ou plusieurs hétéroatomes ou les groupes hydrocarbylène contenant un ou plusieurs hétéroatomes substitués ;
U est un élément du groupe 15 ou du groupe 16 portant une charge positive substitué par un ou plusieurs substituants hydrogène, hydrocarbyle, hydrocarbyle substitué, hydrocarbyle contenant un ou plusieurs hétéroatomes ou hydrocarbyle contenant un ou plusieurs hétéroatomes substitué ;
V est un contre-ion portant une charge négative ; et
n vaut zéro ou 1,
dans laquelle deux ou plus de deux groupes quelconques parmi X¹, X², L¹, L², L³, R¹ et R² peuvent être pris ensemble pour former un ou plusieurs groupes cycliques et dans laquelle en outre un ou plusieurs groupes quelconques parmi X¹, X², L¹, L², L³, R¹ et R² peuvent être attachés à un support.

3. Couvercle de cellule électrolytique ou article résistant à la corrosion selon la revendication 2, dans lequel au moins l'un de L¹, L² et L³ est un ligand carbène N-hétérocyclique.

4. Couvercle de cellule électrolytique ou article résistant à la corrosion selon la revendication 1 qui est translucide.

5. Couvercle de cellule électrolytique ou article résistant à la corrosion selon la revendication 1 ayant moins d'un vide visible par pouce carré de polymère.

6. Couvercle de cellule électrolytique selon la revendication 1.

7. Couvercle de cellule électrolytique selon la revendication 6, comprenant :
(a) une base à bride ;
(b) une pluralité de parois latérales reliées d'un seul tenant à ladite base à bride ; et
(c) une partie supérieure reliée d'un seul tenant à ladite pluralité de parois latérales.

8. Couvercle de cellule électrolytique selon la revendication 7, comprenant en outre au moins un orifice disposé dans ladite partie supérieure ou près de celle-ci.

9. Couvercle de cellule électrolytique selon la revendication 7 qui est translucide.

10. Couvercle de cellule électrolytique selon la revendication 7 ayant moins d'un vide visible par pouce carré de polymère.

11. Procédé de fabrication d'un couvercle de cellule électrolytique ou d'un article résistant à la corrosion choisi parmi une tuyauterie, des boîtes d'extrémité utilisées dans des cellules à mercure, une boîte d'entrée utilisée dans des cellules à mercure, une boîte de lavage utilisée dans des cellules à mercure, des parois latérales de cellules à mercure, des cadres pour membrane pour des électrolyseurs à membrane, des collecteurs, des soupapes, des distributeurs, des cloches d'interrupteur, des ensembles interrupteurs, des dispositifs de distribution de réactifs et de produits, des tubes plongeurs, des capots, des récipients, des revêtements intérieurs, des couvercles, des brides, des structures de support, des entonnoirs, des raccords de tuyauterie, des réservoirs, des revêtements intérieurs de réservoir, des revêtements intérieurs de tuyauterie, des cuves de confinement, des ballons, des revêtements intérieurs de ballon, des cuves et des revêtements intérieurs de cuve, comprenant : la combinaison d'au moins un catalyseur de métathèse d'oléfines du groupe 8 qui contient du Ru en tant que métal de transition du groupe 8 et d'une composition de résine comprenant au moins une oléfine cyclique pour former une composition de ROMP et la polymérisation de la composition de ROMP.

12. Procédé selon la revendication 11, dans lequel un couvercle de cellule électrolytique est fabriqué.

13. Procédé selon revendication 11, dans lequel l'au moins un catalyseur de métathèse d'oléfines du groupe 8 a la structure 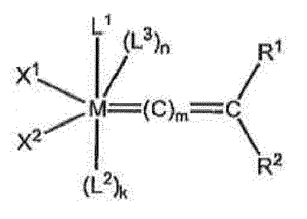 dans laquelle
M est le métal de transition du groupe 8 Ru ;
L¹, L² et L³ sont indépendamment choisis parmi les ligands donneurs d'électrons neutres ;
n vaut 0 ou 1, de façon telle que L³ peut être présent ou non ;
m vaut 0, 1 ou 2 ;
k vaut 0 ou 1 ;
X¹ et X² sont indépendamment des ligands anioniques ; et
R¹ et R² sont indépendamment choisis parmi l'atome d'hydrogène, les groupes hydrocarbyle, les groupes hydrocarbyle substitués, les groupes hydrocarbyle contenant un ou plusieurs hétéroatomes, les groupes hydrocarbyle contenant un ou plusieurs hétéroatomes substitués et les groupes fonctionnels ;
l'un de R¹ ou R² ou les deux pouvant avoir la structure -(W)ₙ-U⁺V⁻, dans laquelle
W est choisi parmi les groupes hydrocarbylène, les groupes hydrocarbylène substitués, les groupes hydrocarbylène contenant un ou plusieurs hétéroatomes ou les groupes hydrocarbylène contenant un ou plusieurs hétéroatomes substitués ;
U est un élément du groupe 15 ou du groupe 16 portant une charge positive substitué par un ou plusieurs substituants hydrogène, hydrocarbyle, hydrocarbyle substitué, hydrocarbyle contenant un ou plusieurs hétéroatomes ou hydrocarbyle contenant un ou plusieurs hétéroatomes substitué ;
V est un contre-ion portant une charge négative ; et
n vaut zéro ou 1,
dans laquelle deux ou plus de deux groupes quelconques parmi X¹, X², L¹, L², L³, R¹ et R² peuvent être pris ensemble pour former un ou plusieurs groupes cycliques et dans laquelle en outre un ou plusieurs groupes quelconques parmi X¹, X², L¹, L², L³, R¹ et R² peuvent être attachés à un support.

14. Procédé selon la revendication 13, dans lequel au moins l'un de L¹, L² et L³ est un ligand carbène N-hétérocyclique.
